(19) Europäisches Patentamt
European Patent Office
Office européen des brevets

(11) **EP 2 550 584 B1**

(12) **EUROPEAN PATENT SPECIFICATION**

(45) Date of publication and mention
of the grant of the patent:
**24.02.2016 Bulletin 2016/08**

(51) Int Cl.:
***G06F 3/042*** *(2006.01)*

(21) Application number: **11759983.7**

(22) Date of filing: **21.03.2011**

(86) International application number:
**PCT/US2011/029191**

(87) International publication number:
**WO 2011/119483 (29.09.2011 Gazette 2011/39)**

(54) **LENS ARRANGEMENT FOR LIGHT-BASED TOUCH SCREEN**

LINSENANORDNUNG FÜR EINEN BERÜHRUNGSBILDSCHIRM AUF LICHTBASIS

AGENCEMENT DE LENTILLES POUR UN ÉCRAN TACTILE BASÉ SUR LA LUMIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.03.2010 US 317257 P**
**01.09.2010 US 379012 P**
**07.11.2010 US 410930 P**
**15.04.2010 US 760568**
**24.03.2010 US 317255 P**
**07.09.2010 US 380600 P**
**15.04.2010 US 760567**

(43) Date of publication of application:
**30.01.2013 Bulletin 2013/05**

(73) Proprietor: **Neonode Inc.**
**San Jose CA 95134 (US)**

(72) Inventors:
• **GOERTZ, Magnus**
**S-18132 Lidingo (SE)**
• **ERIKSSON, Thomas**
**S-182 74 Stocksund (SE)**
• **SHAIN, Joseph**
**76308 Rehovot (IL)**
• **JANSSON, Anders**
**S-138 34 Älta (SE)**
• **KVIST, Niklas**
**S-139 40 Varmdo (SE)**
• **PETTERSSON, Robert**
**S-126 39 Hägersten (SE)**
• **SPARF, Lars**
**S-162 45 Vällingby (SE)**
• **KARLSSON, John**
**S-195 32 Märsta (SE)**

(74) Representative: **Tischner, Oliver et al**
**Lavoix Munich**
**Bayerstrasse 83**
**80335 München (DE)**

(56) References cited:
**US-A- 5 559 727        US-A- 6 010 061**
**US-A1- 2002 109 843    US-A1- 2004 046 960**
**US-A1- 2005 122 308    US-A1- 2005 174 473**
**US-A1- 2006 229 509    US-A1- 2007 052 693**
**US-A1- 2008 008 472    US-A1- 2008 012 850**
**US-A1- 2008 080 811    US-A1- 2008 259 053**
**US-A1- 2009 066 673    US-A1- 2009 096 994**

**Description**

FIELD OF THE INVENTION

The field of the present invention is light-based touch screens.

BACKGROUND OF THE INVENTION

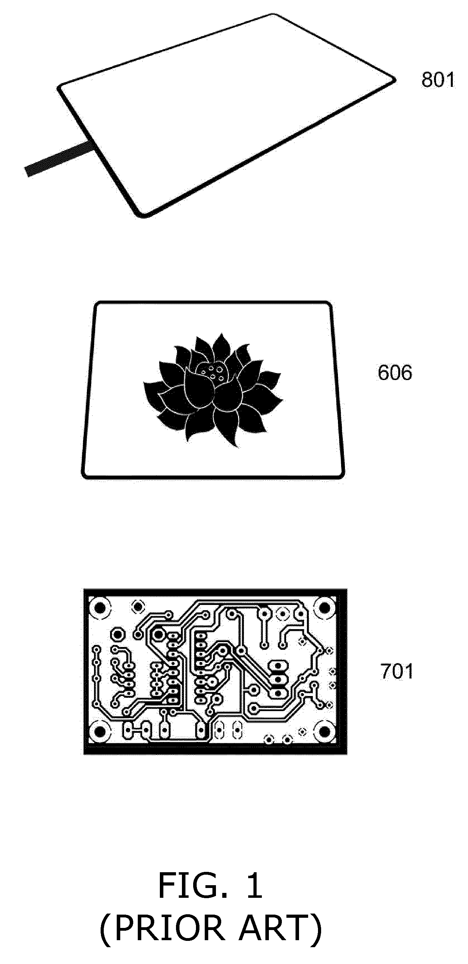

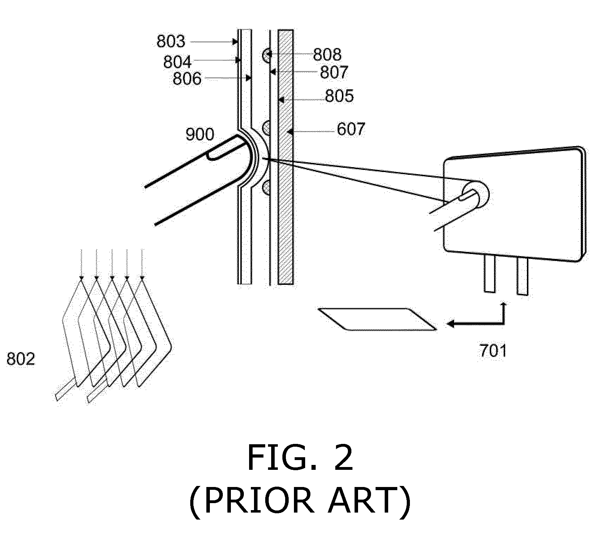

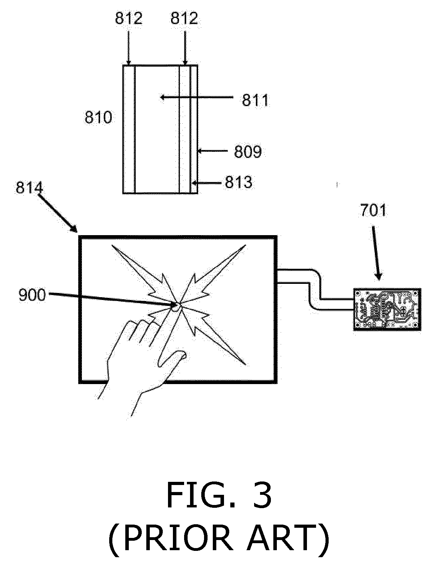

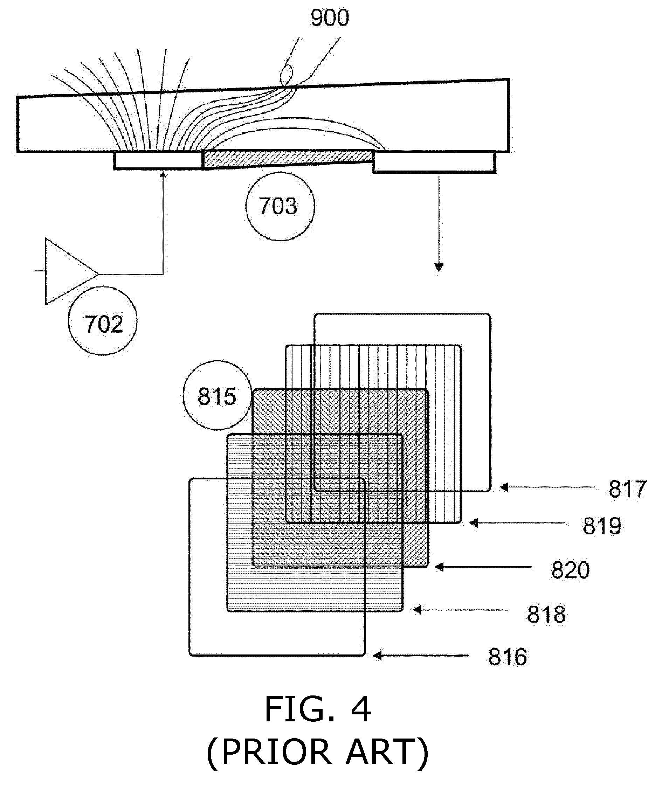

Many consumer electronic devices are now being built with touch sensitive screens, for use with finger or stylus touch user inputs. These devices range from small screen devices such as mobile phones and car entertainment systems, to mid-size screen devices such as notebook computers, to large screen devices such as check-in stations at airports.
Most conventional touch screen systems are based on resistive or capacitive layers. Such systems are not versatile enough to offer an all-encompassing solution, as they are not easily scalable.
Reference is made to **FIG. 1,** which is a prior art illustration of a conventional touch screen system. Such systems include an LCD display surface **606,** a resistive or capacitive overlay **801** that is placed over the LCD surface, and a controller integrated circuit (IC) **701** that connects to the overlay and converts inputs from the overlay to meaningful signals. A host device (not shown), such as a computer, receives the signals from controller IC **701,** and a device driver or such other program interprets the signals to detect a touch-based input such as a key press or scroll movement.
Reference is made to **FIG. 2,** which is a prior art illustration of a conventional <u>resistive</u> touch screen. Shown in **FIG. 2** are conductive and resistive layers **802** separated by thin spaces. A PET film **803** overlays a top circuit layer **804,** which overlays a conductive coating **806.** Similarly, a conductive coating **807** with spacer dots **808** overlays a bottom circuit layer **805,** which overlays a glass layer **607.** When a pointer **900,** such as a finger or a stylus, touches the screen, a contact is created between resistive layers, closing a switch. A controller **701** determines the current between layers to derive the position of the touch point.
Advantages of resistive touch screens are their low cost, low power consumption and stylus support.
A disadvantage of resistive touch screens is that as a result of the overlay, the screens are not fully transparent. Another disadvantage is that pressure is required for touch detection; i.e., a pointer that touches the screen without sufficient pressure goes undetected. As a consequence, resistive touch screens do not detect finger touches well. Another disadvantage is that resistive touch screens are generally unreadable in direct sunlight. Another disadvantage is that resistive touch screens are sensitive to scratches. Yet another disadvantage is that resistive touch screens are unable to discern that two or more pointers are touching the screen simultaneously, referred to as "multi-touch".
Reference is made to **FIG. 3,** which is a prior art illustration of a conventional <u>surface capacitive</u> touch screen. Shown in **FIG. 3** is a touch surface **809** overlaying a coated glass substrate **810.** Two sides of a glass **811** are coated with a uniform conductive indium tin oxide (ITO) coating **812.** In addition, a silicon dioxide hard coating **813** is coated on the front side of one of the ITO coating layers **812.** Electrodes **814** are attached at the four corners of the glass, for generating an electric current. A pointer **900,** such as a finger or a stylus, touches the screen, and draws a small amount of current to the point of contact. A controller **701** then determines the location of the touch point based on the proportions of current passing through the four electrodes.
Advantages of surface capacitive touch screens are finger touch support and a durable surface.
A disadvantage of surface capacitive touch screens is that as a result of the overlay, the screens are not fully transparent. Another disadvantage is a limited temperature range for operation. Another disadvantage is a limited capture speed of pointer movements, due to the capacitive nature of the touch screens. Another disadvantage is that surface capacitive touch screens are susceptible to radio frequency (RF) interference and electromagnetic (EM) interference. Another disadvantage is that the accuracy of touch location determination depends on the capacitance. Another disadvantage is that surface capacitive touch screens cannot be used with gloves. Another disadvantage is that surface capacitive touch screens require a large screen border. As a consequence, surface capacitive touch screens cannot be used with small screen devices. Yet another disadvantage is that surface capacitive touch screens are unable to discern a multi-touch.
Reference is made to **FIG. 4,** which is a prior art illustration of a conventional projected capacitive touch screen. Shown in **FIG. 4** are etched ITO layers **815** that form multiple horizontal (x-axis) and vertical (y-axis) electrodes. Etched layers **815** include outer hard coat layers **816** and **817,** an x-axis electrode pattern **818,** a y-axis electrode pattern **819,** and an ITO glass **820** in the middle. AC signals **702** drive the electrodes on one axis, and the response through the screen loops back via the electrodes on the other axis. Location of a pointer **900** touching the screen is determined based on the signal level changes **703** between the horizontal and vertical electrodes.
Advantages of projective capacitive touch screens are finger multi-touch detection and a durable surface.
A disadvantage of projected capacitive touch screens is that as a result of the overlay, the screens are not fully transparent. Another disadvantage is their high cost. Another disadvantage is a limited temperature range for operation. Another disadvantage is a limited capture speed, due to the capacitive nature of the touch screens. Another disadvantage is a limited screen size, typically less than 5". Another disadvantage is that surface capacitive touch screens are susceptible to RF interference and EM interference. Yet another disadvantage is that the accuracy of touch location determination depends on the capacitance.

US Publication No. 2008/0080811 A1 discusses optical touch screens that use polymer waveguides, instead of pluralities of light emitters and photo diodes, to generate either a grid or lamina of light across a screen such that the location of an object interrupting the grid or lamina of light is determined according to the X and Ycoordinates of the detected interruption. In particular, Deane discusses a polymer waveguide assembly for an optical touch screen wherein alignment in the Z-axis between emitter lenses and receiver lenses is less critical than in prior art polymer waveguide assemblies. The waveguide assembly of Deane features emitter waveguide 30a and receiver waveguide 30b, supported by molded lens structure 20 featuring lenses 22 and 23 for collimating light in the Zdimension. Lenses 22 and 23 create a focal point well beyond lenses at the emitting end of waveguide 30a, and at the input end of waveguide 30b, such that a significant portion of the light for detecting a touch is within the acceptance angle of the lenses in receiver waveguide 30b, even when waveguides 30a and 30b are not exactly aligned in the Zdimension.

It will thus be appreciated that conventional touch screens are not ideal for general use with small mobile devices and devices with large screens. It would thus be beneficial to provide touch screens that overcome the disadvantages of conventional resistive and capacitive touch screens described above.

## SUMMARY OF THE DESCRIPTION

The present invention provides a touch screen according to the appended claims.

## BRIEF DESCRIPTION OF THE DRAWINGS

The present invention will be more fully understood and appreciated from the following detailed description, taken in conjunction with the drawings in which:

FIG. 1 is a prior art illustration of a conventional touch screen system;
FIG. 2 is a prior art illustration of a conventional resistive touch screen;
FIG. 3 is a prior art illustration of a conventional surface capacitive touch screen;
FIG. 4 is a prior art illustration of a conventional projected capacitive touch screen;
FIG. 5 is an illustration of a portion of a touch screen including a plurality of emitters that are positioned close together, wherein light is guided by fiber optic light guides to locations along a first screen edge, in accordance with an embodiment of the present invention;
FIG. 6 is a diagram of a touch screen having 16 emitters and 16 receivers, in accordance with an embodiment of the present invention;
FIGS. 7 - 9 are diagrams of the touch screen of FIG. 6, showing detection of two pointers that touch the screen simultaneously, in accordance with an embodiment of the present invention;
FIGS. 10 and 11 are diagrams of a touch screen that detects a two finger glide movement, in accordance with an embodiment of the present invention;
FIG. 12 is a circuit diagram of the touch screen from FIG. 6, in accordance with an embodiment of the present invention;
FIG. 13 is a simplified diagram of a light-based touch screen system, in accordance with an embodiment of the present invention;
FIG. 14 is a simplified cross-sectional diagram of the touch screen system of FIG. 13, in accordance with an embodiment of the present invention;
FIG. 15 is a simplified illustration of an arrangement of emitters, receivers and optical elements that enable a touch screen system to read pointers that are smaller than the sensor elements, in accordance with an embodiment of the present invention;
FIG. 16 is a simplified illustration of an arrangement of emitters, receivers and optical elements that enable a touch screen system to detect a pointer that is smaller than the sensor elements, including inter alia a stylus, in accordance with an embodiment of the present invention;
FIG. 17 is a simplified diagram of a touch screen with wide light beams covering the screen, in accordance with an embodiment of the present invention;
FIG. 18 is a simplified illustration of a collimating lens, in accordance with an embodiment of the present invention;
FIG. 19 is a simplified illustration of a collimating lens in cooperation with a light receiver, in accordance with an embodiment of the present invention;
FIG. 20 is a simplified illustration of a collimating lens having a surface of micro-lenses facing an emitter, in accordance with an embodiment of the present invention;
FIG. 21 is a simplified illustration of a collimating lens having a surface of micro-lenses facing a receiver, in accordance with an embodiment of the present invention;

**FIG. 22** is a simplified diagram of an electronic device with a wide-beam touch screen, in accordance with an embodiment of the present invention;

**FIG. 23** is a diagram of the electronic device of **FIG. 22,** depicting overlapping light beams from one emitter detected by two receivers, in accordance with an embodiment of the present invention;

**FIG. 24** is a diagram of the electronic device of **FIG. 22,** depicting overlapping light beams from two emitters detected by one receiver, in accordance with an embodiment of the present invention;

**FIG. 25** is a diagram of the electronic device of **FIG. 22,** showing that points on the screen are detected by at least two emitter-receiver pairs, in accordance with an embodiment of the present invention;

**FIG. 26** is a simplified diagram of a wide-beam touch screen, showing an intensity distribution of a light signal, in accordance with an embodiment of the present invention;

**FIG. 27** is a simplified diagram of a wide-beam touch screen, showing intensity distributions of overlapping light signals from two emitters, in accordance with an embodiment of the present invention;

**FIG. 28** is a simplified diagram of a wide-beam touch screen, showing intensity distributions of two sets of overlapping light signals from one emitter, in accordance with an embodiment of the present invention;

**FIG. 29** is a simplified diagram of a wide beam touch screen with emitter and receiver lenses that do not have micro-lens patterns, in accordance with an embodiment of the present invention;

**FIGS. 30** and **31** are simplified diagrams of a wide-beam touch screen with emitter and receiver lenses that have micro-lens patterns, in accordance with an embodiment of the present invention;

**FIG. 32** is a simplified diagram of a wide-beam touch screen with emitter and receiver lenses that do not have micro-lens patterns, in accordance with an embodiment of the present invention;

**FIG. 33** is a simplified diagram of a wide beam touch screen, with emitter and receiver lenses that have micro-lens patterns, in accordance with an embodiment of the present invention;

**FIG. 34** is a simplified diagram of two emitters with lenses that have micro-lens patterns integrated therein, in accordance with an embodiment of the present invention;

**FIG. 35** is a simplified diagram of two receivers with lenses that have micro-lens patterns integrated therein, in accordance with an embodiment of the present invention;

**FIG. 36** is a simplified diagram of a side view of a single-unit light guide, in the context of an electronic device with a display and an outer casing, in accordance with an embodiment of the present invention;

**FIG. 37** is a simplified diagram of side views, from two different angles, of a lens with applied feather patterns on a surface, in accordance with an embodiment of the present invention;

**FIG. 38** is a simplified diagram of a portion of a wide-beam touch screen, in accordance with an embodiment of the present invention;

**FIG. 39** is a top view of a simplified diagram of light beams entering and exiting micro-lenses etched on a lens, in accordance with an embodiment of the present invention;

**FIG. 40** is a simplified diagram of a side view of a dual-unit light guide, in the context of a device having a display and an outer casing, in accordance with an embodiment of the present invention;

**FIG. 41** is a picture of light guide units, within the content of a device having a PCB and an outer casing, in accordance with an embodiment of the present invention;

**FIG. 42** is a top view of the light guide units of **FIG. 41,** in accordance with an embodiment of the present invention;

**FIG. 43** is a simplified diagram of a side view cutaway of a light guide within an electronic device, in accordance with an embodiment of the present invention;

**FIG. 44** is a simplified diagram of a side view cutaway of a portion of an electronic device and an upper portion of a light guide with at least two active surfaces for folding light beams, in accordance with an embodiment of the present invention;

**FIG. 45** is a simplified drawing of a section of a transparent optical touch light guide, formed as an integral part of a protective glass covering a display, in accordance with an embodiment of the present invention;

**FIG. 46** is a simplified illustration of the electronic device and light guide of **FIG. 44,** adapted to conceal the edge of the screen, in accordance with an embodiment of the present invention;

**FIG. 47** is a simplified diagram of a light guide that is a single unit extending from opposite an emitter to above a display, in accordance with an embodiment of the present invention;

**FIG. 48** is a simplified diagram of a dual-unit light guide, in accordance with an embodiment of the present invention;

**FIG. 49** is an illustration of optical components made of plastic material that is transparent to infrared light, in accordance with an embodiment of the present invention;

**FIG. 50** is a simplified diagram of a side view of a touch screen with light guides, in accordance with an embodiment of the present invention;

**FIG. 51** is an illustration of a touch screen with a block of three optical components on each side, in accordance with an embodiment of the present invention;

**FIG. 52** is a magnified illustration of one of the emitter blocks of **FIG. 51,** in accordance with an embodiment of the present invention;

**FIG. 53** is an illustration of a touch screen having a long thin light guide along a first edge of the screen, for directing light over the screen, and having an array of light receivers arranged along an opposite edge of the screen for detecting the directed light, and for communicating detected light values to a calculating unit, in accordance with an example not according to the claims;

**FIG. 54** is an illustration of a touch screen having an array of light emitters along a first edge of the screen for directing light beams over the screen, and having a long thin light guide for receiving the directed light beams and for further directing them to light receivers situated at both ends of the light guide, in accordance with an example not according to the claims;

**FIG. 55** is an illustration of two light emitters, each emitter coupled to each end of a long thin light guide, in accordance with an example not according to the claims;

**FIGS. 56 - 59** are illustrations of a touch screen that detects occurrence of a hard press, in accordance with an embodiment of the present invention;

**FIGS. 60** and **61** are bar charts showing increase in light detected, when pressure is applied to a rigidly mounted 7-inch LCD screen, in accordance with an embodiment of the present invention;

**FIG. 62** is a simplified diagram of an image sensor positioned beneath a screen glass display, to capture an image of the underside of the screen glass and touches made thereon, in accordance with an example not according to the claims;

**FIG. 63,** which is a simplified diagram of a display divided into pixels, and three touch detections, in accordance with an example not according to the claims;

**FIG. 64** is a simplified diagram of a camera sensor positioned on a hinge of a laptop computer and pointing at a screen, in accordance with an example not according to the claims;

**FIG. 65** is a simplified side view diagram showing a camera viewing a touch area, in accordance with an example not according to the claims;

**FIG. 66** is a simplified top view diagram showing a camera viewing a touch area, in accordance with an example not according to the claims;

**FIG. 67** is a simplified diagram of a camera viewing a touch area, and two image axes, an image x-axis and an image y-axis, for locating a touch pointer based on an image captured by the camera, in accordance with an example not according to the claims;

**FIG. 68** is a simplified diagram of a camera viewing a touch area, and two screen axes, a screen x-axis and a screen y-axis, for locating a touch pointed based on an image captured by the camera, in accordance with an example not according to the claims;

**FIGS. 69** and **70** are simplified diagrams of two cameras, each capturing a touch area from different angles, in accordance with an example not according to the claims;

**FIG. 71** is a simplified diagram of four cameras, each capturing a touch area from different angles, in accordance with an example not according to the claims;

**FIG. 72** is a simplified diagram, from a camera viewpoint, of a camera viewing a complete touch area, in accordance with an example not according to the claims;

**FIG. 73** is a simplified diagram of a portion of a touch area showing a stylus and a mirror image of the stylus, which are tangent to one another, in accordance with an example not according to the claims;

**FIG. 74** is a simplified diagram showing a stylus and a mirror image of the stylus, moved closer to the center of a touch area vis-à-vis **FIG. 73,** in accordance with an example not according to the claims;

**FIG. 75** is a simplified diagram showing a stylus and a mirror image of the stylus, moved closer to the bottom of a touch area vis-à-vis **FIG. 73,** in accordance with an example not according to the claims;

**FIG. 76** is a simplified diagram showing a stylus and a mirror image of the stylus, separated apart from one another, in accordance with an example not according to the claims;

**FIG. 77** is a simplified flowchart of a method for determining a three-dimensional pointed location, in accordance with an example not according to the claims;

**FIG. 78** is a simplified diagram of a touch area that displays six touch icons, used for determining a camera orientation, in accordance with an example not according to the claims;

**FIGS. 79** and **80** are illustrations of opposing rows of emitter and receiver lenses in a touch screen system, in accordance with an embodiment of the present invention;

**FIG. 81** is a simplified illustration of a technique for determining a touch location, by a plurality of emitter-receiver pairs in a touch screen system, in accordance with an embodiment of the present invention;

**FIG. 82** is an illustration of a light guide frame for the configuration of **FIGS. 79** and **80**, in accordance with an embodiment of the present invention;

**FIG. 83** is a simplified flowchart of a method for touch detection for an optical touch screen, in accordance with an embodiment of the present invention;

**FIGS. 84 - 86** are illustrations of a rotation gesture, whereby a user places two fingers on the screen and rotates them around an axis;

**FIGS. 87 - 90** are illustrations of touch events at various locations on a touch screen, in accordance with an embodiment of the present invention;

**FIGS. 91 - 94** are respective bar charts of light saturation during the touch events illustrated in **FIGS. 87 - 90,** in accordance with an embodiment of the present invention;

**FIG. 95** is a simplified flowchart of a method for determining the locations of simultaneous, diagonally opposed touches, in accordance with an embodiment of the present invention;

**FIG. 96** is a simplified flowchart of a method for discriminating between clockwise and counter-clockwise gestures, in accordance with an embodiment of the present invention;

**FIG. 97** is a simplified flowchart of a method of calibration and touch detection for an optical touch screen, in accordance with an embodiment of the present invention;

**FIG. 98** is a picture showing the difference between signals generated by a touch, and signals generated by a mechanical effect, in accordance with an embodiment of the present invention;

**FIG. 99** is a simplified diagram of a control circuit for setting pulse strength when calibrating an optical touch screen, in accordance with an embodiment of the present invention;

**FIG. 100** is a plot of calibration pulses for pulse strengths ranging from a minimum current to a maximum current, for calibrating an optical touch screen in accordance with an embodiment of the present invention;

**FIG. 101** is a simplified pulse diagram and a corresponding output signal graph, for calibrating an optical touch screen, in accordance with an embodiment of the present invention;

**FIG. 102** is an illustration showing how a capillary effect is used to increase accuracy of positioning a component, such as an emitter or a receiver, on a printed circuit board, in accordance with an example not according to the claims; and

**FIG. 103** is an illustration showing the printed circuit board of **FIG. 102,** after having passed through a heat oven, in accordance with an example not according to the claims.

For reference to the figures, the following index of elements and their numerals is provided. Elements numbered in the **100**'s generally relate to light beams, elements numbered in the **200**'s generally relate to light sources, elements numbered in the **300**'s generally relate to light receivers, elements numbered in the **400**'s and **500**'s generally relate to light guides, elements numbered in the **600**'s generally relate to displays, elements numbered in the **700**'s generally relate to circuit elements, elements numbered in the **800**'s generally relate to electronic devices, and elements numbered in the **900**'s generally relate to user interfaces. Elements numbered in the **1000**'s are operations of flow charts.

Similarly numbered elements represent elements of the same type, but they need not be identical elements.

| Elements generally related to light beams | | | |
|---|---|---|---|
| | | | |
| **Element** | **Description** | **Element** | **Description** |
| **100 - 102** | Generic light beams | **174** | Beam from 1 emitter to 1st receiver |
| **105, 106** | Reflected light beam | **175** | Beam from 1 emitter to 2nd receiver |
| **142** | Arc of light output from light source | **176** | Beam from emitter to 1st receiver |
| **143** | Arc of light input to light receiver | **177** | Beam from emitter to 2nd receiver |
| **144** | Wide light beams | **178** | Beam from 1 emitter to 1st receiver |
| **145 - 148** | Edge of wide light beam | **179** | Beam from 1 emitter to 2nd receiver |
| **151 - 154** | Light beams | **182** | Beam from 1 emitter to 2 receivers |
| **158** | Wide light beam | **183 - 188** | Middle of arc of light |
| **167 - 169** | Wide light beam | **190** | Light beams output from light source |
| **170 - 172** | Signals received by light receivers | **191** | Light beams input to light receiver |
| **173** | Beam from 1 emitter to 2 receivers | **192** | Arcs of light |

| Elements generally related to light sources | | | |
|---|---|---|---|
| | | | |
| **Element** | **Description** | **Element** | **Description** |
| **200 - 203** | Generic light emitters | **235 - 241** | Light emitters |

| Elements generally related to light receivers | | | |
|---|---|---|---|
| | | | |
| **Element** | **Description** | **Element** | **Description** |
| **300 - 305** | Generic light receivers | **398** | Light receiver / light emitter |
| **394** | Light receiver | | |

| Elements generally related to light guides | | | |
|---|---|---|---|
| | | | |
| **Element** | **Description** | **Element** | **Description** |
| **400** | Generic lens | **479** | Light guide |
| **401, 402** | Fiber optic light guides | **480** | Internally reflective surface |
| **407** | Raised reflector bezel | **481** | Light guide surface |
| **408** | Cutout | **482** | Black plastic transmissive element |
| **437, 438** | Reflector & lens | **483** | Light guide |
| **439 - 443** | Lens | **484** | Surface with fan of micro-lenses |
| **444** | Micro-lenses | **485** | Upper portion of light guide |
| **445** | Surface with fan of micro-lenses | **486** | Lower portion of light guide |
| **450** | Light guide | **487** | Surface with parallel row micro-lenses |
| **451, 452** | Internally reflective surface | **488, 489** | Optical component |
| **453, 454** | Light guide surface | **490 - 492** | Surface of optical component |
| **455** | Light guide | **493** | Lens |
| **456** | Internally reflective surface | **494 - 497** | Optical component |
| **457** | Collimating lens & reflective surface | **498, 499** | Light guide |
| **458** | Micro-lenses | **500 - 501** | Emitter optical component block |
| **459** | Light guide surface | **502 - 503** | Receiver optical component block |
| **460** | Surface with fan of micro-lenses | **504** | Emitter lenses |
| **461** | Lens | **505** | Receiver lenses |
| **462** | Micro-lenses | **506, 507** | Emitter optical component |
| **463** | Upper portion of light guide | **508 - 510** | Receiver optical component |
| **464** | Lower portion of light guide | **511** | Emitter optical component |
| **465** | Light guide surface | **512** | Receiver optical components |

(continued)

| Element | Description | Element | Description |
|---------|-------------|---------|-------------|
| 466 | Surface with parallel row micro-lenses | 513 | Optical component / temporary guide |
| 467 | Parallel row pattern of micro-lenses | 514 | Long thin light guide |
| 468 | Light guide | 515 | Light guide reflector |
| 469, 470 | Internally reflective surface | 516 | Micro-lenses |
| 471 | Light guide surface | 517 | Light scatterer strip |
| 472 | Light guide | 518, 519 | Light guides |
| 473 | Internally reflective surface | 520, 521 | Protruding lips on light guides |
| 474 | Light guide surface | 522, 523 | Relative position of light guide element |
| 475 | Focal line of a lens | 524 | Clear, flat glass |
| 476 | Light guide | 525 | Collimating lens |
| 477 | Internally reflective surface | 526 | Clear flat glass with micro-lens surface |
| 478 | Light guide surface | 527 | Collimating lens with micro-lens surface |

| Elements generally related to displays | | | |
|---------|-------------|---------|-------------|
| | | | |
| Element | Description | Element | Description |
| 600 | Generic screen glass | 639 | Daylight filter sheet |
| 606 | LCD display (prior art) | 640 | Protective glass |
| 607 | Screen glass (prior art) | 641 | Daylight filter sheet |
| 635 - 637 | Display | 642, 643 | Display |
| 638 | Protective glass | 645 | Reflection on display glass |

| Elements generally related to circuit elements | | | |
|---------|-------------|---------|-------------|
| | | | |
| Element | Description | Element | Description |
| 700 | Generic printed circuit board | 764 | Guide pin |
| 701 | Controller integrated circuit (pr. art) | 765 | Solder pad |
| 702 | AC input signal (prior art) | 766 | Component solder pad |
| 703 | Output signal (prior art) | 767 | Solder pads after heat oven |
| 720 | Shift register for column activation | 768, 769 | Notch in optical component / guide |
| 730 | Shift register for column activation | 770 | Calculating unit |
| 760, 761 | Electrical pad | 771 | Clip-on fastener |
| 762, 763 | Printed circuit board | | |

| Elements generally related to touch-based electronic devices | | | |
|---|---|---|---|
| | | | |
| Element | Description | Element | Description |
| 800 | Generic touch screen | 814 | Electrode (prior art) |
| 801 | Touch overlay (prior art) | 815 | Etched ITO layers (prior art) |
| 802 | Conductive & resistive layers (pr. art) | 816, 817 | Hard coat layer (prior art) |
| 803 | PET film (prior art) | 818 | x-axis electrode pattern (prior art) |
| 804 | Top circuit layer (prior art) | 819 | y-axis electrode pattern (prior art) |
| 805 | Bottom circuit layer (prior art) | 820 | ITO glass (prior art) |
| 806, 807 | Conductive coating (prior art) | 826 | Electronic device |
| 808 | Spacer dot (prior art) | 827 - 833 | Device casing |
| 809 | Touch surface (prior art) | 841, 842 | Resilient members |
| 810 | Coated glass substrate (prior art) | 843 | Flex air gap |
| 811 | Glass substrate (prior art) | 844 - 847 | Image sensors |
| 812 | Conductive ITO coating (prior art) | 848 | Laptop computer |
| 813 | Silicon dioxide hard coating (prior art) | | |

| Elements generally related to user interfaces | | | |
|---|---|---|---|
| | | | |
| Element | Description | Element | Description |
| 900 - 903 | Pointer / finger / thumb / stylus | 980 | Touch point |
| 905 - 908 | Detected touch area | 981, 982 | Point on lens |
| 965 - 970 | Touch icons | 989, 990 | Pin |
| 971, 972 | Touch points | 991 - 993 | Active touch area |
| 973 - 976 | Light signal attenuation area | 996 - 999 | Mid-line between pointer and reflection |
| 977 | Point on lens | | |

DETAILED DESCRIPTION

Aspects of the present invention relate to light-based touch screens and light-based touch surfaces.

For clarity of exposition, throughout the present specification the term "touch screen" is used as a generic term to refer to touch sensitive surfaces that may or may not include an electronic display. As such, the term "touch screen" as used herein includes inter alia a mouse touchpad as included in many laptop computers, and the cover of a handheld electronic device. The term "optical touch screen" is used as a generic term to refer to light-based touch screens, including inter alia screens that detect a touch based on the difference between an expected light intensity and a detected light intensity, where the detected light intensity may be greater than or less than the expected light intensity. The term "screen glass" is used as a generic term to refer to a transparent screen surface. The screen may be constructed inter alia from glass, or from a non-glass material including inter alia crystal, acrylic and plastic. In some embodiments of the present invention, the screen allows near-infrared light to pass through, but is otherwise non-transparent.

For clarity of exposition, throughout the present specification, the term "emitter" is used as a generic term to refer to a light emitting element, including inter alia a light-emitting diode (LED), and the output end of a fiber optic or tubular light guide that outputs light into a lens or reflector that directs the light over a display surface. The term "receiver" is used as a generic term to refer to a light detecting element, including inter alia a photo diode (PD), and the input end of a fiber optic or tubular light guide that receives light beams that traversed a display surface and directs them to a light detecting element or to an image sensor, the image sensor being inter alia a charge coupled device (CCD) or a complementary metal oxide semiconductor (CMOS) image sensor.

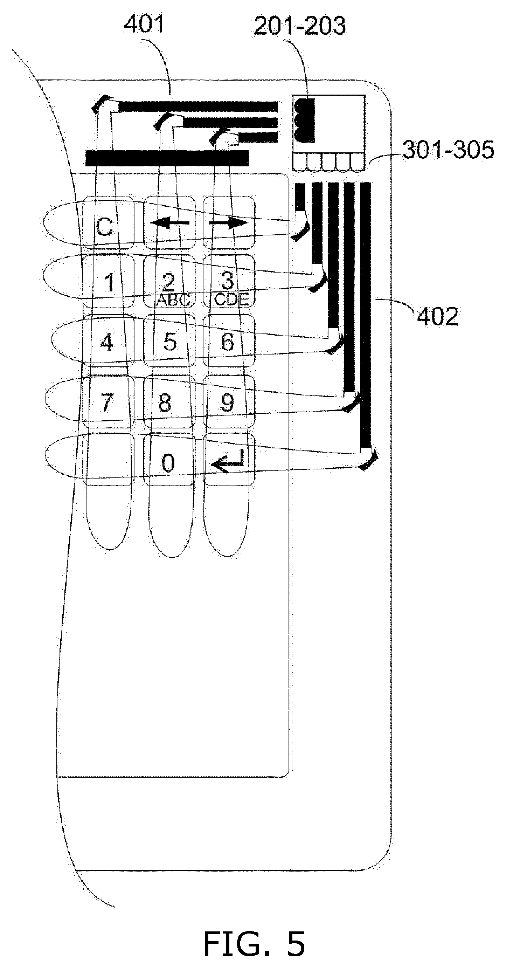

Reference is made to **FIG. 5,** which is an illustration of a portion of a touch screen including a plurality of emitters **201 - 203** that are positioned close together, wherein light is guided by fiber optic light guides **401** to locations along a first screen edge, in accordance with an embodiment of the present invention. The portion of the touch screen also includes a plurality of receivers **301 - 305** that are positioned close together, wherein light is guided thereto by fiber optic light guides **402** from locations a long a second screen edge.

According to embodiments of the present invention, a light-based touch screen includes one or more emitters, including inter alia infra-red or near infra-red light-emitting diodes (LEDs), and a plurality of receivers, including inter alia photo diodes (PDs), arranged along the perimeter surrounding the touch screen or touch surface. The emitters project light substantially parallel to the screen surface, and this light is detected by the receivers. A pointer, such as a finger or a stylus, placed over a portion of the screen blocks some of the light beams, and correspondingly some of the receivers detect less light intensity. The geometry of the locations of the receivers, and the light intensities they detect, suffice to determine screen coordinates of the pointer. The emitters and receivers are controlled for selective activation and deactivation by a controller. Generally, each emitter and receiver has I/O connectors, and signals are transmitted to specify which emitters and which receivers are activated.

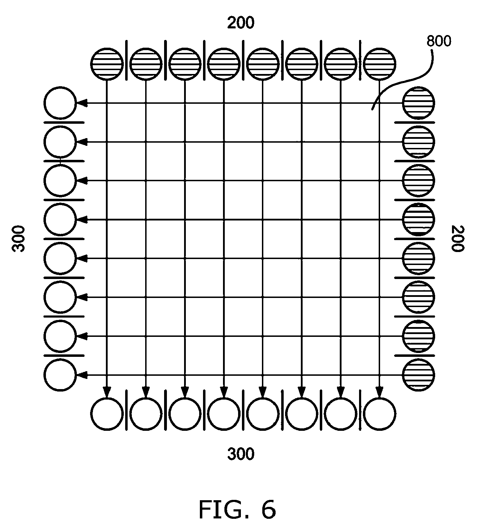

In an embodiment of the present invention, plural emitters are arranged along two adjacent sides of a rectangular screen, and plural receivers are arranged along the other two adjacent sides. In this regard, reference is now made to **FIG. 6,** which is a diagram of a touch screen **800** having 16 emitters **200** and 16 receivers **300,** in accordance with an embodiment of the present invention. Emitters **200** emit infra-red or near infra-red light beams across the top of the touch screen, which are detected by corresponding receivers **300** that are directly opposite respective emitters **200.** When a pointer touches touch screen **800,** it blocks light from reaching some of receivers **300.** By identifying, from the receiver outputs, which light beams have been blocked by the pointer, the pointer's location can be determined.

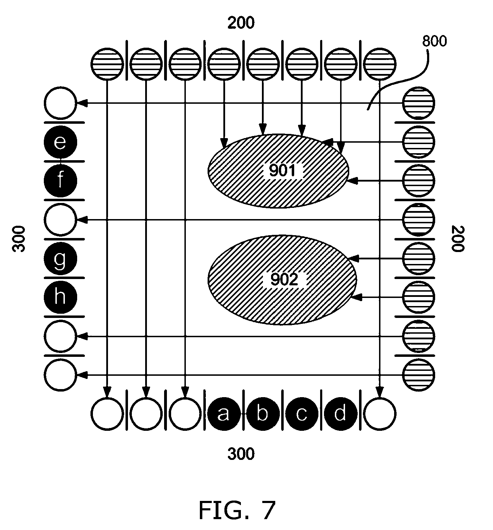

Reference is now made to **FIGS. 7 - 9,** which are diagrams of touch screen **800** of **FIG. 6,** showing detection of two pointers, **901** and **902,** that touch the screen simultaneously, in accordance with an embodiment of the present invention. When two or more pointers touch the screen simultaneously, this is referred to as a "multi-touch." Pointers **901** and **902,** which are touching the screen, block light from reaching some of receivers **300.** In accordance with an embodiment of the present invention, the locations of pointers **901** and **902** are determined from the crossed lines of the infra-red beams that the pointers block. In distinction, prior art resistance-based and capacitance-based touch screens are generally unable to detect a multi-touch.

When two or more pointers touch screen **800** simultaneously along a common horizontal or vertical axis, the positions of the pointers are determined by the receivers **300** that are blocked. Pointers **901** and **902** in **FIG. 7** are aligned along a common vertical axis and block substantially the same receivers **300** along the bottom edge of touch screen **800;** namely the receivers marked **a, b, c** and **d.** Along the left edge of touch screen **800,** two different sets of receivers **300** are blocked. Pointer **901** blocks the receivers marked **e** and **f,** and pointer **902** blocks the receivers marked **g** and **h.** The two pointers are thus determined to be situated at two locations. Pointer **901** has screen coordinates located at the intersection of the light beams blocked from receivers **a - d** and receivers **e** and **f;** and pointer **902** has screen coordinates located at the intersection of the light beams blocked from receivers **a - d** and receivers **g** and **h.**

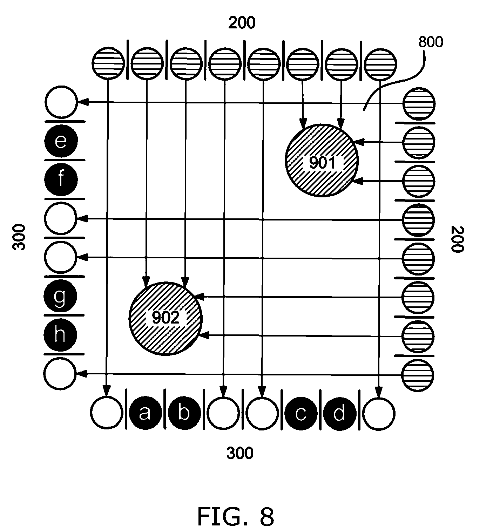

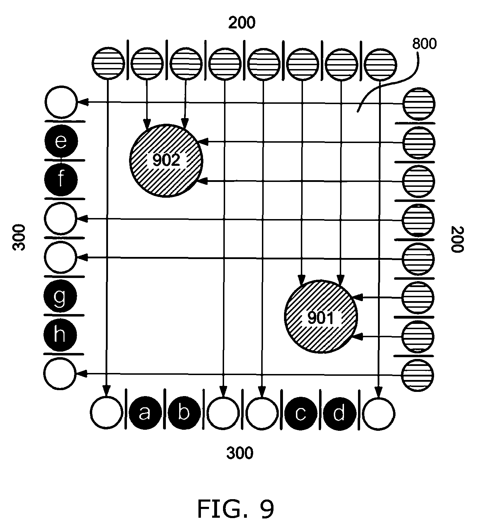

Pointers **901** and **902** shown in **FIGS. 8** and **9** are not aligned along a common horizontal or vertical axis, and they have different horizontal locations and different vertical locations. From the blocked receivers **a - h,** it is determined that pointers **901** and **902** are diagonally opposite one another. They are either respectively touching the top right and bottom left of touch screen **800,** as illustrated in **FIG. 8;** or else respectively touching the bottom right and top left of touch screen **800**, as illustrated in **FIG. 9.**

Discriminating between **FIG. 8** and **FIG. 9** is resolved by either (i) associating the same meaning to both touch patterns, or (ii) by associating meaning to only one of the two touch patterns, or (iii) by measuring the amount of light detected at the blocked receivers. In case (i), the UI arranges its icons, or is otherwise configured, such that the effects of both touch patterns **FIG. 8** and **FIG. 9** are the same. For example, touching any two diagonally opposite corners of touch screen **800** operates to unlock the screen.

In case (ii), the UI arranges its icons, or is otherwise configured, such that only one of the touch patterns **FIG. 8** and **FIG. 9** has a meaning associated therewith. For example, touching the upper right and lower left corners of touch screen **800** operates to unlock the screen, and touch the lower right and upper left of touch screen **800** has no meaning associated therewith. In this case, the UI discriminates that **FIG. 8** is the correct touch pattern.

In case (iii), a finger closer to a receiver blocks more light from reaching the receiver than does a finger that is farther from the receiver. In part, this is due to the closer finger blocking more ambient light from reaching the receiver than does the farther finger. The light intensities detected at receivers **e** and **f** are compared with the light intensities detected at receivers **g** and **h.** Similarly, the light intensities detected at receivers **a** and **b** are compared with the light intensities detected at receivers **c** and **d.** If the light detected at receivers **e** and **f** and at receivers **c** and **d** is greater than the light detected at receivers **g** and **h** and at receivers **a** and **b,** then it is inferred that the fingers are positioned as shown in **FIG. 8.** Similarly, if the light detected at receivers **e** and **f** and at receivers **c** and **d** is less than the light detected at receivers **g** and **h** and at receivers **a** and **b,** then it is inferred that the fingers are positioned as shown in **FIG. 9.** The comparison may be based on summing or averaging the respective blocked receivers along each edge separately, **e+f** vs. **g+h,** and **a+b** vs. **c+d.** Alternatively, the comparison may be based on summing or averaging blocked receivers along two edges; i.e., based on the maximum and minimum of the values **a+b+e+f**, **a+b+g+h**, **c+d+e+f**, and **c+d+g+h.** The maximum and minimum values determine the locations of the fingers. E.g., if **c+d+e+f** is the maximum value and if **a+b+g+h** is the minimum value, then it is inferred that the fingers are positioned as shown in **FIG. 8.**

The number of receivers in each sum depends on the sequence of blocked, or at least partially blocked, receivers. The number of receivers may be different for each sequence. E.g., a sum of four receivers may be compared to a sum of six receivers. In one embodiment of the present invention the minimum receiver value in each sequence is used. The minimum receiver value corresponds to the receiver that is most blocked within a sequence of blocked receivers, and is a good indicator of proximity of the blocking finger to the sequence of receivers.

Determining locations of a diagonally oriented multi-touch is discussed further hereinbelow with reference to shift-aligned arrangements of emitters and receivers.

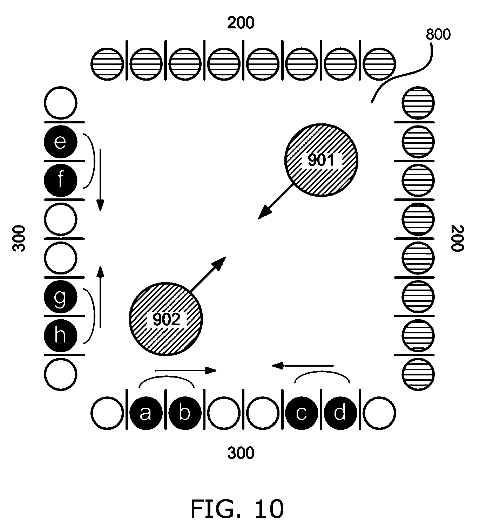

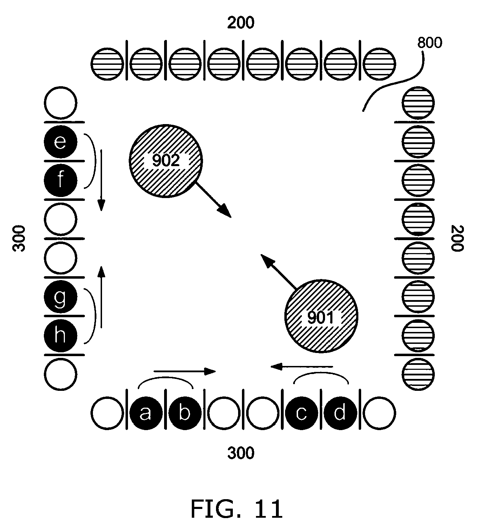

Reference is now made to **FIGS. 10** and **11,** which are diagrams of a touch screen **800** that detects a two finger glide movement, in accordance with an embodiment of the present invention. The glide movement illustrated in **FIGS. 10** and **11** is a diagonal glide that brings pointers **901** and **902** closer together. The direction of the glide is determined from changes in which receivers **300** are blocked. As shown in **FIGS. 10** and **11,** blocked receivers are changing from **a** and **b** to receivers **300** more to the right, and from **c** and **d** to receivers **300** more to the left. Similarly, blocked receivers are changing from **e** and **f** to receivers **300** more to the bottom, and from **g** and **h** to receivers **300** more to the top. For a glide in the opposite direction, that moves pointers **901** and **902** farther apart, the blocked receivers change in the opposite directions.

When pointers **901** and **902** are aligned in a common vertical or horizontal axis, there is no ambiguity in identifying glide patterns. When pointers **901** and **902** are not aligned in a common vertical or horizontal axis, there may be ambiguity in identifying glide patterns, as illustrated in **FIGS. 10** and **11.** In case of such ambiguity, and as described hereinabove with reference to **FIGS. 8** and **9,** discriminating between **FIG. 10** and **FIG. 11** is resolved by either (i) by associating the same meaning to both glide patterns, or (ii) by associating meaning to only one of the two glide patterns, or (iii) by measuring and comparing the amounts of light detected at the blocked receivers.

Associating the same meaning to both glide patterns may be performed in a pinch zoom gesture, whereby a user places two fingers on the screen and spreads the fingers apart along a diagonal of the screen. Such a gesture activates a zoom-in operation, for increasing the magnification of graphics displayed on the screen. Such a gesture has the same meaning irrespective of whether the pinch zoom is performed along a top-left to bottom-right diagonal, or along a top-right to bottom-left diagonal.

Similar considerations apply to a zoom-out gesture, whereby a user places two fingers on the screen and brings the fingers closer together along a diagonal of the screen, for decreasing the magnification of graphics displayed on the screen. This gesture, too, has the same meaning irrespective of along which diagonal of the screen the gesture is performed.

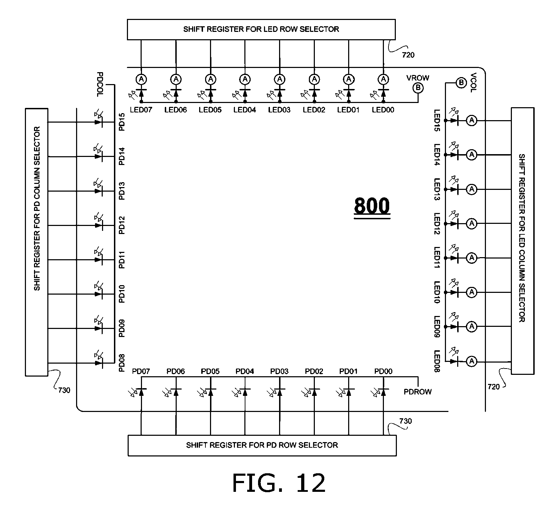

Reference is made to **FIG. 12,** which is a circuit diagram of touch screen **800** from **FIG. 6,** in accordance with an embodiment of the present invention. The emitters and receivers are controlled by a controller (not shown). The emitters receive respective signals *LED00 - LED 15* from switches **A,** and receive current from *VROW and VCOL* through current limiters **B.** The receivers receive respective signals *PD00 - PD15* from shift register **730.** Receiver output is sent to the controller via signals *PDROW* and *PDCOL.* Operation of the controller, of switches **A** and of current limiters **B** is described in applicant's co-pending application, U.S. Application Serial No. 12/371,609 filed on February 15, 2009 and entitled LIGHT-BASED TOUCH SCREEN, the contents of which are hereby incorporated by reference.

According to an embodiment of the present invention, the emitters are controlled via a first serial interface, which transmits a binary string to a shift register **720.** Each bit of the binary string corresponds to one of the emitters, and indicates whether to activate or deactivate the corresponding emitter, where a bit value "1" indicates activation and a bit value "0" indicates deactivation. Successive emitters are activated and deactivated by shifting the bit string within shift register **720.**

Similarly, the receivers are controlled by a second serial interface, which transmits a binary string to a shift register **730.** Successive receivers are activated and deactivated by shifting the bit string in shift register **730.** Operation of shift registers **720** and **730** is described in applicant's co-pending application, U.S. Application Serial No. 12/371,609 filed on February 15, 2009 and entitled LIGHT-BASED TOUCH SCREEN, the contents of which are hereby incorporated by reference.

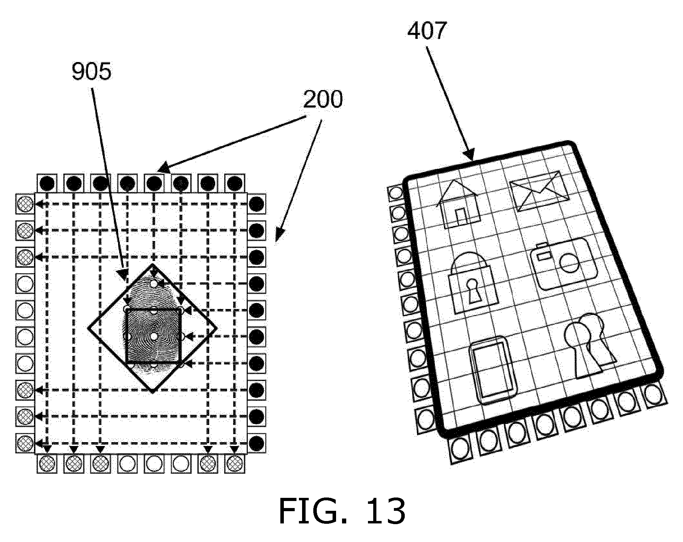

Reference is made to **FIG. 13,** which is a simplified diagram of a light-based touch screen system, in accordance with an embodiment of the present invention. The touch screen of **FIG. 13** does not require an overlay. Instead, a small frame **407** surrounds the display with emitters **200** and receivers positioned on opposite sides of the screen, and hidden behind an infrared transparent bezel. When a pointer, such as a finger or a stylus, touches the screen in a specific area **905,** one or more light beams generated by emitters **200** are obstructed. The obstructed light beams are detected by corresponding decreases in light received by one or more of the receivers, which is used to determine the location of the pointer.

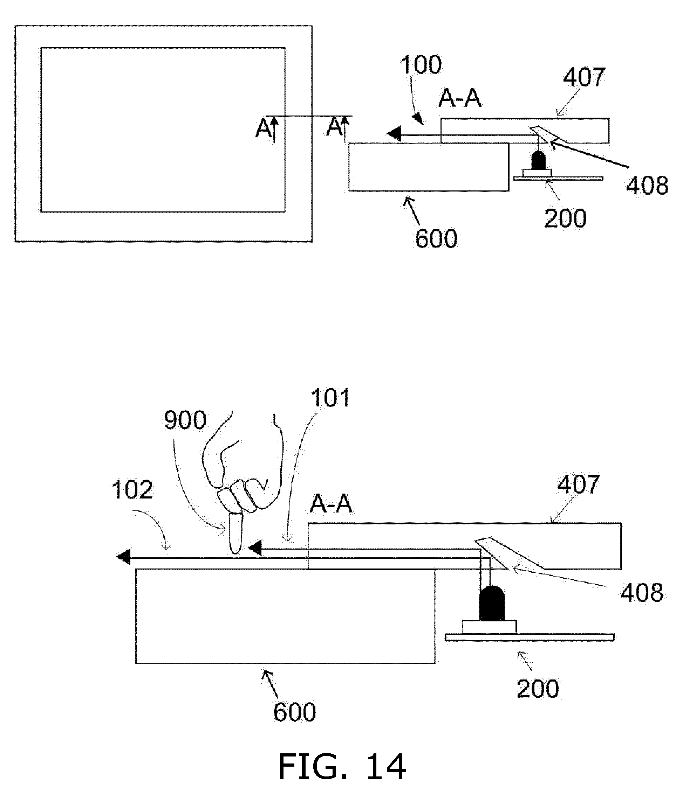

Reference is made to **FIG. 14,** which is a simplified cross-sectional diagram of the touch screen system of **FIG. 13,** in accordance with an embodiment of the present invention. Shown in **FIG. 14** is a cross-sectional view of a section **A-A** of an LCD display **600** and its surrounding infrared transparent frame **407.** The cross-sectional view shows an emitter **200** emitting light **100** that is reflected by a cut-out **408** in frame **407,** and directed substantially parallel over the display surface. As a finger **900** approaches near the display surface, some of the light, **101,** emitted by the emitters and directed over the location of the near touch is blocked by the finger, and some of the light, **102,** passes between the fingertip and the screen glass. When finger **900** touches the display surface, all of the light emitted by the emitters and directed over the touch location is blocked by finger **900.**

## Touch Screen System Configuration No. 1

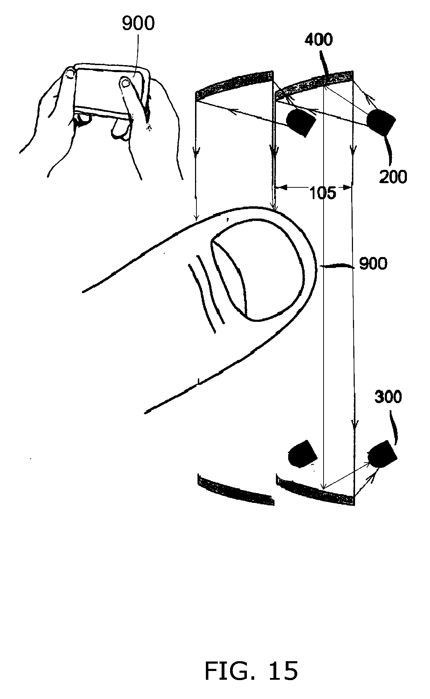

Reference is made to **FIG. 15,** which is a simplified illustration of an arrangement of emitters, receivers and optical elements that enable a touch screen system to read pointers that are smaller than the sensor elements, in accordance with an embodiment of the present invention. Shown in **FIG. 15** are a mirror or optical lens **400,** an emitter **200,** a wide reflected light beam **105,** a pointer **900** and a receiver **300.** Mirror or optical lens **400** generates a wide light beam that is focused onto receiver **300** by a second mirror or optical lens. The wide beam makes it possible to sense an analog change in the amount of light detected at receiver **300** when a pointer blocks a portion of the wide beam. The wide beam enables sensing an analog change when pointer **900** is placed in front of mirror or lens **400.** Thus, pointer **900** in **FIG. 15** blocks only a portion of wide beam **105.** The wide beam also enables mounting the emitters far apart from one another, and mounting the receivers far apart from one another. Consequently, this reduces the bill of materials by requiring fewer emitters and fewer receivers.

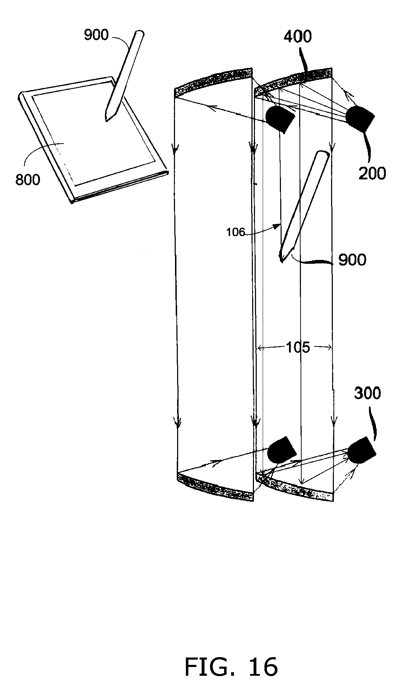

Reference is made to **FIG. 16,** which is a simplified illustration of an arrangement of emitters, receivers and optical elements that enable a touch screen system to detect a pointer that is smaller than the sensor elements, including inter alia a stylus, in accordance with an embodiment of the present invention. Shown in **FIG. 16** are a mirror or optical lens **400,** an emitter **200,** a wide reflected light beam, **105,** a pointer **900** and a receiver **300.** Mirror or optical lens **400** generates a wide light beam that is focused onto receive **300** by a second mirror or optical lens. The wide beam enables sensing of an analog change in the amount of light detected at receiver **300** when a pointer **900** blocks a portion of the wide beam, in particular, when pointer **900** is placed in front of mirror or lens **400.** Pointer **900,** as shown in **FIG. 16,** blocks only a portion of wide beam **105,** indicated by beam **106** being blocked by the tip of pointer **900.** The wide beam also enables mounting emitters far apart from one another, and mounting receivers far apart from one another. In turn, this reduces the bill of materials by requiring fewer emitters and fewer receivers.

Without the wide beam, there are generally spaces between beams that go undetected, making it impossible to distinguish between a user dragging a fine-point stylus across the beams, and the user tapping on different beams with a fine-point stylus. Moreover, with widely spaced narrow beams the pointer touch must be very precise in order to cross a narrow beam.

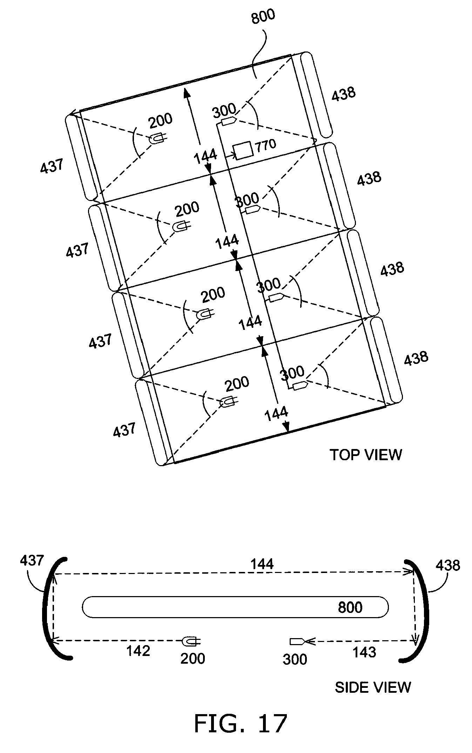

Reference is made to **FIG. 17,** which is a simplified diagram of a touch screen with wide light beams covering the screen, in accordance with an embodiment of the present invention. Touch screen systems using wide beams are described in applicant's provisional patent application, U.S. Application Serial No. 61/317,255 filed on March 24, 2010 and entitled OPTICAL TOUCH SCREEN WITH WIDE BEAM TRANSMITTERS AND RECEIVERS, the contents of which are hereby incorporated by reference.

The emitters and receivers shown in **FIG. 17** are spaced relatively widely apart. Generally, the emitters are not activated simultaneously. Instead, they are activated one after another, and the coverage areas of their light beams are substantially connected.

**FIG. 17** shows a top view and a side view of a touch system having a touch screen or touch surface **800.** The touch system provides touch-sensitive functionality to a surface irrespective of whether or not the surface includes a display screen. Moreover, a physical surface is not required; the light beams may be projected though the air, and the location of a pointer in mid-air that breaks the light beams may be detected.

Also shown in **FIG. 17** are emitters **200,** reflectors **437** and **438,** and receivers **300** coupled with a calculating unit **770.** Emitters **200** and receivers **300** are positioned beneath screen **800.** Emitters **200** project arcs **142** of light under screen **800** onto reflectors **437.** The distance between emitters **200** and reflectors **437** is sufficient for an arc to spread into a wide beam at a reflector **437.** In various embodiments of the present invention, the distance between emitters **200** and reflectors **437** may be approximately 4 mm, 10 mm, 20 mm or greater, depending on factors including inter alia screen size, required touch resolution, emitter characteristics and optical reflector characteristics.

Reflectors **437** collimate the light as wide beams **144** across a swath of screen surface. A wide beam **144** reaches a reflector **438,** which (i) redirects the light beam below screen **800,** and (ii) narrows the wide beam **144** into an arc **143.** As such, wide beam **144** converges onto the surface of one of receivers **300** below the surface of screen **800.** The light intensity detected by each of receivers **300** is communicated to calculating unit **770.**

The configuration of **FIG. 17** is of advantage in that the wide light beams cover the entire screen surface, thereby enabling touch sensitive functionality anywhere on the screen. Additionally, the cost of materials for the touch screen is reduced, since relatively few emitter and receiver components are required.

**Touch Screen System Configuration No. 2**

Configurations 2 - 5 use multiple emitter-receiver pairs to precisely identify a touch position. In some of the configurations described hereinabove there are opposing rows of emitters and receivers, each emitter being opposite a respective receiver. In configurations 2 -5 the emitters are shift-aligned with the receivers. For example, each emitter may be positioned opposite a midpoint between two opposing receivers. Alternatively, each emitter may be off-axis aligned with an opposite receiver, but not opposite the midpoint between two receivers.

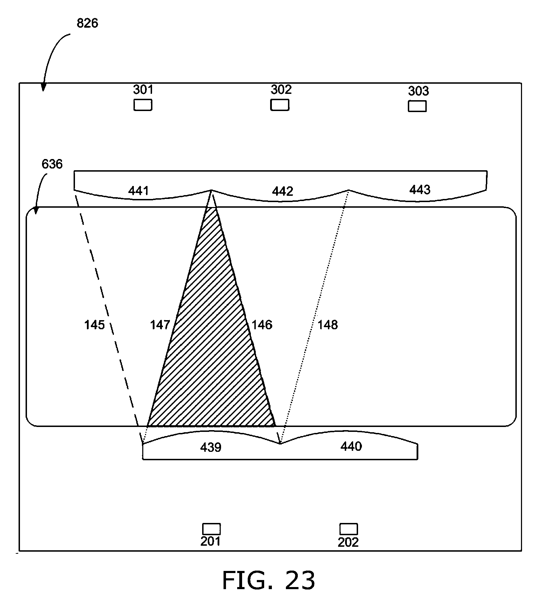

Embodiments of the present invention employ two types of collimating lenses; namely, (i) conventional collimating lenses, and (ii) collimating lenses coupled with a surface of micro-lenses that refract light to form multiple wide divergent beams. As used throughout the present specification, the term "collimating lens" includes both types of lenses. When a light source is positioned at the focus of a conventional collimating lens, the lens outputs light in substantially parallel beams, as illustrated inter alia in **FIGS. 15-17.** When a light source is positioned between a conventional collimating lens and its focus, the lens outputs a wide beam, the outer edges of which are not parallel to each other, as illustrated inter alia in **FIGS. 23 - 26.**

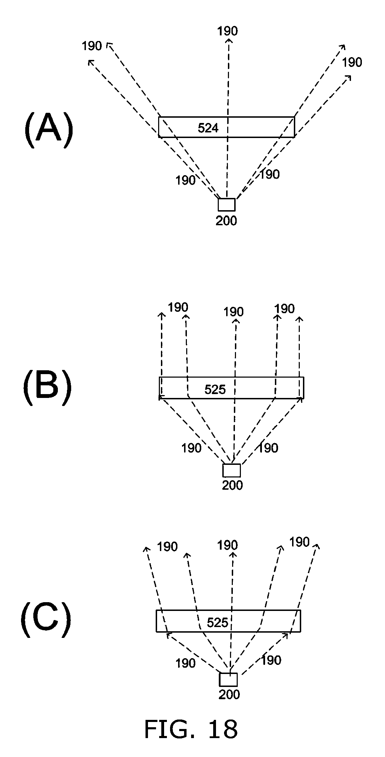

Reference is made to **FIG. 18,** which is a simplified illustration of a collimating lens in cooperation with a light emitter, in accordance with an embodiment of the present invention. Shown in **FIG. 18** is **(A)** a light emitter **200** transmitting light beams **190** through a flat clear glass **524.** Beams **190** are unaltered by the glass.

Also shown in **FIG. 18** is **(B)** an emitter positioned at the focus of a collimating lens **525.** Beams **190** are collimated by lens **525.**

Also shown in **FIG. 18** is **(C)** an emitter **200** positioned between collimating lens **525** and the lens' focus. Beams **190** are partially collimated by lens **525;** i.e., the output wide beams are not completely parallel.

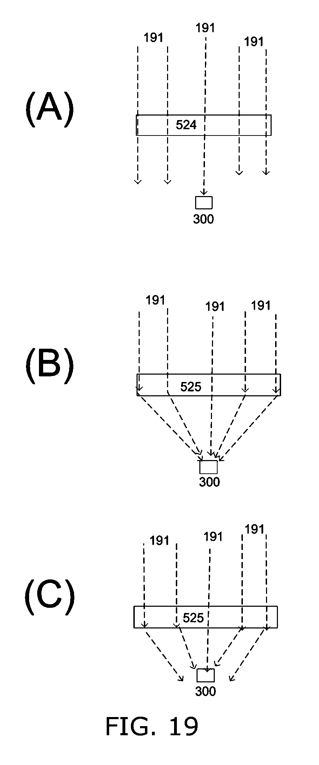

Reference is made to **FIG. 19,** which is a simplified illustration of a collimating lens in cooperation with a light receiver, in accordance with an embodiment of the present invention. Shown in **FIG. 19** is **(A)** substantially parallel light beams **191** transmitted through a flat clear glass **524.** Beams **191** are unaltered by the glass.

Also shown in **FIG. 19** is **(B)** a receiver **300** positioned at the focus of collimating lens **525.** Beams **191** are refracted onto receiver **300** by collimating lens **525.**

Also shown in **FIG. 19** is **(C)** a receiver **300** positioned between collimating lens **525** and the lens' focus. Beams **191** are collimated by lens **525,** but because receiver **300** is not at the lens focus, the beams do not converge thereon.

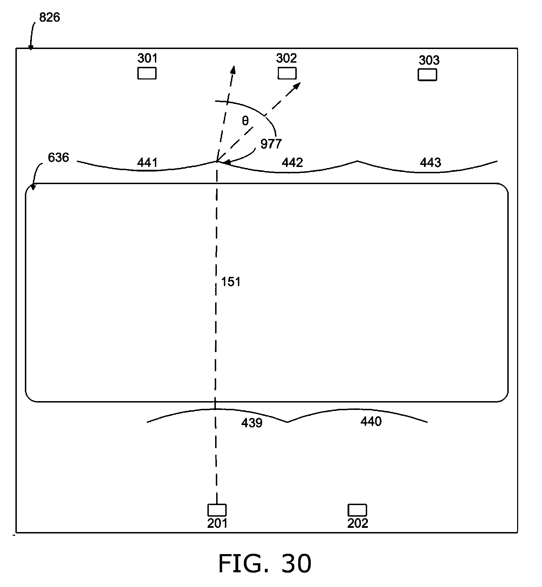

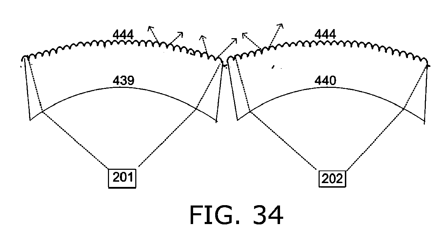

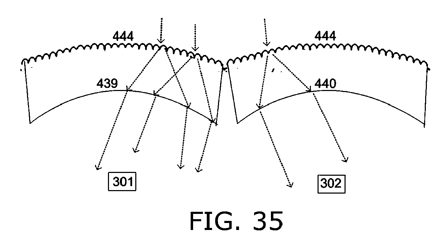

Collimating lenses coupled with an outer surface of micro-lenses, which face away from emitters or receivers, transmit light in two stages. As light passes through the bodies of the lenses, light beams are collimated as with conventional collimating lenses. However, as the light passes through the surface of micro-lenses, the light is refracted into multiple wide divergent beams, as illustrated inter alia in **FIGS. 30, 31** and **33 - 35.** In **FIGS. 34** and **35,** collimating lenses **439** and **440** are shown having micro-lens surfaces **444.** In **FIG. 34,** light emitters **201** and **202** are positioned within the focal distance of collimating lenses **439** and **440,** and wide light beams from the emitters are shown entering lenses **439** and **440.** Light is collimated as it passes through the lens, as with conventional collimating lenses. When the collimated light passes through micro-lens surface **444,** it is refracted into multiple wide divergent beams, three of which are illustrated in **FIG. 30.** In **FIG. 35,** light receivers **301** and **302** are positioned within the focal distance of the collimating lenses, and light beams are shown entering lenses **439** and **440** through micro-lens surface **444.** The incoming beams are refracted into wide divergent beams inside the lens bodies. The refracted beams are directed by the collimating portions of lenses **439** and **440,** which concentrate the beams onto light receivers **301** and **302.**

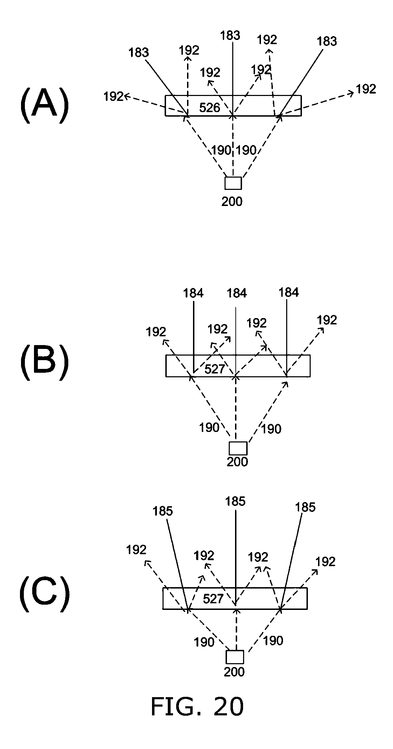

Reference is made to **FIG. 20,** which is a simplified illustration of a collimating lens having a surface of micro-lenses facing an emitter, in accordance with an embodiment of the present invention. **FIG. 20** shows **(A)** a flat glass **526** having micro-lenses etched on a surface facing an emitter **200.** Light beams **190** enter glass **526** at various angles. At each entry point, a micro-lens refracts an incoming beam into a wide arc **192.** Lines **183** show how the middle of each arc is oriented in a different direction, depending on the angle of approach of the beam into glass **526.**

**FIG. 20** also shows **(B)** a collimating lens **527** having micro-lenses etched on a surface facing an emitter **200.** A focus point of the lens, without the micro-lenses, is determined, and emitter **200** is positioned at that point. Light beams **190** enter collimating lens **527** at various angles. At each entry point, a micro-lens refracts the incoming beams into a wide arc **192.** Lines **184** show how the middle of each arc is oriented in the same direction, irrespective of the angle of approach of the beams into collimating lens **527.** This type of lens is referred to as a "multi-directional collimating lens", because it outputs arcs of light, not parallel beams, but all of the arcs are substantially uniformly directed.

FIG. 20 also shows (C) the same collimating lens 527, but with emitter 200 positioned between the lens and the focus point. The output arcs 192 are oriented in directions between those of the arcs of (A) and the arcs of (B), indicated by lines 185.

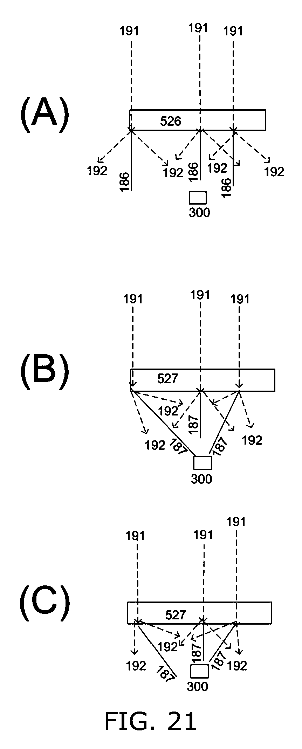

Reference is made to FIG. 21, which is a simplified illustration of a collimating lens having a surface of micro-lenses facing a receiver, in accordance with an embodiment of the present invention. FIG. 21 shows (A) a flat glass 526 having micro-lenses etched on a surface facing a receiver 300. Light beams 191 are shown entering glass 526 as parallel beams. At each exit point, a micro-lens refracts a beam into a wide arc 192. Lines 186 show how the middle of each arc is oriented in the same direction. The arcs do not converge on receiver 300.

FIG. 21 also shows (B) a multi-directional collimating lens 527 having micro-lenses etched on a surface facing receiver 300. A focus point of the lens, without the micro-lenses, is determined, and receiver 300 is positioned at that point. Light beams 191 enter lens 527 as substantially parallel beams. At each exit point, a micro-lens refracts an incoming beam into a wide arc 192. Lines 187 show how the middle of each arc is oriented towards receiver 300.

FIG. 21 also shows (C) the same lens 527, but with receiver 300 positioned between the lens and the focus point. The output arcs are oriented in directions between those of the arcs of (A) and the arcs of (B).

As used through the present specification, the term "collimating lens" includes a multi-directional collimating lens.

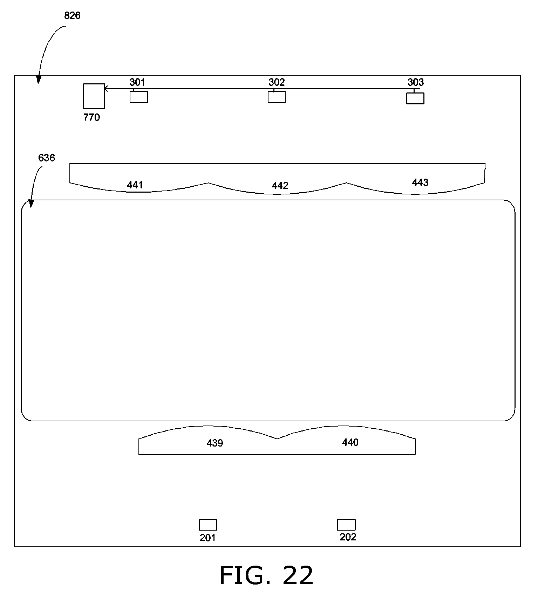

Reference is made to FIG. 22, which is a simplified diagram of an electronic device with a wide-beam touch screen, in accordance with an embodiment of the present invention. Shown in FIG. 22 is an electronic device 826 with two emitters, 201 and 202, and three receivers, 301, 302 and 303, the emitters and receivers being placed along opposite edges of a display 636. Light intensities detected at each of receivers 301, 302 and 303, are communicated to a calculating unit 770. Each emitter and receiver uses a respective primary lens, labeled respectively 441, 442, 443, 439 and 440. Emitters and receivers use the same lens arrangement, to ensure that light emitted by an emitter and re-directed by an emitter lens, is reverse-directed by an opposing lens onto a receiver.

It is desirable that the light beam from each emitter covers its two opposite receiver lenses. Such a condition is achieved by positioning each emitter between its lens and its lens' focal point. As such, the emitter is not in focus and, as a result, its light is spread, instead of being collimated, by its lens. Each receiver is similarly positioned between its lens and its lens' focal point.

Reference is made to FIG. 23, which is a diagram of electronic device 826 of FIG. 22, depicting overlapping light beams from one emitter detected by two receivers, in accordance with an embodiment of the present invention. Shown in FIG. 23 are two wide light beams from emitter 201, one of which is detected at receiver 301 and another of which is detected at receiver 302, respectively. The left and right sides of the one beam are marked 145 and 146, respectively, and the left and right sides of the other beam are marked 147 and 148, respectively. The shaded area in FIG. 23 indicates the area on display 636 at which a touch blocks a portion of both wide beams. As such, a touch in this area is detected by two emitter-receiver pairs; namely, 201-301 and 201-302.

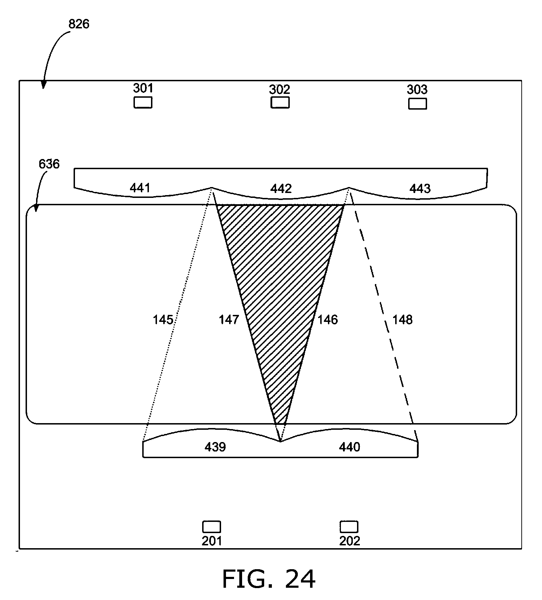

Reference is made to FIG. 24, which is a diagram of electronic device 826 of FIG. 22, depicting overlapping light beams from two emitters detected by one receiver, in accordance with an embodiment of the present invention. Shown in FIG. 24 are wide beams, one from emitter 201 and another from emitter 202, that are both detected at receiver 302. The left and right sides of the one beam are marked 145 and 146, respectively, and the left and right sides of the other beam are marked 147 and 148, respectively. The shaded area in FIG. 24 indicates the area on display 636 at which a touch blocks a portion of both wide beams. As such, a touch in this area is detected by two emitter-receiver pairs; namely, 201-302 and 202-302.

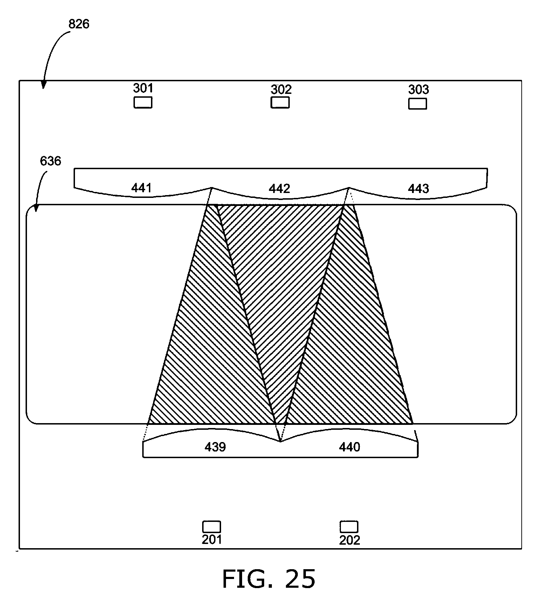

Reference is now made to FIG. 25, which is a diagram of the electronic device 826 of FIG. 22, showing that points on the screen are detected by at least two emitter-receiver pairs, in accordance with an embodiment of the present invention. FIG. 25 shows the wide beams of FIGS. 23 and 24, and illustrates that touches in the shaded wedges on display 636 are detected by at least two emitter-receiver pairs. The two emitter-receiver pairs are either one emitter with two receivers, as in FIG. 23, or two emitters with one receiver, as in FIG. 24. More specifically, touches that occur near the row of emitters are generally detected by the former, and touches that occur near the row of detectors are generally detected by the latter. By surrounding the screen with similarly arranged emitters, lenses and receivers, any point may be similarly detected by two emitter-receiver pairs.

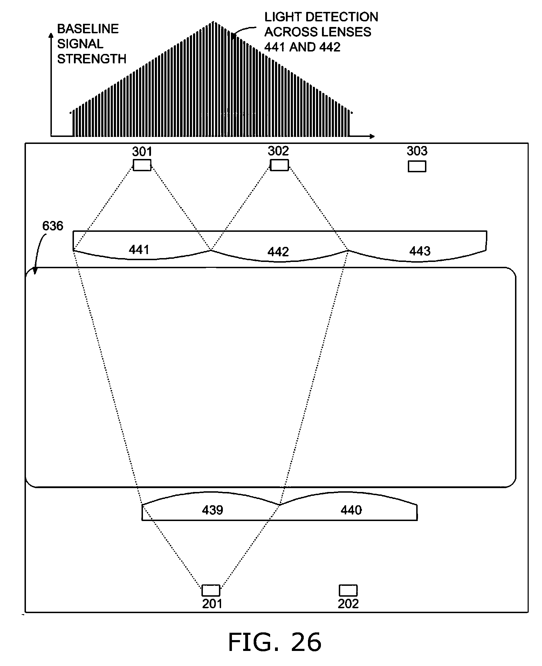

Reference is made to FIG. 26, which is a simplified diagram of a wide-beam touch screen, showing an intensity distribution of a light signal, in accordance with an embodiment of the present invention. Shown in FIG. 26 is a wide angle light beam emitted by emitter 201 into lens 439. The light beam crosses over display 636 and substantially spans lenses 441 and 442. The light is detected at receivers 301 and 302.

Shown in FIG. 26 is a graph of detected light intensity. Total detected light corresponds to a shaded area under the graph. An object touching the screen blocks a portion of this light. If the object touching the screen moves across the wide beam, from left to right, the amount of blocked light increases, and correspondingly the total detected light decreases, as the object progresses from the left edge of the beam to the center of the beam. Similarly, the amount of blocked light decreases, and correspondingly the total detected light increases, as the object progresses from the center of the beam to the right edge of the beam.

It is noted that the detected light intensities at the edges of the light beam are strictly positive, thus ensuring that a touch at these edges is detected.

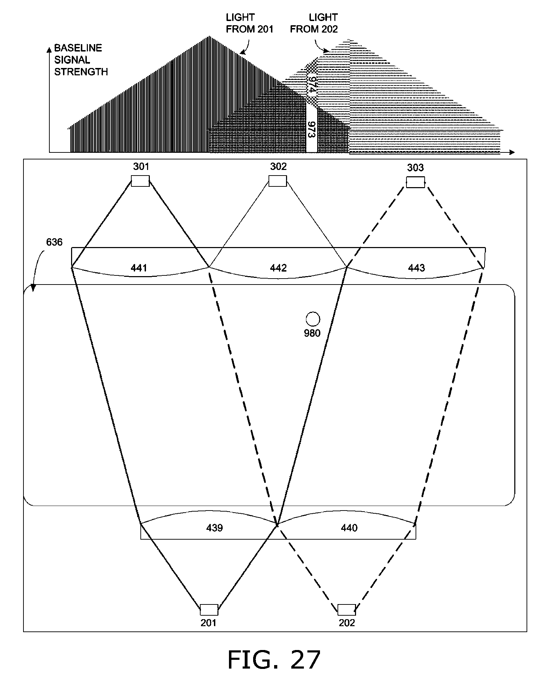

Reference is made to **FIG. 27,** which is a simplified diagram of a wide-beam touch screen, showing intensity distributions of overlapping light signals from two emitters, in accordance with an embodiment of the present invention. **FIG. 27** shows light detected from emitters **201** and **202.** A touch point **980** on display **636** blocks light from these emitters differently. Area **973** indicates attenuation of light from emitter **201** by point **980,** and the union of areas **973** and **974** corresponds to the attenuation of light from emitter **202** by point **980.** By comparing the light attenuation the two emitter-receiver pairs, **201-302** and **202-302,** a precise touch coordinate is determined.

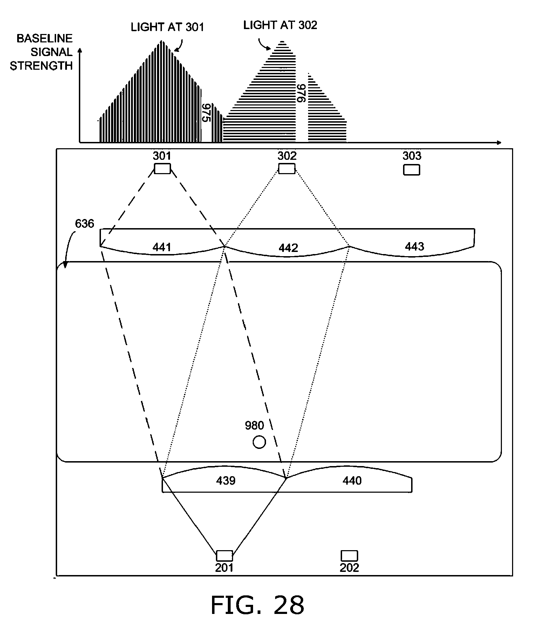

Reference is made to **FIG. 28,** which is a simplified diagram of a wide-beam touch screen, showing intensity distributions of two sets of overlapping light signals from one emitter, in accordance with an embodiment of the present invention. As shown in **FIG. 28,** touch point **980** is inside the area detected by emitter-receiver pair **201-301** and emitter-receiver pair **201-302.** The attenuation of the light signal at receiver **302,** depicted as area **976,** is greater than the attenuation at receiver **301,** depicted as area **975.** By comparing the light attenuation in the two emitter-receiver pairs, **201-301** and **201-302,** a precise touch coordinate is determined.

Determining the position of touch point **980** requires determining a position along an axis parallel to the edge along which the emitters are positioned, say, the x-axis, and along an axis perpendicular to the edge, say, the y-axis. In accordance with an embodiment of the present invention, an approximate y-coordinate is first determined and then, based on the expected attenuation values for a point having the thus determined y-coordinate and based on the actual attenuation values, a precise x-coordinate is determined. In turn, the x-coordinate thus determined is used to determine a precise y-coordinate. In cases where the touch point **980** is already touching the screen, either stationary or in motion, previous x and y coordinates of the touch point are used as approximations to subsequent x and y coordinates. Alternatively, only one previous coordinate is used to calculate a first subsequent coordinate, with the second subsequent coordinate being calculated based on the first subsequent coordinate. Alternatively, previous coordinates are not used.

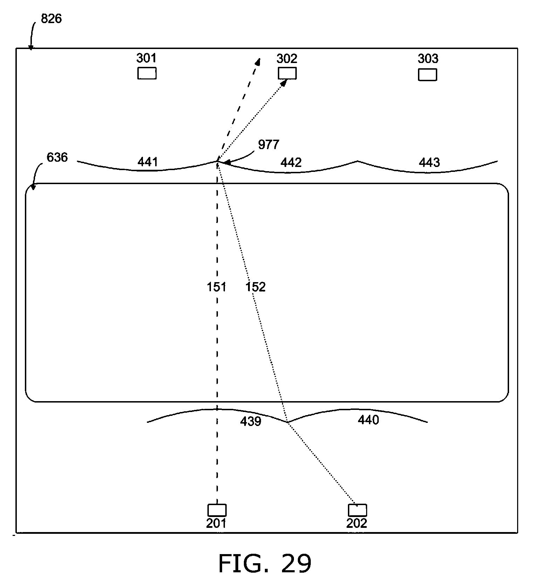

Reference is made to **FIG. 29,** which is a simplified diagram of a wide-beam touch screen with emitter and receiver lenses that do not have micro-lens patterns, in accordance with an embodiment of the present invention. Shown in **FIG. 29** is an electronic device **826** with a display **636,** emitters **201** and **202,** corresponding emitter lenses **439** and **440,** receivers **301, 302** and **303,** and corresponding receiver lenses **441, 442** and **443.** Two light beams, **151** and **152,** from respective emitters **201** and **202,** arrive at a point **977** that is located at an outer edge of lens **442.** Since beams **151** and **152** approach point **977** at different angles of incidence, they do not converge on receiver **302.** Specifically, light beam **152** arrives at receiver **302,** and light beam **151** does not arrive at receiver **302.**

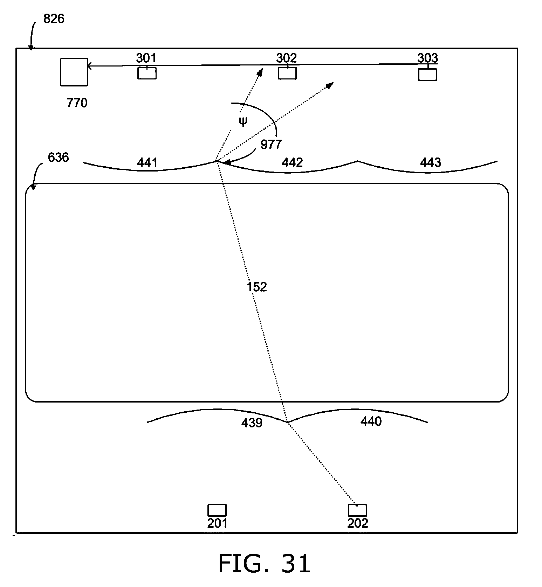

In order to remedy the non-convergence, a fine pattern of micro-lenses is integrated with the receiver lenses, at many points long the surfaces of the lenses. The micro-lenses distribute incoming light so that a portion of the light arriving at each micro-lens reaches the receivers. In this regard, reference is made to **FIGS. 30** and **31,** which are simplified diagrams of a wide-beam touch screen with emitter and detector lenses that have micro-lens patterns, in accordance with an embodiment of the present invention. **FIG. 30** shows incoming beam **151** being spread across an angle θ by a micro-lens at location **977,** thus ensuring that a portion of the beam reaches receiver **302. FIG. 31** shows incoming beam **152** being spread across an angle ψ by the same micro-lens at location **977,** thus ensuring that a portion of this beam, too, reaches receiver **302.** By arranging the micro-lenses at many locations along each receiver lens, light beams that enter the locations from different angles are all detected by the receiver. The detected light intensities are communicated to a calculating unit **770** coupled with the receiver.

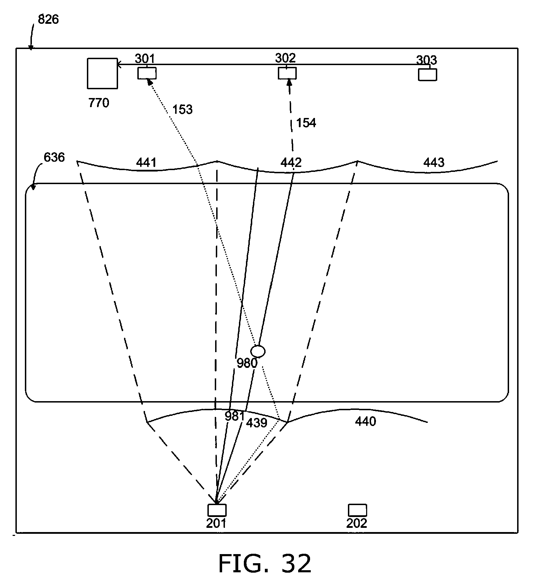

Reference is made to **FIG. 32,** which is a simplified diagram of a wide-beam touch screen with emitter and receiver lenses that do not have micro-lens patterns, in accordance with an embodiment of the present invention. Shown in **FIG. 32** is an electronic device **826** with a display **636,** emitters **201** and **202,** corresponding emitter lenses **439** and **440,** receivers **301, 302** and **303,** and corresponding receiver lenses **441, 442** and **443.** Two light beams emitted by emitter **201** and detected by respective receivers **301** and **302,** are desired in order to determine a precise location of touch point **980.** However, lens **439,** without micro-lens patterns, cannot refract a beam crossing point **980** to receiver **301.** I.e., referring to **FIG. 32,** lens **439** cannot refract beam **153** as shown. Only the beam shown as **154,** crossing point **980,** is detected.

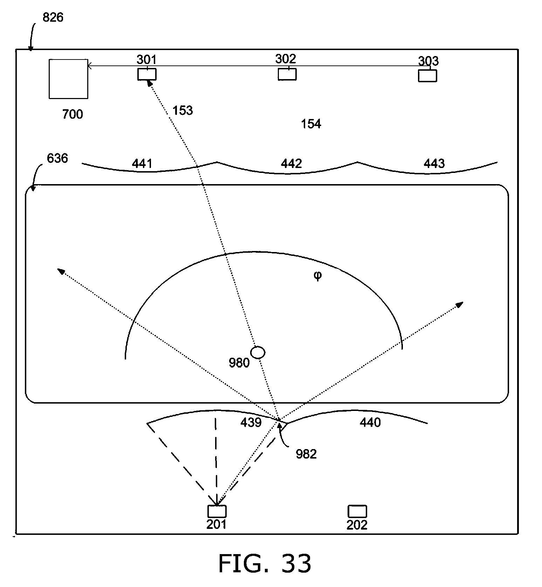

In order to remedy this detection problem, micro-lenses are integrated with the emitter lenses at many points along the surface of the lenses. The micro-lenses distribute outgoing light so that a portion of the light reaches the desired receivers. In this regard, reference is made to **FIG. 33,** which is a simplified diagram of a wide beam touch screen, with emitter and receiver lenses that have micro-lens patterns, in accordance with an embodiment of the present invention. **FIG. 33** shows that a portion of light exiting from micro-lens location **982** reaches multiple receivers. As such, a touch at point **980** is detected by receivers **301** and **302.** It will be noted from **FIGS. 32** and **33** that the beams passing through point **980** are generated by micro-lenses at different locations **981** and **982.** Light intensity values detected by the receivers of **FIGS. 32** and **33** are communicated to a calculating unit **770.**

Micro-lens patterns integrated with emitter and receiver lenses thus generate numerous overlapping light beams that are detected. Each point on the touch screen is traversed by multiple light beams from multiple micro-lenses, which may be on the same emitter lens. The micro-lenses ensure that the multiple light beams reach the desired receivers. Reference is made to **FIG. 34,** which is a simplified diagram of two emitters, **201** and **202,** with respective lenses, **439** and **440,** that have micro-lens patterns **444** integrated therein, in accordance with an embodiment of the present invention. Reference is also made to **FIG. 35,** which is a simplified diagram of two receivers, **301** and **302,** with respective lenses, **439** and **440,** that have micro-lens patterns **444** integrated therein, in accordance with an embodiment of the present invention.

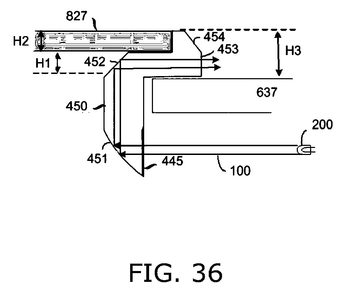

In some cases it is of advantage to avoid having micro-lenses on the outermost surfaces of the emitter and receiver lenses. Since the outermost surfaces are visible to a user, it may be less aesthetic to have the micro-lenses on these surfaces, in order that the visible surfaces appear smooth. Moreover, outermost surfaces are susceptible to scratching and to accumulation of dust and dirt, which can degrade performance of the micro-lenses. As such, in embodiments of the present invention, the micro-lenses are integrated on surfaces that are not exposed to the user, as shown below in **FIGS. 36, 37** and **40.**

Reference is made to **FIG. 36,** which is a simplified diagram of a side view of a single-unit light guide, in the context of an electronic device having a display and an outer casing, in accordance with an embodiment of the present invention. Shown in **FIG. 36** is a cut-away of a portion of an electronic device with a display screen **637,** an outer casing **827** above screen **637,** and an emitter **200** below screen **637.** A light guide **450** receives light beams **100** and reflects them above screen **637** so that they travel across the surface of screen **637** for detection. Light guide **450** includes internal reflective surfaces **451** and **452** for projecting light beams **100** above the surface of screen **637.** A section **445** of light guide **450** serves as a primary lens to collimate light beams **100** when they are received. The surface of section **445** that faces emitter **200,** indicated in bold, has patterns of micro-lenses etched thereon. As such, the micro-lenses are not visible to a user, and are protected from damage and dirt.

The surface of section **445** has a feather pattern for scattering incoming light beams **100** from an emitter **200.** Reflective surfaces **451** and **452** reflect light beams **100.** Reflective surface **451** is concave, and reflective surface **452** is a flat reflector oriented at a 45° angle with respect to incoming light beams **100.**

Light beams **100** exit light guide **450** through flat surface **453.** Surface **454** serves to connect light guide **450** to outer casing **827.** Surface **454** is located above the plane of active light beams used by the touch system, and is angled for aesthetic purposes.

The reflective characteristics of surface **452** require that dust and dirt not accumulate on surface **452,** and require that outer casing **827,** which may be made inter alia of metal or plastic, not make contact with surface **452;** otherwise, reflectivity of surface **452** may be impaired. As such, outer casing **827** is placed above surface **452,** thereby protecting surface **452** from dust and dirt, and outer casing **827** is not flush with surface **452,** so that casing material does not touch surface **452.** Being a flat reflector at a 45° angle relative to incoming light beams, surface **452** is positioned above the upper surface of display **637.** As such, the device height, **H3,** above display **637** due to light guide **450,** comprises the height, **H1,** of surface **452** plus the thickness, **H2,** of outer casing **827.**

At the receiving side, a light guide similar to **450** is used to receive light beams 100 that are transmitted over screen **637,** and to direct them onto corresponding one or more receivers. Thus, light beams enter light guide **450** at surface **453,** are re-directed by surface **452** and then by surface **451,** and exit through the micro-lens patterned surface of section **445** to one or more receivers. At the receiving side, the surface of section **445** has a pattern that scatters the light beams as described hereinabove.

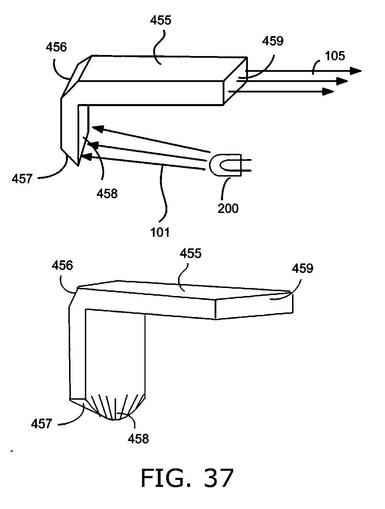

Reference is made to **FIG. 37,** which is a simplified diagram of side views, from two different angles, of a lens with applied feather patterns on a surface, in accordance with an embodiment of the present invention. Shown in **FIG. 37** is a light guide **455** having an internal reflective section **456,** an internal collimating lens **457,** and etched micro-lenses **458.** Light beams **101** entering light guide **455** at lens **457** exit the light guide through a surface **459** as light beams **105.**

Similar light guides are used for receiving beams that have traversed the screen, to focus them onto receivers. In this case, light beams enter at surface **459,** are reflected below the screen surface by internal reflective section **456,** are re-focused onto a receiver by collimating lens **457,** and re-distributed by micro-lenses **458.** In general, the same lens and micro-lenses are used with an emitter and a detector, in order that the light beam be directed at the receiving side in reverse to the way it is directed at the emitting side.

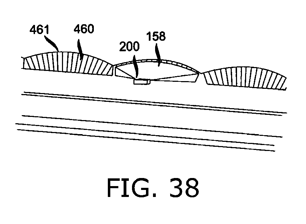

Collimating lens **457** has a rounded bottom edge, as shown at the bottom of **FIG. 37.** In order to properly refract incoming light on the emitter side, the micro-lenses **458** are formed in a feather pattern, spreading as a fan, as shown at the bottom of **FIG. 37** and in **FIG. 38.**

Reference is made to **FIG. 38,** which is a simplified diagram of a portion of a wide-beam touch screen, in accordance with an embodiment of the present invention. A feather pattern **460** is shown applied to the surface of a lens **461.** A similar neighboring lens is associated with an emitter **200** emitting a wide beam **158.**

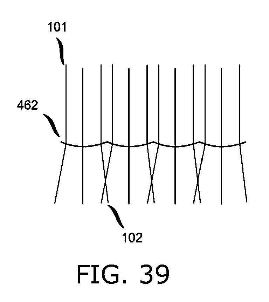

Reference is made to **FIG. 39,** which is a top view of light beams entering and exiting micro-lenses etched on a lens, in accordance with an embodiment of the present invention. Substantially collimated light beams **101** are shown in **FIG. 39** entering micro-lenses **462** and being refracted to light beams **102,** such that each micro-lens acts as a light source spreading a wide beam across a wide angle.

**Touch Screen System Configuration No. 3**

Several challenges arise in the manufacture of the micro-lenses in configuration no. 2. One challenge is the difficulty of accurately forming the fan-shaped feather pattern of micro-lenses. It is desirable instead to use micro-lenses arranged parallel to one another, instead of the fan/feather pattern.

A second challenge relates to the mold used to manufacture the light guide in configuration no. 2. Referring to **FIG. 36,** it is desirable that the outer surface of section **445**, facing emitter **200**, be vertical, so that the front surface of section **445** is parallel with the straight back surface portion of light guide **450.** However, it is difficult to manufacture exactly parallel surfaces. Moreover, if the light guide **450** were to be wider at its bottom, then it would not be easily removable from its mold. As such, the two surfaces generally form a wedge, and the surface of section **445** facing emitter **200** is not perfectly vertical. To compensate for this, the micro-lenses are arranged so as to be perpendicular to a plane of incoming light beams.

A third challenge is the constraint that, for optimal performance, the micro-lenses be positioned accurately relative to their corresponding emitter or receiver. The tolerance for such positioning is low. As such, it is desirable to separate section **445** of the light guide so that it may be positioned accurately, and to allow more tolerance for the remaining portions of the light guide as may be required during assembly or required for robustness to movement due to trauma of the electronic device.

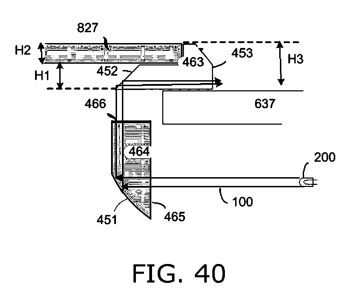

Configuration no. 3, as illustrated in **FIGS. 40 - 42** and **48,** serves to overcome these, and other, challenges.

Reference is made to **FIG. 40,** which is a simplified diagram of a side view of a dual-unit guide, in the context of an electronic device having a display **637** and an outer casing **827,** in accordance with an embodiment of the present invention. Shown in **FIG. 40** is an arrangement similar to that of **FIG. 36,** but with light guide **450** split into an upper portion **463** and a lower portion **464.** The micro-lenses are located at an upper surface **466** of lower portion **464.** As such, the micro-lenses are not embedded in the collimating lens portion of light guide **464.**

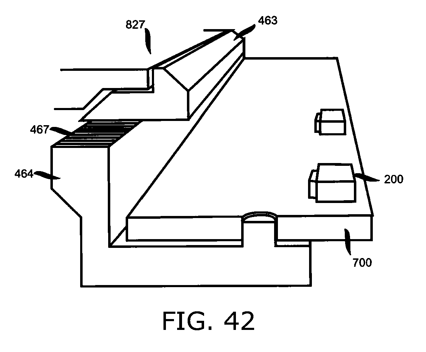

In configuration no. 2, the curved shape of the collimating lens necessitated a fan/feather pattern for the micro-lenses etched thereon. In distinction, in configuration no. 3 the micro-lenses are etched on rectangular surface **466,** and are arranged as parallel rows. Such a parallel arrangement, referred to herein as a "tubular arrangement", is shown in **FIG. 42.** Specifically, a parallel series of micro-lenses **467** are shown along an upper surface of light guide **464** in **FIG. 42.**

An advantage of configuration no. 3 is that the flat upper surface of the light guide may be molded as nearly parallel with the screen surface as possible, since the mold is one flat surface that lifts off the top of light guide **464.** Furthermore, in configuration no. 3, only portion **464** of the light guide has a low tolerance requirement for positioning. Portion **463** has a higher tolerance, since its surfaces are not placed at a focal point of an element.

As shown in **FIG. 40,** light beams **100** emitted by emitter **200** enter light guide unit **464** at surface **465**, are reflected by reflective surface **451** through surface **466**, and into light guide unit **463.** Inside light guide unit **463**, light beams **100** are reflected by surface **452,** and exit through surface **453** over display **637.**

**FIG. 40** indicates that the height, **H3,** added by the light guide over display **637** comprises the sum of the height, **H1,** of internal reflective surface **452**, and the height, **H2**, of the thickness of outer casing **827.**

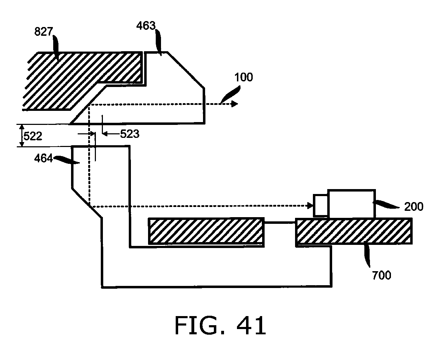

Reference is made to **FIG. 41,** which is a picture of light guide units **463** and 464, within the content of a device having a PCB **700** and an outer casing **827**, in accordance with an embodiment of the present invention. The tubular pattern on the upper surface of light guide unit **464** is a fine pattern. In order for this pattern to distribute the light beams correctly, light guide **464** is placed precisely relative to its respective LED or PD. By contrast, light guide unit **463** has a flat reflective surface and, as such, does not require such precision placement. **FIG. 40** indicates the relative positioning of light guide units **463** and **464**. Their alignment is represented by a distance **523**, and has a tolerance of up to 1 mm. A distance **522** represents the height between the light guide units.

Reference is made to **FIG. 42,** which is a top view of light guide units **463** and **464** of **FIG. 41**, in accordance with an embodiment of the present invention. Tubular pattern **467** appears on the upper surface of light guide unit **464.**

**Touch Screen System Configuration No. 4**

Configuration no. 4 uses a reflective light guide and lens that reduce the height of a light guide above a display. The reflective light guide and lens of configuration 4 are suitable for use with the feather pattern lenses of configuration no. 2 and with the tubular pattern lenses of configuration no. 3. Many electronic devices are designated with a display surface that is flush with the edges of the devices. This is often an aesthetic feature and, as such, when integrating optical touch screens with electronic devices, it is desirable to minimize or eliminate the raised rims. Less visibly prominent rims result in sleeker, more flush outer surfaces of the devices.

Moreover, in optical touch screens, the raised rim occupies a width around the display, beyond the edges of the display. Many electronic devices are designed with display surfaces that seamlessly extend to the edges of the devices. This is often an aesthetic feature and, as such, when integrating optical touch screens with electronic devices, it is desirable to design the reflective raised rims in such a way that they appear as seamless extensions of the display.

Configuration no. 4 achieves these objectives by reducing bezel height and providing a seamless transition between a display edge and an outer border of a device, resulting in a more appealing aesthetic design. The light guide of configuration no. 4 integrates with an outer casing having an elongated rounded edge, thereby softening sharp angles and straight surfaces.

Configuration no. 4 employs two active mirror surfaces; namely, a parabolic reflective surface that folds and focuses incoming light to a focal location, and an elliptical refractive surface that collects light from the focal location and collimates the light into beams across the screen.

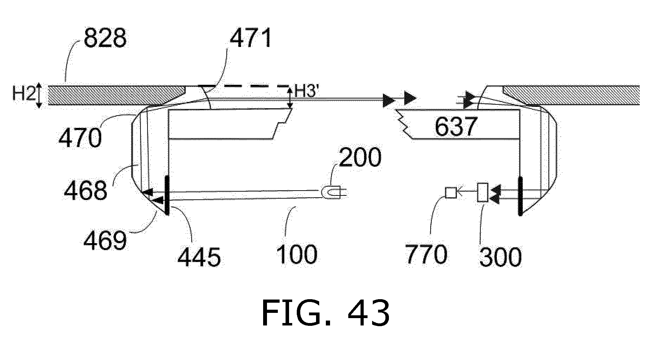

Reference is made to **FIG. 43,** which is a simplified diagram of a side view of a light guide within an electronic device, in accordance with an embodiment of the present invention. Shown in **FIG. 43** is a light guide **468** between an outer casing **828** and a display **637.** Light beams from an emitter **200** enter light guide **468** through a surface **445.** A feather pattern of micro-lenses is present on a lower portion of surface **445,** in order to scatter the light beams **100.** Light beams **100** are reflected by an internal concave reflective surface **469** and by a parabolic reflective surface **470**, and exit light guide **468** through an elliptical refractive surface **471.** Elliptical refractive surface **471** redirects at least a portion of light beams **100** in a plane parallel with the surface of display **637.** Light beams **100** are received at the other end of display **637,** by a similar light guide that directs the beams onto a light receiver **300.** The light intensity detected by light receiver **300** is communicated to a calculating unit **770.**

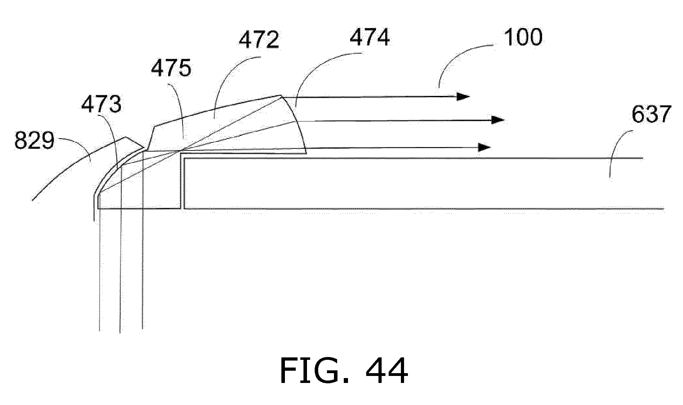

Reference is made to **FIG. 44**, which is a simplified diagram of a side view cutaway of a portion of an electronic device and an upper portion of a light guide with at least two active surfaces for folding light beams, in accordance with an embodiment of the present invention. Shown in **FIG. 44** is an upper portion of a light guide **472.** Surface **473** is part of a parabola, or quasi-parabola, or alternatively is a free form, having a focal line **475.** Focal line **475**, and surfaces **473** and **474** extend along the rim of display **637.** Surface **474** is part of an ellipse, or quasi-ellipse, or alternatively a free form, having focal line **475.**

On the emitter side, light beams enter the light guide, and parabolic mirror **473** reflects the beams to a focal point inside the light guide. Refracting elliptical lens **474** has the same focal point as parabolic mirror **473.** Elliptical lens **474** refracts the light from the focal point into collimated light beams over display **637.** On the receiver side, collimated light beams enter the light guide, and are refracted by elliptical lens **474** into a focal point. Parabolic mirror **473** reflects the beams from the focal point inside the light guide, to collimated output beams.

Surface **469** in **FIG. 43** folds light beams **100** upwards by 90°. Surface **469** is formed as part of a parabola. In one embodiment of the present invention, surface **469** is corrected for aberrations due to input surface **445** being slightly inclined rather than perfectly vertical, and also due to the light source being wider than a single point.

Surfaces **469** and **470** use internal reflections to fold light beams. Thus these surfaces need to be protected from dirt and scratches. In **FIG. 44**, surface **473** is protected by outer casing **829.** The lower surface (now shown) of light guide **472** is deep within the electronic device, and is thus protected.

Using configuration no. 4, substantially all of reflective surface **473** is located below the upper surface of display **637.** Thus, this configuration adds less height to an electronic device than does configuration no. 2. Referring back to **FIG. 43,** the height, **H3',** added by the light guide in the present configuration is approximately the thickness, **H2,** of the outer casing, which is less than the corresponding height, **H3,** in configuration no. 2. Moreover, the convex shape of surface **471** of **FIG. 43** and surface **474** of **FIG. 44** is easier for a user to clean than is the perpendicular surface **453** of **FIG. 36.** Thus a user can easily wipe away dust and dirt that may accumulate on display **637** and on surface **471.** It is noted that configuration no. 4 eliminates the need for surface **454** of **FIG. 36,** since outer casing **828** is flush with the height of surface **471**, instead of being above it.

The convex shape of surface **471** of **FIG. 43** makes the bezel less visibly prominent than does the perpendicular surface **453** of **FIG. 36.**

Some electronic devices are covered with a flat sheet of glass that extends to the four edges of the device. The underside of the glass is painted black near the devices edges, and the display is viewed through a clear rectangular window in the middle of the glass. Examples of such devices include the IPHONE®, IPOD TOUCH® and IPAD®, manufactured by Apple Inc. of Cupertino, CA, and also various models of flat-panel computer monitors and televisions. In some cases, the light guides surrounding the various touch screens described herein may appear non-aesthetic, due to (a) the light guide being a separate unit from the screen glass and thus the border between them is noticeable, and (b) the light guide extending below the screen and thus, even if the underside of the light guide is also painted black, the difference in heights between the bottom of the light guide and the screen glass is noticeable. Embodiments of the present invention employ a two-unit light guide to overcome this problem.

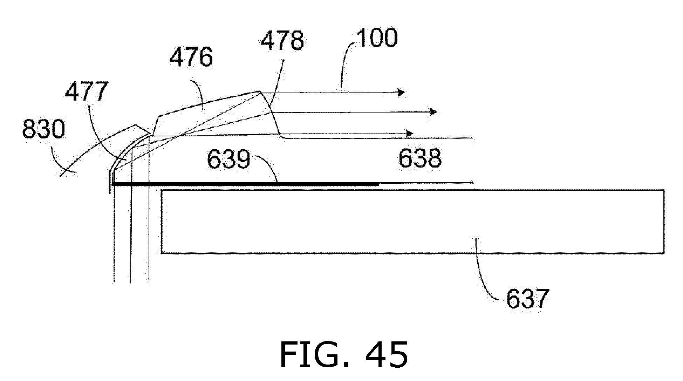

In one such embodiment, the upper unit of the light guide is merged with the screen glass. In this regard, reference is made to **FIG. 45,** which is a simplified drawing of a section of a transparent optical touch light guide **476,** formed as an integral part of a protective glass **638** covering a display **637**, in accordance with an embodiment of the present invention. A daylight filter sheet **639** on the underside of protective glass **638** serves, instead of black paint, to hide the edge of display **637**, without blocking light beams **100**. Light guide **476** has an outer elliptical surface **478** and an inner parabolic surface **477,** and merges smoothly with an outer casing **830**. Light beams **100** pass through light guide **476** as in **FIG. 44.**

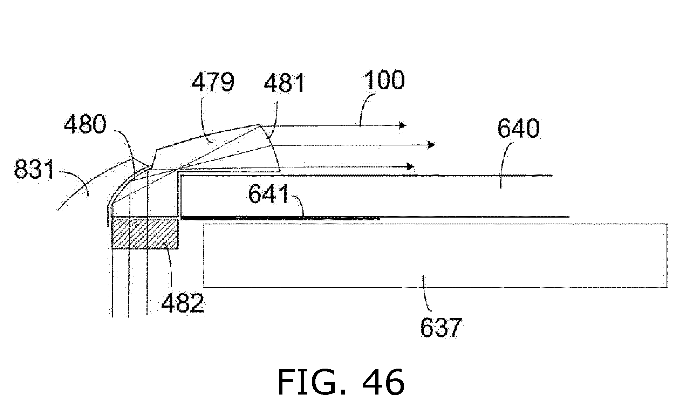

In some cases, the cost of manufacturing a protective glass cover with an integrated reflective lens may be expensive. As such, in an alternative embodiment of the present invention, a black object is placed between the upper and lower units of the light guide. The height of the black object is aligned, within the electronic device, with the height of the black paint on the underside of the protective glass. In this regard, reference is made to **FIG. 46,** which is a simplified illustration of the electronic device and light guide of **FIG. 44,** adapted to conceal the edge of the screen, in accordance with an embodiment of the present invention. Shown in **FIG. 46** is black paint, or alternatively a daylight filter sheet **641,** on the underside of protective glass **640,** covering display **637**. A black plastic element **482** is aligned with black paint/daylight filter sheet **641,** so that the edge of protective glass **640** is not discernable by a user. Black plastic element **482** transmits infra-red light to allow light beams **100** to pass through.

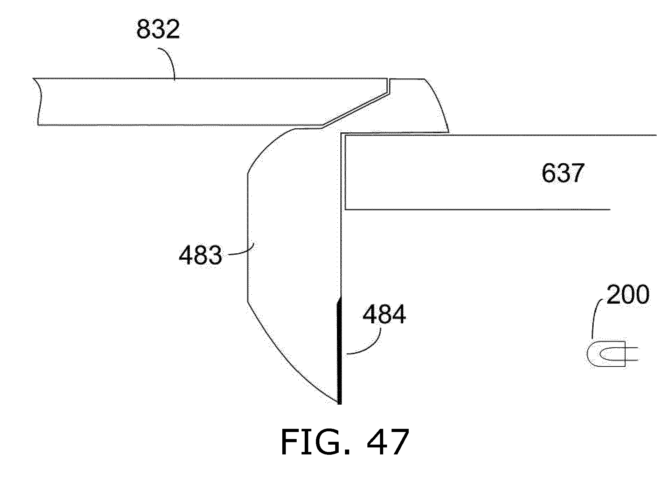

Reference is made to **FIG. 47,** which is a simplified diagram of a light guide **483** that is a single unit extending from opposite an emitter **200** to above a display **637,** in accordance with an embodiment of the present invention. A portion of an outer casing **832** is shown flush with the top of light guide **483**. The lower portion of light guide **483** has a feather pattern of micro-lenses **484** to scatter the light beams arriving from emitter **200**. At the receiving side, the light beams exit through the bottom of a light guide similar to light guide **483,** towards a receiver. The same feather pattern **484** breaks up the light beams en route to the receiver.

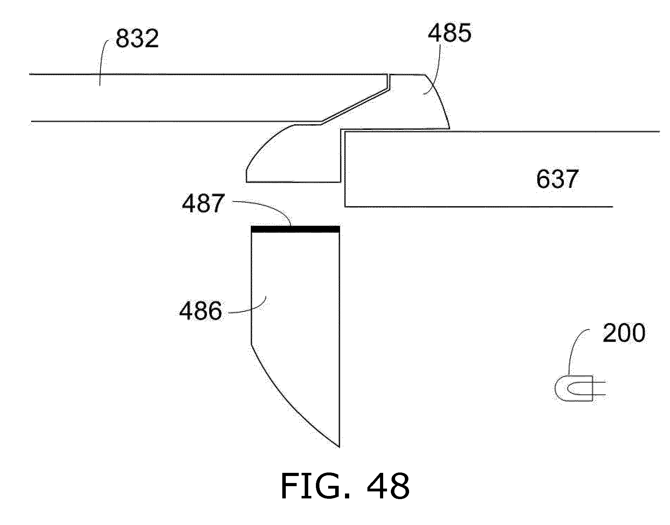

Reference is made to **FIG. 48,** which is a simplified diagram of a dual-unit light guide, in accordance with an embodiment of the present invention. Shown in **FIG. 48** is a light guide with an upper unit **485** and a lower unit **486**. A portion of an outer casing **832** is flush with the top of light guide unit **485**. A display **637** is shown to the right of light guide unit **485**. The top surface of light guide unit **486** has a tubular pattern of micro-lenses **487** to break up light beams arriving from an emitter **200**. At the receiving side, the light beams exit through the bottom of a light guide similar to the light guide shown in **FIG. 48,** towards a receiver. The same tubular pattern **487** breaks up the light beams en route to the receiver.

As explained hereinabove with reference to **FIGS. 36** and **40**, the positioning of light guide unit **486** with tubular pattern **487** requires high precision, whereas the positioning of light guide unit **485** does not require such precision. The effect of tubular pattern **487** on the light beams depends on its precise placement relative to its respective emitter or receiver. The active surfaces in light guide unit **485** are more tolerant, since they are largely self-contained; namely, they are both focused on an internal focal line, such as focal line **475** of **FIG. 44.**

**Touch Screen System Configuration No. 5**

Configuration no. 5 relates to increasing the resolution of an optical touch screen, to yield high resolution touch sensitivity throughout an active screen area, including the edges of the screen. Configuration 5 is useful for simplifying the process of integrating touch screen components, and minimizing the tolerance chain, for a manufacturer, by preparing modular blocks containing a lens and an emitter or a receiver. These modular blocks are formed so as to be easily positioned together in a row along an edge of a display, for fast assembly of a touch screen. The high tolerance requirements of placing an emitter or receiver in exactly the correct position vis-à-vis a lens, are handled during manufacture of the modular blocks, thus removing the burden of high tolerance assembly from a device manufacturer.

High resolution touch sensitivity is achieved by combining two or more emitter-receiver pair signals that span a common area, as described hereinabove with reference to configurations nos. 2 and 3. A technique for calculating a precise touch location is described hereinbelow.

Simplified manufacturing is achieved by integrating optical elements and electronic components into a single unit. As such, complex surfaces may be gathered into one component, thereby reducing the need for high assembly tolerances.

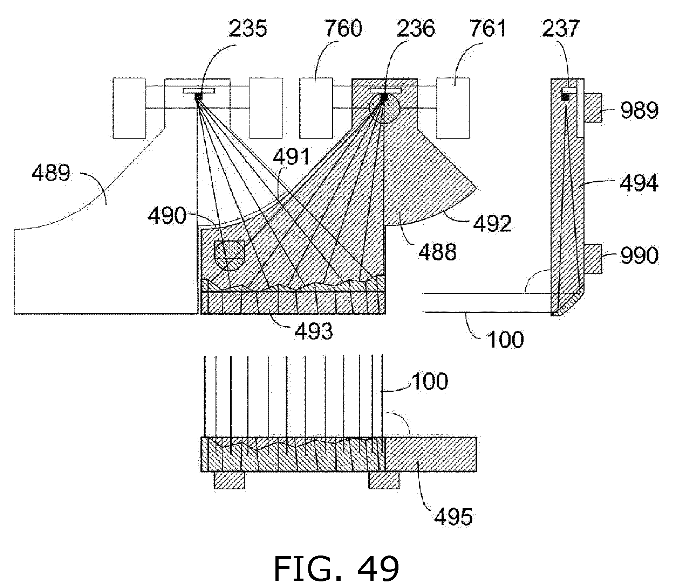

Reference is made to **FIG. 49,** which is an illustration of optical components made of plastic material that is transparent to infrared light, in accordance with an embodiment of the present invention. Shown in **FIG. 49** is an optical component **488** that includes a forward-facing LED **236**, and electronics to handle the LED signal. Optical component **488** is connected to electrical pads **760** and **761**. Optical component **488** is used to transmit collimated light beams combined from two emitters; namely, emitter **235** and emitter **236**. Emitter **235** is included in a neighboring optical component **489**.

Light beams from emitter **235** exit optical component **489** through a tight-fitting surface **491,** and enter optical component **488** through a tight-fitting surface **490. FIG. 49** shows non-parallel light beams from emitters **235** and **236** entering a lens **493**. Components **488** and **489** are substantially identical, and fit together. A device manufacturer can thus use these components as building blocks to create a touch screen, by arranging a series of these building blocks in a row along each edge of the display. Typically, two adjacent display edges are lined with emitter components, and the other two edges are lined with receiver components. However, the emitter and receiver components, being of substantially identical shape, can be positioned together in the same row.

Lens **493** has several surfaces designed to mix and reflect the light from the two sources. In one embodiment of the present invention, lens **493** has micro-lenses that spread incoming light in the manner described hereinabove with reference to the feather and tubular patterns of configuration nos. 2 and 3.

An optical component **494** is similar to optical component **488**, except that an LED **237** is side-facing instead of forward-facing. **FIG. 49** shows collimated light beams **100** exiting optical component **494**. Pins **989** and **990** guide optical component **494** on a printed circuit board.

Optical component **495** is optical component **488** as viewed from the front. **FIG. 49** shows collimated light beams **100** exiting optical component **495.**

Similar optical components (not shown) are also provided for receiving light beams that traverse the screen surface. For these components, the emitters are replaced by receivers, and the electrical components handle the receiver signals. Such optical components receive parallel light beams that enter a lens, and direct the beams onto two different receivers.

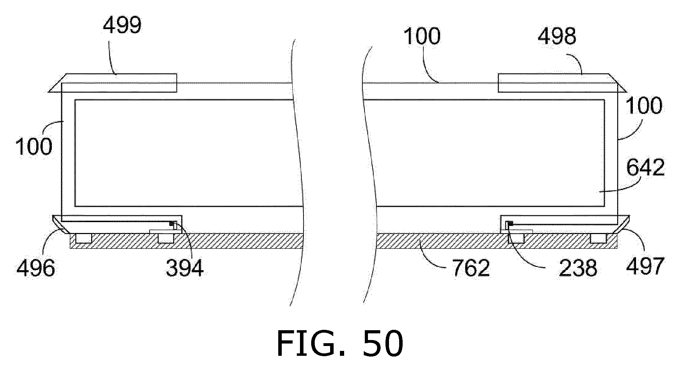

Reference is made to **FIG. 50,** which is a simplified diagram of a side view of a touch screen with light guides, in accordance with an embodiment of the present invention. Shown in **FIG. 50** are a display **642,** an optical element **496**, a photo diode **394** within optical element **496**, an optical element **497**, and an emitter **238** within optical element **497**. Optical elements **496** and **497** are connected to a printed circuit board **762**. Emitter **238** emits non-parallel light beams and, as described hereinabove with reference to **FIG. 49,** the non-parallel beams are converted into collimated beams, or substantially collimated beams, before exiting optical element **497**. In an embodiment of the present invention, micro-lenses etched, or otherwise formed, on the upper surface of optical element **497** spread the light beams in the manner described hereinabove with reference to the tubular pattern of configuration no. 3. The beams **100** that exit optical element **497** are directed upwards and are reflected over display **642** by a light guide **498**. The light beams **100** enter a light guide **499** on the opposite side of screen **642**, and are reflected below display **642** into optical element **496**. As described hereinabove, optical element **496** converts the parallel light beams into non-parallel light beams that converge on photo diode **394**. In one embodiment of the present invention, micro-lenses etched, or otherwise formed, on the upper surface of optical element **496** spread the light beams in the manner described hereinabove with reference to the tubular pattern of configuration no. 3. In one embodiment of the present invention, the light guides **498** and **499** are constructed as a frame that surrounds display **642**.

In the touch screen of **FIG. 50,** two types of light beam redirection occur. A first redirection redirects light beams differently, either by collimating beams emitted by an emitter, or by concentrating input light beams onto a photo diode sensor. In the systems of **FIGS. 36 - 45** a lens near the emitter or receiver performs this redirection. A second redirection uniformly redirects incoming beams at a 90º angle, or folds incoming light beams into a narrow waist or focus, as described hereinabove with reference to configuration no. 4.

The first type of redirection requires that the emitter or receiver be positioned at a specific location relative to the focal point of the lens. As such, the positioning of the emitter and lens, or receiver and lens, is sensitive to variations in placement. Thus the assembly of the emitter or receiver together with its corresponding lens, has a low tolerance of error. The second type of redirection, involving reflection, is robust to variations in position of the reflector or the light guide. Thus assembly of this portion of the light guide has a high tolerance for error.

In accordance with an embodiment of the present invention, the feather or tubular pattern of micro-lenses is included within an optical element that contains the emitter or the receiver, such as optical elements **496** and **497** of **FIG. 50**, and optical elements **488** and **489** of **FIG. 49**. Manufacture of such optical elements supports accurate placement of the emitter or receiver relative to the embedded pattern of micro-lenses at a low cost of manufacturing. By contrast, if the emitter and the lens, or if the receiver and the lens, are separate elements, the manufacturing cost of aligning the emitter or the receiver with the patterned lenses on a printed circuit board is high.

The light guides that reflect light above the screen surface may be manufactured separately and assembled with other touch screen components. Thus in **FIG. 50** light guides **498** and **499** are shown separate from optical elements **496** and **497**.

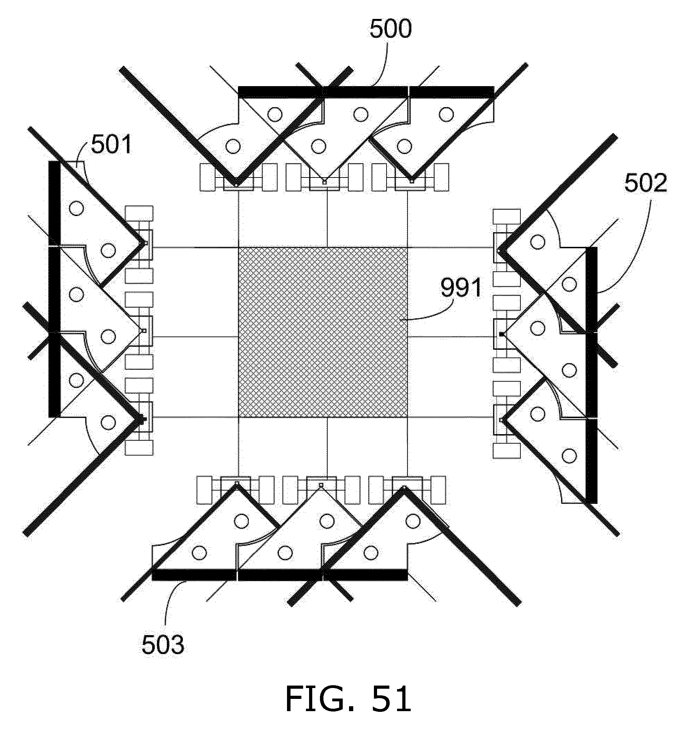

Reference is made to **FIG. 51**, which is an illustration of a touch screen with a block of three optical components on each side, in accordance with an embodiment of the present invention. Blocks **500** and **501** are emitters, and blocks **502** and **503** are receivers. The blocks create an active area **991,** where an x-y touch position of a stylus or finger may be calculated based on detected blocked light. Adding more optical components of the same type to each block serves to enlarge the active area that is created.

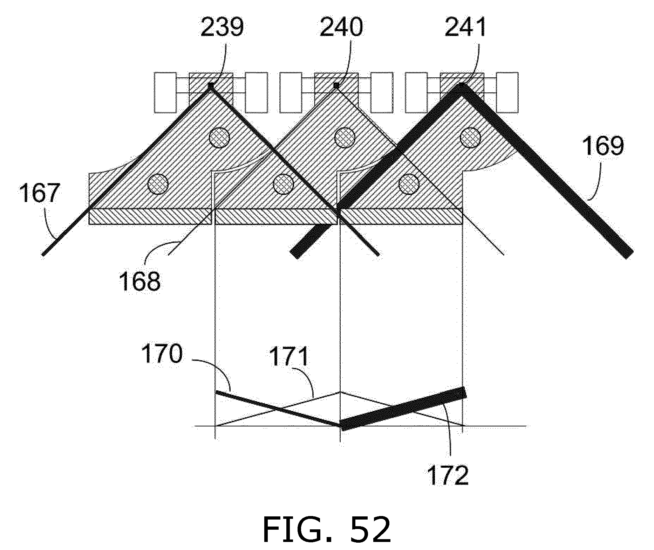

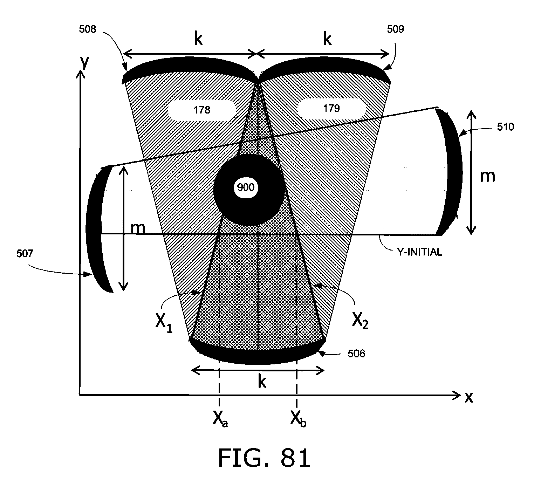

Reference is made to **FIG. 52,** which is a magnified illustration of one of the emitter blocks of **FIG. 51**, in accordance with an embodiment of the present invention. Shown in **FIG. 52** are three emitters **239, 240** and **241,** that emit respective wide beams **167, 168** and **169** from one edge of a screen, which are read as respective signals **170**, **171** and **172**. At the opposite edge of the screen, signals **170, 171** and **172** are each redirected onto at least two adjacent receivers by respective optical components. An accurate position of an object, such as a finger or stylus, touching the screen, is then determined based on values of blocked light at the receivers, as described below with respect to **FIG. 81.**

## Touch Screen System Configuration No. 6

Configuration no. 6 is an example not according to the claims that uses a reduced number of components by coupling an emitter or a receiver to one end of a long thin light guide situated along an edge of the screen. Such a light guide is described in U.S. Patent No. 7,333,095 entitled ILLUMINATION FOR OPTICAL TOUCH PANEL.

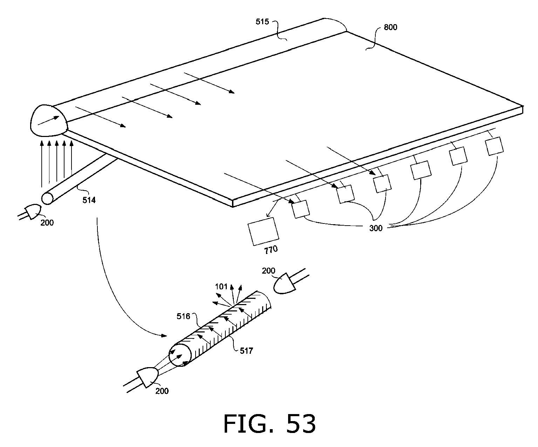

Reference is made to **FIG. 53,** which is an illustration of a touch screen having a long thin light guide **514** along a first edge of the screen, for directing light over the screen, and having an array of light receivers **300** arranged along an opposite edge of the screen for detecting the directed light, and for communicating detected light values to a calculating unit **770,** in accordance with an example not according to the claims. Light emitters **200** are coupled to both ends of light guide **514.** Light guide **514** is positioned along one edge of a touch screen **800.** Light is emitted into light guide **514** along a screen edge, and is re-directed across the screen surface by a reflector **515.** A plurality of receivers **300** is situated along the opposite edge of touch screen **800,** to enable multiple receivers to detect a touch, as described hereinabove with reference to configuration nos. 2 and 3.

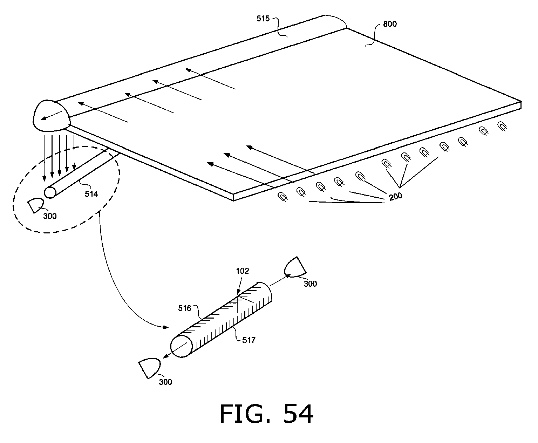

Reference is made to **FIG. 54,** which is an illustration of a touch screen having an array of light emitters **200** along a first edge of the screen for directing light beams over the screen, and having a long thin light guide **514** for receiving the directed light beams and for further directing them to light receivers **300** situated at both ends of light guide **514,** in accordance with an example not according to the claims. Detected light values at receiver **300** are communicated to a calculating unit (not shown). According to another example not according to the claims, only one light receiver **300** is coupled to one end of light guide **514.** Light guide **514** is positioned along one edge of a touch screen **800.** A plurality of emitters is situated along the opposite edge of the touch screen, to enable receiver(s) **300** to detect a touch based on serial activation of multiple emitters, as described hereinabove with reference to configuration nos. 2 and 3. Light emitted across the screen surface is re-directed by a reflector **515.** Light is received into light guide **514** along the screen edge and is directed through the length of light guide **514** onto a receiver **300.**

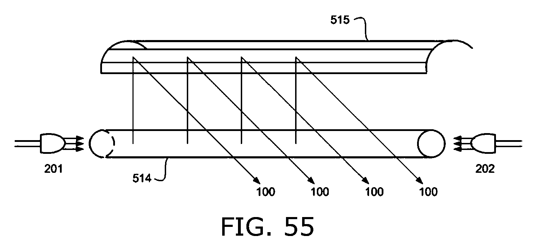

Reference is made to **FIG. 55,** which is an illustration of two light emitters, **201** and **202,** each emitter coupled to an end of a long thin light guide **514,** in accordance with an example not according to the claims. Light guide **514** is positioned along one edge of a touch screen. Light **100** is emitted into light guide **514** along a screen edge, and is re-directed across the screen surface by a reflector **515.** A plurality of receivers is situated along the opposite edge of the touch screen, to enable multiple receivers to detect a touch, as described hereinabove with reference to configuration nos. 2 and 3. Each emitter **201** and **202** is activated separately, and the receivers thus detect a touch based on blocked light from each of the two emitters. The amount of light **100** emitted at any given location along the length of the light guide decreases as a function of the distance between the location and the emitter. As such, different amounts of detected light from each emitter **201** and **202** are used to calculate the precise location of a touch, as described hereinabove with reference to configuration nos. 2 and 3.

Embodiments of this example not according to the claims improve upon the light guide of U.S. Patent No. 7,333,095, by etching or otherwise forming micro patterns **516** on the outer surface of the light guide, in order to widely refract outgoing light beams **101** of **FIG. 53,** or incoming light beams **102** of **FIG. 54,** as described hereinabove with reference to configuration nos. 2 and 3. Micro patterns **516** are a uniform substantially parallel pattern of grooves along light guide **514,** and are simpler to form than the fan pattern described hereinabove with reference to configuration no. 2. Light guide **514** also includes a light scatterer strip **517** inside of light guide **514.** Micro patterns **516** and light scatterer strip **517** appear in **FIGS. 53** and **54.**

## Touch Screen System Configuration No. 7

Configuration no. 7 enables detecting pressure on a touch screen, as applied during a touch operation. Detecting pressure enables discrimination between a light touch and a hard press, and is useful for user interfaces that associate separate actions to a touch and a press. E.g., a user may select a button or icon by touching it, and activate the function associated with the button or icon by pressing on it. Such a user interface is described in applicants' co-pending U.S. Application No. 12/486,033, entitled USER INTERFACE FOR MOBILE COMPUTER UNIT.

In some embodiments of the present invention, a touch enabled device includes a base plane, such as a PCB, a light guide frame rigidly mounted on the base plane, and a resilient member attached to the base plane to suspend or "float" a non-rigidly mounted touch screen inside the light guide frame. A press on the touch screen deflects the floating touch screen along a z-axis, exposing more of the light guide frame. A light guide frame reflector, which directs light over the screen as described hereinabove, is formed so that the exposure allows more light to traverse the screen. In this way, when a hard press on the screen occurs, many of the receivers detect a sudden increase in detected light. Moreover, detection of a hard press may be conditioned upon a touch being detected at the same time, thus preventing false detection of a hard press due to a sudden increase in ambient light. When the downward pressure is released, the resilient member returns the screen to its original position within the light guide frame.

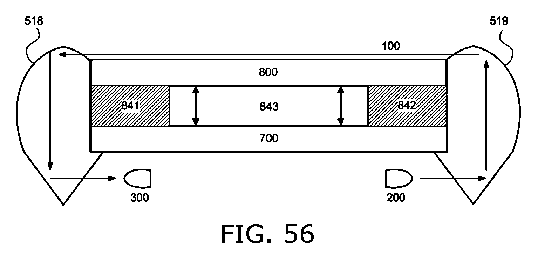

Reference is made to **FIGS. 56 - 59,** which are illustrations of a touch screen 800 that detects occurrence of a hard press, in accordance with an embodiment of the present invention. **FIG. 56** shows touch screen **800** in rest position, screen **800** being supported by resilient supporting members **841** and **842** that create a flex air gap **843,** which are mounted on a printed circuit board **700. FIG. 56** shows two light guides, **518** and **519**, one on either side of screen **800**, for directing light **100** from an emitter **200** over screen **800** to a receiver **300**. Only a small upper portion of each light guide **518** and **519** extends above screen **800**. Receiver **300** communicates detected light intensities to a calculating unit **770**.

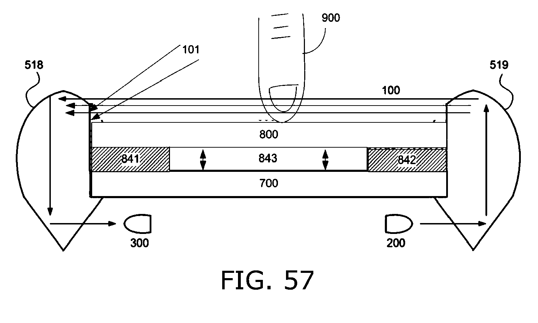

**FIG. 57** shows a finger **900** pressing down on the screen, causing members **841** and **842** to compress and to narrow flex air gap **843**. As a result, a larger portion of light guides **518** and **519** are exposed above screen **800,** thus allowing (a) more light **100** from emitter **200** to traverse screen **800** and be detected by receiver **300,** and (b) more ambient light **101** to reach receiver **300**. In various embodiments, either or both of these increases in detected light are used to indicate a hard press. In other embodiments, the amount of downward pressure applied is determined based on the amount of additional detected light, thus enabling discrimination between more hard and less hard touches.

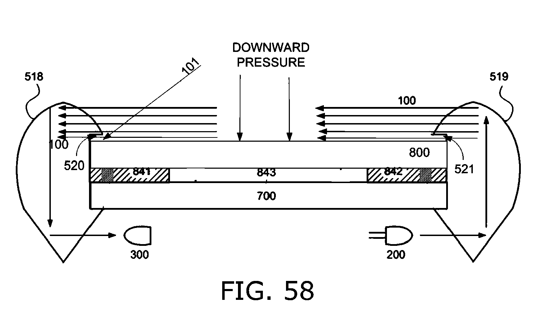

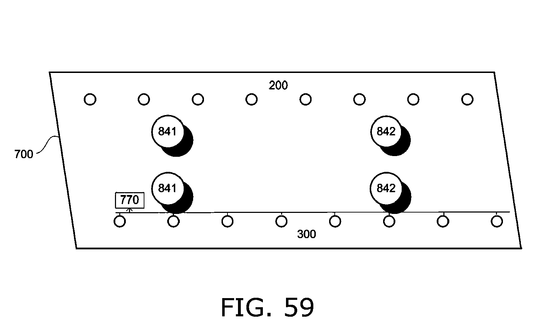

In some embodiments, the light guide frame includes protruding lips **520** and **521,** shown in **FIG. 58,** that extend over the edges of screen **800,** to counter balance the upward force of resilient members **841** and **842** when no downward pressure is applied to screen **800**. Resilient members **841** and **842** may comprise inter alia a flexible mounting material, a torsion spring, an elastic polymer body, or a hydraulic suspension system. **FIG. 59** shows emitters **200,** receivers **300** coupled with calculating unit **770,** and resilient members **841** and **842** arranged on a single PCB **700.**

In other embodiments, the touch screen is not displaceable relative to the frame. However, the screen flexes or bends somewhat in response to a hard press. The bending of the screen causes a sudden increase in detected light in many of the receivers, indicating a hard press on the screen. As indicated hereinabove, detection of a hard press may be conditioned upon a touch also being detected at the same time, thus preventing false detection of a hard press in response to trauma to the device.

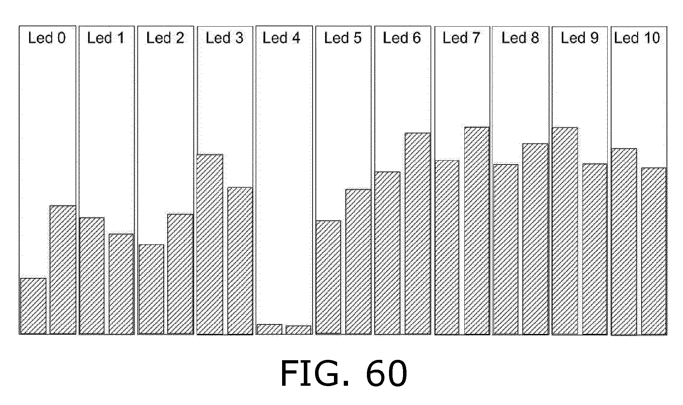

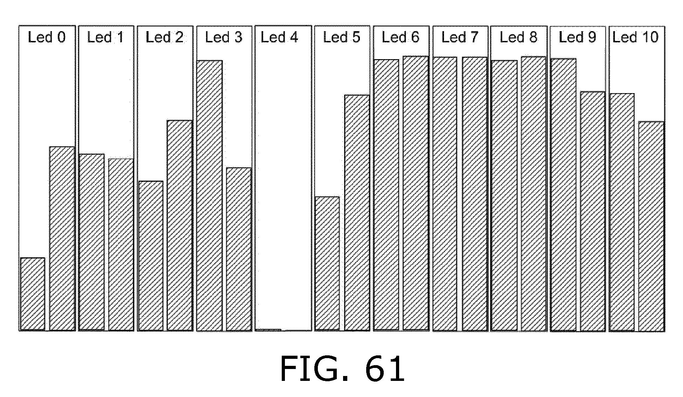

Reference is made to **FIGS. 60** and **61,** which are bar charts showing increase in light detected, when pressure is applied to a rigidly mounted 7-inch LCD screen, in accordance with an embodiment of the present invention. The bar charts show the amount of light detected from each emitter along one edge of the screen when a soft touch occurs (**FIG. 60**), and when a hard touch occurs (**FIG. 61**). The light emitters and light receivers are shift-aligned, so that light from each emitter is detected by two receivers. As such, two bars are shown for each emitter, indicating the light detected by each of the two receivers. Both bars indicate that a touch is detected at receivers opposite LED 4, where no light is detected. The bar charts show that more light is detected from neighboring emitters in the case of a hard touch, than in the case of a soft touch.

## Touch Screen System Configuration No. 8

Configuration no. 8 is an example not according to the claims that provides a touch screen with at least one camera positioned under the screen surface, to capture an image of the screen surface and of a pointer, or a plurality of pointers, touching the screen surface. In some embodiments of this example, the screen pixels include light sensors, each of which generates a pixel of an image of the underside of the screen glass, the image being referred to herein as the "screen glass image".

As described hereinbelow, methods according to embodiments of the present invention determine precise touch coordinates using spatial and temporal filters. Application of these methods to configuration no. 8 yields sub-pixel precision for touch coordinates.

Pixels in the screen glass image at the center of a touch location are generally completely blocked; i.e., the level of light detected at each such pixel is below a designated threshold, indicating that the pixel is occluded by a touch object. Pixels in the screen glass image along the edges of a touch location are generally only partially blocked; i.e., the level of light detected at each such pixel is above the designated threshold, indicating that the pixel is only partially occluded by the touch object.

A calculating unit that receives the screen glass image data assigns a relative weight to each pixel coordinate, based on a touch detection intensity associated with that pixel, as indicated by the pixel's value. The calculating unit further interpolates the pixel coordinates, based on their associated weights, to determine a touch coordinate. In some embodiments, the calculating unit calculates a touch area having a perimeter, wherein the edges of the touch area are calculated on a sub-pixel level based on the above interpolations. The temporal filters described hereinbelow are applied inter alia when a series of connected touches are concatenated into a glide movement over a time duration.

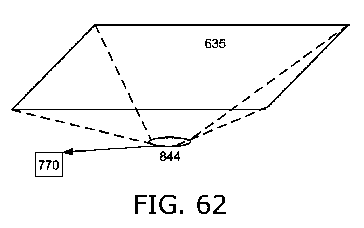

Reference is made to **FIG. 62,** which is a simplified diagram of an image sensor **844** positioned beneath a screen glass display **635,** to capture an image of the underside of the screen glass and of touches made thereon, in accordance with an example not according to the claims. The captured image data is transmitted to a calculating unit **770** for analysis.

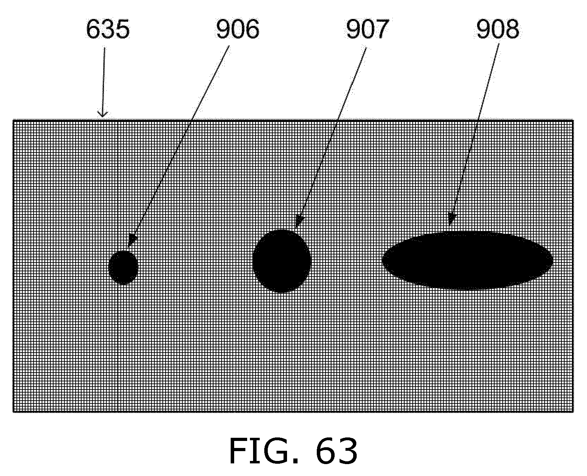

Reference is made to **FIG. 63,** which is a simplified diagram of a display **635** divided into pixels, and three touch detections **906 - 908,** in accordance with an example not according to the claims. It is noted that edges of each of the touch detections cover respective portions of pixels. The weighted pixel coordinate interpolations described hereinabove are used to identify touch coordinates, such as coordinates for touches **906** and **907,** and the contours of touch areas, such as the contours of areas **907** and **908.** In some embodiments of the present example, the interpolations include fully occluded pixels. In other embodiments of the present example, the interpolations include only partially occluded pixels.

## Touch Screen System Configuration No. 9

Configuration no. 9 is an example not according to the claims that provides a touch screen with means to determine a three-dimensional position of a pointer relative to the touch screen. In this configuration, a low cost touch screen uses cameras to determine depth information. One or more cameras are mounted on a side of the touch screen, so as to capture a mirrored image of an active touch area, and the mirrored image is processed to determine a height of the pointer above the touch screen. The present invention may be embodied on an arbitrary size touch screen having a glossy surface.

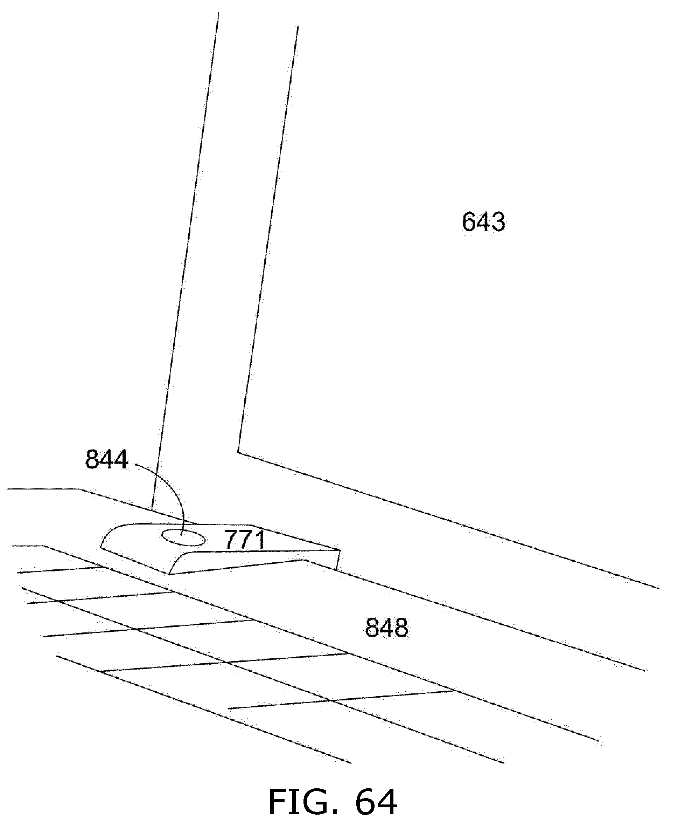

Reference is made to **FIG. 64,** which is a simplified diagram of a camera sensor **844** positioned on a hinge **771** of a laptop computer **848,** and pointing at a screen **643,** in accordance with an example not according to the claims.

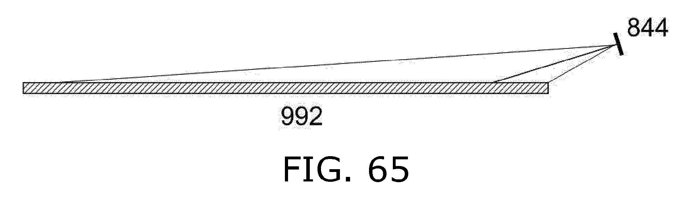

Reference is made to **FIG. 65,** which is a simplified side view diagram showing a camera **844** viewing a touch area **992,** in accordance with an example not according to the claims.

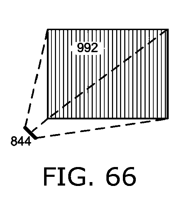

Reference is made to **FIG. 66,** which is a simplified top view diagram showing a camera **844** viewing a touch area **992,** in accordance with an example not according to the claims. The broken lines in **FIG. 66** indicate the volume of space captured by camera **844.**

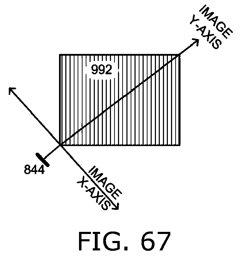

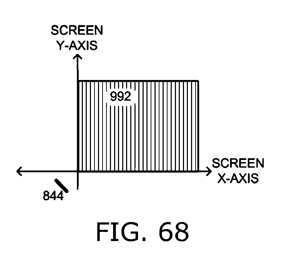

Reference is made to **FIG. 67,** which is a simplified diagram of a camera **844** viewing a touch area **992,** and two image axes, an image x-axis and an image y-axis, for locating a touch pointer based on an image captured by camera **844,** in accordance with an example not according to the claims. Reference is also made to **FIG. 68,** which is a simplified diagram of a camera **844** viewing a touch area **992,** and two screen axes, a screen x-axis and a screen y-axis, for locating a touch pointer based on an image captured by camera **844,** in accordance with an example not according to the claims. The screen surface along the line of vision captured by camera **844** is oriented along the image y-axis. The image x-axis is perpendicular to the image y-axis along the plane of the touch screen surface. In order to distinguish these axes from the screen axes that run parallel to the screen edges, the former axes are referred to herein as "image axes", and the latter axes are referred to herein as "screen axes". Touch coordinates relative to the image axes may be transformed to screen axis coordinates.

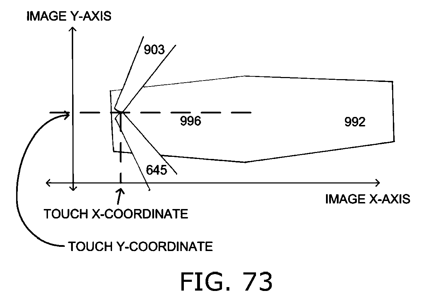

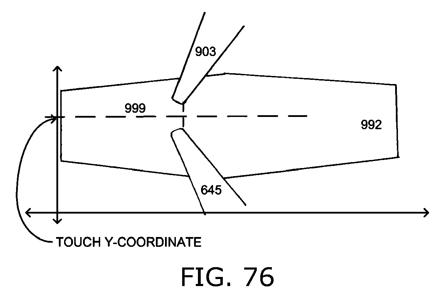

The image captured by camera **844** generally includes both a pointer, and a reflection of the pointer on the surface of the touch screen. Based on the locations of the pointer and its reflection within the captured image, the pointer position may be determined when the pointer is positioned on the screen, or even above the screen. When the pointer touches the screen, the pointer and its reflection in the captured image are tangent to one another, as illustrated in **FIGS. 73 - 75.** When the pointer is above the screen, the pointer and its reflection in the captured image are separated apart from one another, as illustrated in **FIG. 76.**

It will be appreciated by those skilled in the art that the captured image may be analyzed relative to an x-axis along the bottom edge of the image, and a y-axis in the screen surface along the camera's line of vision. When the pointer is touching the screen, the pointer's x- and y-coordinates may be determined by projecting the position of a pointer in the captured image along the x- and y-axes.

When the pointer is positioned above the screen, not touching the screen, the pointer's x-coordinate may be determined as above; namely, by projecting the position of the pointer in the captured image along the x-axis. To determine, the pointer's y-coordinate an appropriate location is selected along the line joining the positions of the pointer and the reflected pointer in the captured image, and the position of the location is projected along the y-axis. In some instances, the appropriate location is the mid-point of the line joining the positions of the pointer and the reflected pointer. In other instances, the appropriate location is based upon the azimuthal angle at which the camera is orientated relative to the screen surface.

It will be appreciated by those skilled in the art that the height of the pointer above the screen surface may be determined based upon the distance between the pointer and the pointer's reflection in the captured image.

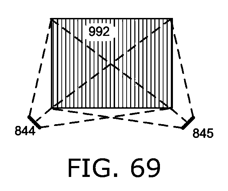

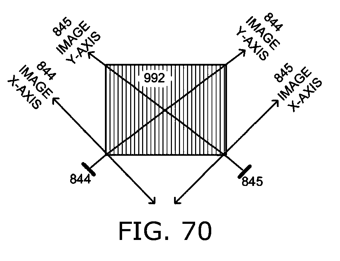

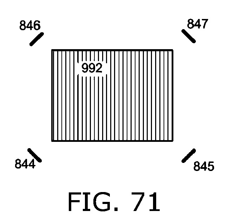

Use of multiple cameras provides additional information, such as multi-touch information and stylus information that may be obscured by a hand. Reference is made to **FIGS. 69** and **70,** which are simplified diagrams of two cameras, **844** and **845,** each capturing a touch area **992** from different angles, in accordance with an example not according to the claims. Each camera has a respective set of image axes, as shown in **FIG. 70.** Reference is made to **FIG. 71,** which is a simplified diagram of four cameras, **844 - 847,** each capturing a touch area **992** from different angles, in accordance with an example not according to the claims

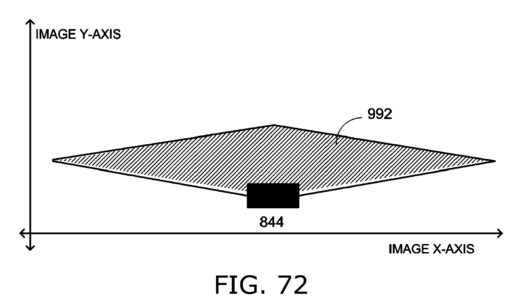

Reference is made to **FIG. 72,** which is a simplified diagram, from a camera viewpoint, of a camera **844** viewing a complete touch area **992,** in accordance with an example not according to the claims. Shown in **FIG. 72** are the image x- and y- axes, for images captured by camera **844.**

Reference is made to **FIG. 73,** which is a simplified diagram of a portion of a touch area **992** showing a stylus **903** and a mirror image **645** of the stylus, which are tangent to one another, in accordance with an example not according to the claims. The image x- and y-coordinates of stylus **903** are determined by projecting the position of stylus **903** onto the image x- and y-axes. To assist with the projection, a centerline **996** between stylus **903** and its mirror image **645** is used.

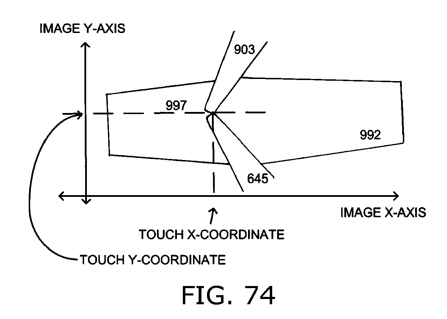

Reference is made to **FIG. 74,** which is a simplified diagram showing a stylus **903** and a mirror image **645** of the stylus, moved closer to the center of a touch area **992** vis-à-vis **FIG. 73,** in accordance with an example not according to the claims. Again, the image x- and y-coordinates of stylus **903** are determined by projecting the position of stylus **903** onto the image x- and y-axes. To assist with the projection, a centerline **997** between stylus **903** and its mirror image **645** is used.

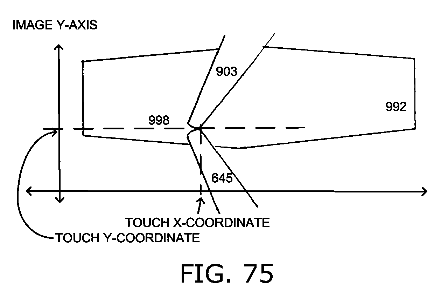

Reference is made to **FIG. 75,** which is a simplified diagram showing a stylus **903** and a mirror image **645** of the stylus, moved closer to the bottom of a touch area **992** vis-à-vis **FIG. 73,** in accordance with an example not according to the claims. Again, the image x- and y-coordinates of stylus **903** are determined by projecting the position of stylus **903** onto the image x- and y-axes. To assist with the projection, a centerline **998** between stylus **903** and its mirror image **645** is used.

Reference is made to **FIG. 76,** which is a simplified diagram showing a stylus **903** and a mirror image **645** of the stylus, separated apart from one another, in accordance with an example not according to the claims. The distance between stylus **903** and mirror image **645** may be used to determine the height of stylus **903** above touch area **992.** A centerline **999** between stylus **903** and mirror image **645** is used as an assist to determine the image y-coordinate of stylus **903.**

In accordance with an example not according to the claims, stylus **903** in **FIGS. 73 - 76** is a blunt-edged stylus. A blunt-edged stylus is of advantage, as its relatively large head is easy to detect by image processing. A blunt-edged stylus is also of advantage in configurations nos. 2 - 6, as its relatively large head blocks more light than does a sharp-pointed stylus.

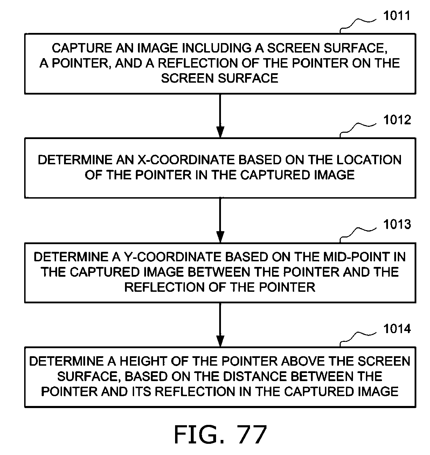

Reference is made to **FIG. 77,** which is a simplified flowchart of a method for determining a three-dimensional pointer location, in accordance with an example not according to the claims. At operation **1011,** an image of a screen surface is captured. The image includes a pointer, and a reflection of the pointer on the screen surface, as described hereinabove with reference to **FIGS. 73 - 76.** At operation **1012,** the pointer location along a first screen axis is determined, corresponding to the location of the pointer in the image along that axis, as illustrated by the x-coordinates shown in **FIGS. 73 - 75** that correspond to the locations of the stylus in the respective images. At operation **1013** the pointer location along a second screen axis is determined, corresponding to a line running through the mid-point between the locations of the pointer and its reflection, as illustrated by centerlines **996 - 999** in **FIGS. 73 - 76.** At operation **1014,** the height of the pointer above the screen is determined, based on the distance between the pointer and its reflection in the captured image.

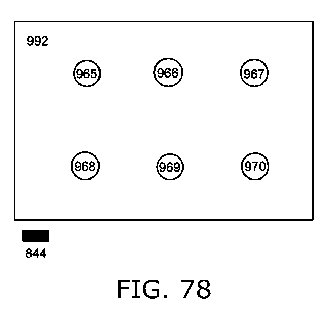

When the camera position is known or fixed, relative to the screen, as is the case inter alia when the screen is manufactured with the camera rigidly mounted, the image-to-screen transformation, from image coordinates to screen coordinates, may be determined. When the position of the camera relative to the screen is unknown, such as is the case inter alia if the camera is mounted manually by a user, then in order to determine the image-to-screen transformation a procedure to determine camera orientation is required. One such procedure is to display a series of touch icons on the screen at known screen coordinates. Reference is made to **FIG. 78,** which is a simplified diagram of a touch area **992** that displays six touch icons **965 - 970,** used for determining a camera orientation, in accordance with an example not according to the claims. Camera **844** is aimed at the touch area to capture touch events. A user is instructed to touch the various icons. In some embodiments of this example, each icon is displayed individually one at a time. When the user touches an icon, the image coordinates of the touch are determined, and matched with the known screen coordinates of the icon. Successive matched pairs of image coordinates and screen coordinates are used to determine the image-to-screen transformation. In an example not according to the claims, the event that a user touches an icon is recognized from a captured image when the pointer is tangent to its reflection, as described hereinabove.

## Operation of Configurations Nos. 2 - 8

The following discussion relates to methods of operation for arrangements of the optical elements shown in configurations nos. 2 - 8, around a touch screen, to achieve accurate touch detection. These methods are of advantage for pen and stylus support, which have fine touch points. In particular, these methods are not required for single touch finger support. As such, for systems designed with only finger support, these methods may be applied without micro-lenses being etched onto primary lenses. In some cases, such as multi-touch detection, these methods apply to finger touch as well.

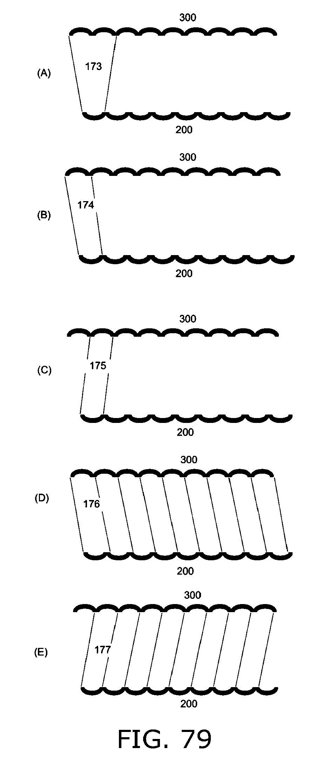

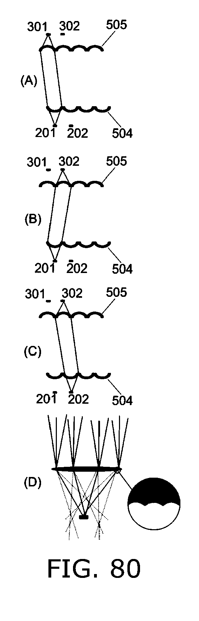

Reference is made to **FIGS. 79** and **80,** which are illustrations of opposing rows of emitter lenses and receiver lenses in a touch screen system, in accordance with an embodiment of the present invention. Positioned behind each emitter and receiver lens is a corresponding respective light emitter **200** or light receiver **300**. As shown in **FIG. 79,** each emitter **200** is positioned opposite two receivers **300** that detect light beams emitted by the emitter. Similarly, each receiver **300** is positioned opposite two emitters **200,** and receives light beams emitted from both emitters.

FIG. 79 shows **(A)** a single, full beam **173** from an emitter **200** that spans two receivers **300; (B)** the portion of the full beam, designated **174,** detected by the left one of the two receivers **300; (C)** the portion of the full beam, designated **175,** detected by the right one of the two receivers **300; (D)** multiple beams **176,** for multiple emitters **200,** covering the touch screen, and **(E)** multiple beams **177,** for multiple emitters **200,** covering the touch screen. Generally, each emitter **200** is activated alone. Precision touch detection is described hereinbelow, wherein a touch point is detected by multiple beams. It will be appreciated from **(D)** and **(E)** that points on the screen are detected by at least one beam **176** and one beam **177.**

To conserve power, when the touch screen is idle only one set of beams, namely, beams **176** or beams **177,** are scanned in a scanning sweep, and only for the axis with the smallest number of emitters **200**. The scanning toggles between beams **176** and beams **177,** and thus two scanning sweeps along the axis activate every emitter-receiver pair along the axis. The other axis, with the larger number of emitters, is only scanned when either a touch is present, or when a signal differs from its reference value by more than an expected noise level, or when an update of reference values for either axis is being performed. Reference values are described in detail hereinbelow.

**FIG. 80** shows **(A)** an emitter **201** sending light to a receiver **301** at an angle of 15o to the left; **(B)** emitter **201** sending light to a receiver **302** at an angle of 15o to the right; **(C)** emitter **202** sending light to receiver **302** at an angle of 15o to the left; and **(D)** a microstructure refracting incoming light. The emitter lenses and receiver lenses shown in **FIG. 80** are equipped with the microstructure shown in **(D),** in order (i) to emit light in both left and right directions from multiple locations along the emitter lens surface, and (ii) to ensure that light received at any angle of incidence at any location along the receiver lens surface is detected by the receiver.

Reference is made to **FIG. 81,** which is a simplified illustration of a technique for detecting a touch location, by a plurality of emitter-receiver pairs in a touch screen system, in accordance with an embodiment of the present invention. Shown in **FIG. 81** is an optical emitter lens **506** of width **k,** positioned opposite two optical receiver lenses **508** and **509,** each of width **k,** on a touch screen. A pointer, **900,** touching the screen blocks a portion of the light beam emitted from optical emitter lens **506**. Optical emitter lens **506** emits overlapping beams that cover both optical receiver lenses **508** and **509**. The spread angle of the wide beam depends on the screen dimensions, and on the lens width, **k,** along the x-axis. Another optical emitter lens **507** is also shown, shifted by half an element width, **m,** below an optical receiver lens **510**.

Similarly, in a system such as the system shown in **FIG. 51** having blocks **500** and **501** of optical emitter elements positioned opposite blocks **502** and **503** of optical receiver elements, the position of each block of optical receiver elements may be shifted by half an element distance, in order that the center of an optical emitter element be aligned with the border between two optical receiver elements.

In accordance with an embodiment of the present invention, at least one surface of optical emitter lens **506** is textured with a plurality of ridges. Each ridge spreads a beam of light that spans the two opposing receiver lenses **508** and **509**. As such, light from each of many points along the surface of optical emitter lens **506** reaches both opposing receiver lenses **508** and **509,** and the light beams detected by adjacent receivers overlap. In configuration no. 2 these ridges form a feather pattern, and in configuration no. 3 these ridges form a tubular pattern.

In accordance with an embodiment of the present invention, the ridges form micro-lenses, each having a pitch of roughly 0.2 - 0.5 mm, depending on the touch screen configuration. In the case of a feather pattern, the ridges form a fan, and their pitch narrows as the ridges progress inward and become closer together. In the case of a tubular pattern, the pitch of each micro-lens remains constant along the length of the micro-lens.

At least one surface of each receiver lens **508** and **509** is similarly textured, in order that at least a portion of light arriving at each of many points along the receiver lens surface, arrive at the receiver photo diode.

In accordance with an embodiment of the present invention, the output x and y coordinates are filtered temporally and spatially. The following discussion relates to determination of the x-coordinate, and it will be appreciated by those skilled in the art that the same method applies to determination of the y-coordinate.

Configurations nos. 2 and 3 show that a touch location is detected by at least two emitter-receiver pairs. **FIG. 81** shows two such emitter-receiver pairs, **506-508** and **506-509,** detecting a touch location of object **900** along the x-axis. In **FIG. 81,** beams **506-508** are denoted by beam **178,** and beams **506-509** are denoted by beam **179. FIG. 81** shows three detection areas; namely,(i) the screen area detected by emitter-receiver pair **506-508,** drawn as a wedge filled with right-sloping lines, (ii) the screen area detected by emitter-receiver **506-509,** drawn as a wedge with left-sloping lines, and (iii) the screen area detected by both emitter-receiver pairs **506-508** and **506-509,** drawn as a wedge with a crosshatch pattern. The left and right borders of this third screen area are shown as lines $X_1$ and $X_2$, respectively.

In order to determine the x-coordinate $X_p$ of object **900**'s touch location ($X_p$, $Y_p$), an initial y-coordinate, $Y_{initial}$, is determined corresponding to the location along the y-axis of the emitter-receiver pair having the maximum touch detection signal among all emitter-receiver pairs along the y-axis. In **FIG. 81,** this emitter-receive pair is **507-510**. The lines designated $X_1$ and $X_2$ in **FIG. 81** are then traversed until they intersect the line $y = Y_{initial}$ at locations ($X_a$, $Y_{initial}$)

and $(X_b, Y_{initial})$. Coordinates $X_a$ and $X_b$ are shown in **FIG. 81.** The x-coordinate of object **900** is then determined using the weighted average

$$X_P = (W_a X_a + W_b X_b) / (W_a + W_b) ,\qquad(1)$$

where the weights $W_a$ and $W_b$ are normalized signal differences for beam **178** and beam **179,** respectively. The signal difference used is the difference between a baseline, or expected, light value and the actual detected light value. Such difference indicates that an object is touching the screen, blocking a portion of the expected light. Calibration and normalization of the weights is described hereinbelow. A similar weighted average is used to determine the y-coordinate $Y_P$.

If the pointer **900** is detected by more than two emitter-receiver pairs, then the above weighted average is generalized to

$$X_P = \Sigma(W_n X_n) / (\Sigma W_n) ,\qquad(2)$$

where the weights $W_n$ are normalized signal differences, and the $X_n$ are weight positions.

In one embodiment of the present invention, where the pointer **900** is a small object, the largest signal difference is used in conjunction with the two closest signals to calculate the position. This compensates for the fact that the signal differences for small objects are small, and noise thus becomes a dominant error factor. Use of the two closest signals reduces error due to noise. In another embodiment of the present invention, only the two largest signal differences are used.

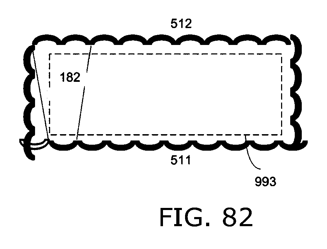

Reference is made to **FIG. 82,** which is an illustration of a light guide frame for the configuration of **FIGS. 79** and **80,** in accordance with an embodiment of the present invention. Shown in **FIG. 82** are four edges of a light guide frame, with optical emitter lenses **511** and optical receiver lenses **512.** It is noted that the inner edges of the frame are not completely covered by beams **182.** As such, in some embodiments of the present invention only an inner touch area **993,** indicated by the dashed rectangle, is used.

To reduce error due to signal noise, the final coordinate is determined as the output of a temporal filter, using the spatially filtered current coordinate value, determined as above, and a previous coordinate value. The higher the filter weight given to the current x-coordinate, the closer the output will be to that value, and the less will be the impact of the filter. Generally, use of substantially equal weights for both coordinate values results in a strong filter. In one embodiment of the present invention, the temporal filter is a low-pass filter, but other filters are also contemplated by the present invention. In accordance with an embodiment of the present invention, different pre-designated filter weight coefficients may be used in different cases. In an alternative embodiment, the filter weight coefficients are calculated as needed.

Choice of appropriate filter coefficients is based on scanning frequency, the speed at which a touch object is moving across the screen, whether the object motion is along a straight line or not, and the size of the touch object.

Generally, the higher the scanning frequency, the nearer the current coordinate value is to the previous coordinate value, and a stronger filter is used. Scanning frequency is used to estimate the speed and direction of movement of an object. Based on the scanning frequency, a threshold distance is assigned to two input values, the threshold indicating fast movement. If the difference between the current and previous coordinate values is greater than the threshold distance, a weaker filter is used so that the output coordinate not lag considerably behind the actual touch location. It has been found by experiment that the filter

$$\text{output\_val} = 1/10 * \text{previous\_val} + 9/10 * \text{current\_val}\qquad(3)$$

provides good results in this case. In addition, the lag value, described hereinbelow, is reset to equal the output value in this case.

If the difference between the current and previous coordinate values is less than the threshold distance, then a lag value is determined. The lag value indicates speed and direction along an axis. In has been found by experiment that the value

$$\text{lag} = 5/6 * \text{lag} + 1/6 * \text{current\_val}\qquad(4)$$

provides good results in this case. The filter weight coefficients are selected based on the difference between the lag value and the current coordinate value. Generally, the greater this difference, which indicates either fast motion or sudden change in direction, the weaker the filter.

For example, if the touch object is stationary, the lag value eventually is approximately equal to the current coordinate value. In such case, signal noise may cause small differences in the spatially calculated touch position, which in turn may cause a disturbing jitter effect; i.e., the touch screen would show the object jittering. Use of a strong temporal filter substantially dampens such jittering.

If the touch object is moving fast or makes a sudden change in direction, a strong temporal filter may create a perceptible lag between the actual touch location and the displayed touch location. In the case of a person writing with a stylus, the written line may lag behind the stylus. In such cases, use of a weak temporal filter reduces such lagging.

When the touch object covers a relatively large screen area, such as a finger or other blunt object touching the screen, the lag between the actual finger motion and the displayed trace of the motion is less perceptible, because the finger covers the area of the lag. In such case, a different temporal filter is used.

The type of object, finger vs. stylus, being used may be inferred by knowing expected user behavior; e.g., a user interface intended for finger touch assumes a finger being used. The type of object may also be inferred by the shadowed area created by the object. The size of the touch area as determined based on shadowed emitter signals, is therefore also a factor used in selecting temporal filter weight coefficients.

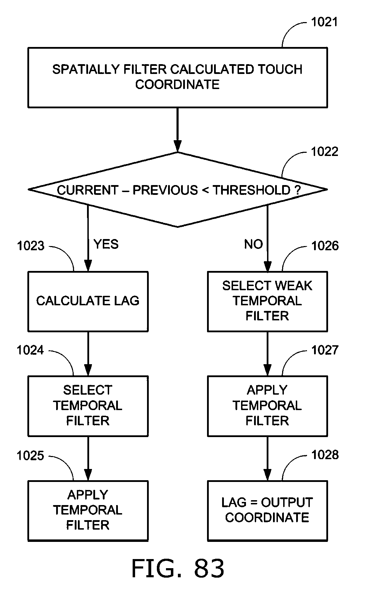

Reference is made to **FIG. 83,** which is a simplified flowchart of a method for touch detection for an optical touch screen, in accordance with an embodiment of the present invention. At operation **1021,** a current coordinate value is received, based on a spatial filter that processes signals from multiple emitter-receiver pairs. A threshold distance is provided, based on a scan frequency. At operation **1022,** the difference between the current coordinate value and a previous coordinate value is compared to the threshold distance. If the difference is less than or equal to the threshold distance, then at operation **1023** a new lag value is calculated, as in **Eq. (4).** At operation **1024** temporal filter weight coefficients are determined based on the difference between the current coordinate value and the lag value. At operation **1025,** the temporal filter is applied to calculate an output coordinate value, as in **Eq. (3).**

If, at operation **1022,** the difference between the current coordinate value and previous coordinate value is greater than the threshold distance, then weak filter weight coefficients are selected at operation **1026.** At operation **1027,** the temporal filter is applied to calculate an output coordinate value, as in **Eq. (3).** At operation **1028** the lag value is set to the output coordinate value.

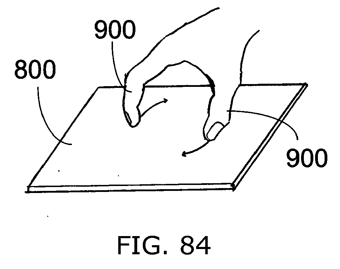

Embodiments of the present invention provide a method and apparatus for detecting a multi-touch operation whereby two touches occur simultaneously at two corners of a touch screen. An example of such a multi-touch is a rotation gesture, shown in **FIGS. 84 - 86,** whereby a user places two fingers **900** on a screen **800** and turns them around an axis. As pointed out hereinabove with reference to **FIGS. 8** and **9,** it is difficult for a light-based system to discriminate between a top-left & bottom-right touch vs. a bottom-left & top-right touch. Use of shift-aligned emitters and receivers enables such discrimination, as described hereinbelow.

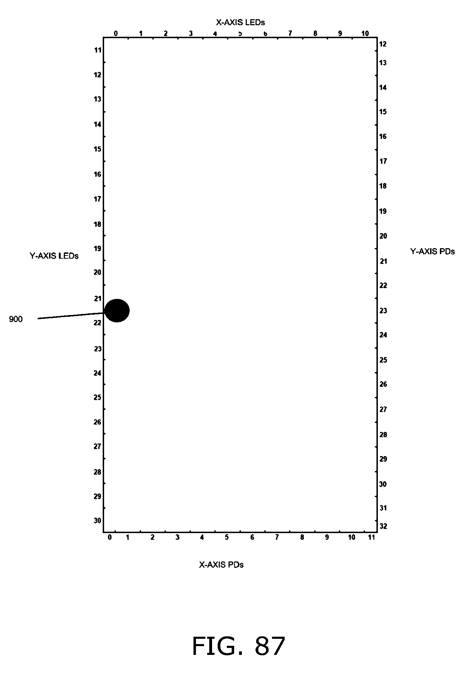

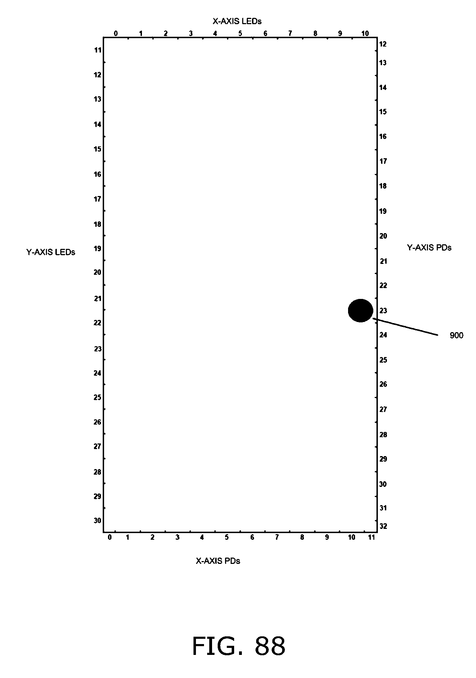

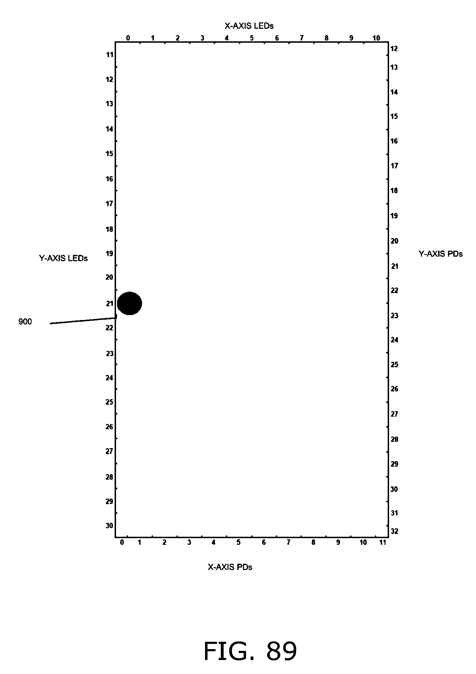

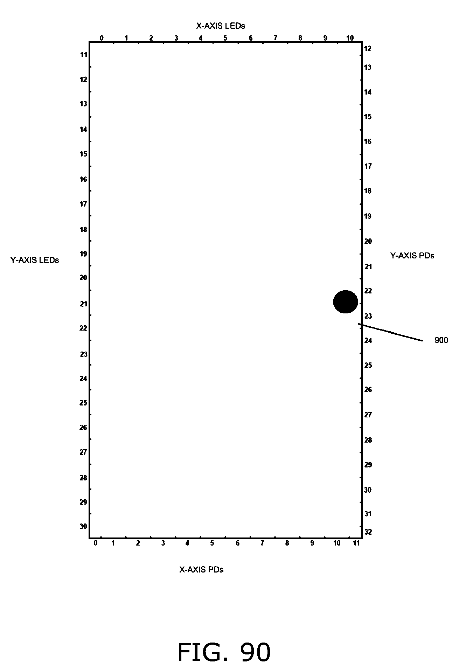

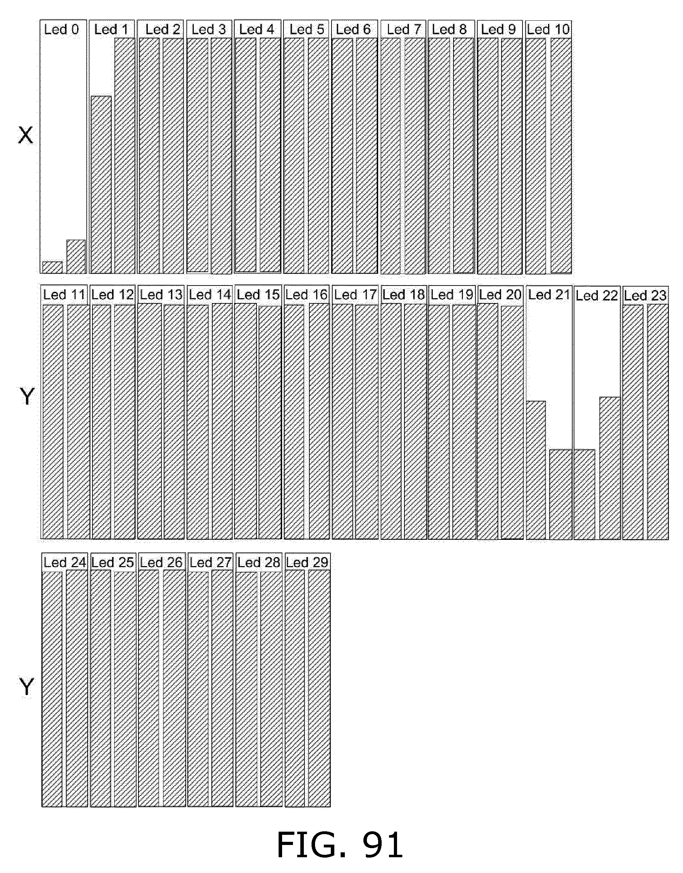

In accordance with an embodiment of the present invention, data from receivers along a first axis is used to determine a touch location along two axes. Reference is made to **FIGS. 87 - 90,** which are illustrations of a finger **900** touch event at various locations on a touch screen, and corresponding **FIGS. 91 - 94,** which are respective bar charts of light saturation during the touch events, in accordance with an embodiment of the present invention. **FIG. 87** shows a touch located near a row of emitters, between two emitters. **FIG. 88** shows a touch located near a row of receivers, blocking a receiver. **FIG. 89** shows a touch located near a row of emitters, blocking an emitter. **FIG. 90** shows a touch located near a row of receivers, between two receivers.

**FIGS. 91 - 94** each include two bar charts; namely, an upper chart showing light saturation at receivers along an x-axis, and a lower chart showing light saturation at receivers along a y-axis. Each row of receivers is shift-aligned with an opposite row of emitters. As such, each emitter is detected by two receivers. Correspondingly, **FIGS. 91 - 94** show two bars for each emitter, one bar per receiver.

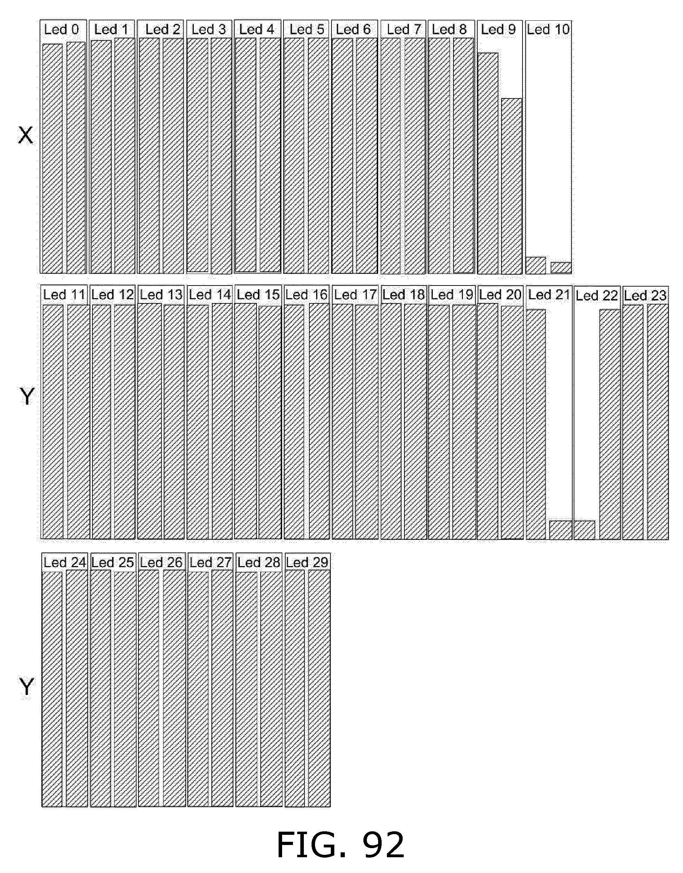

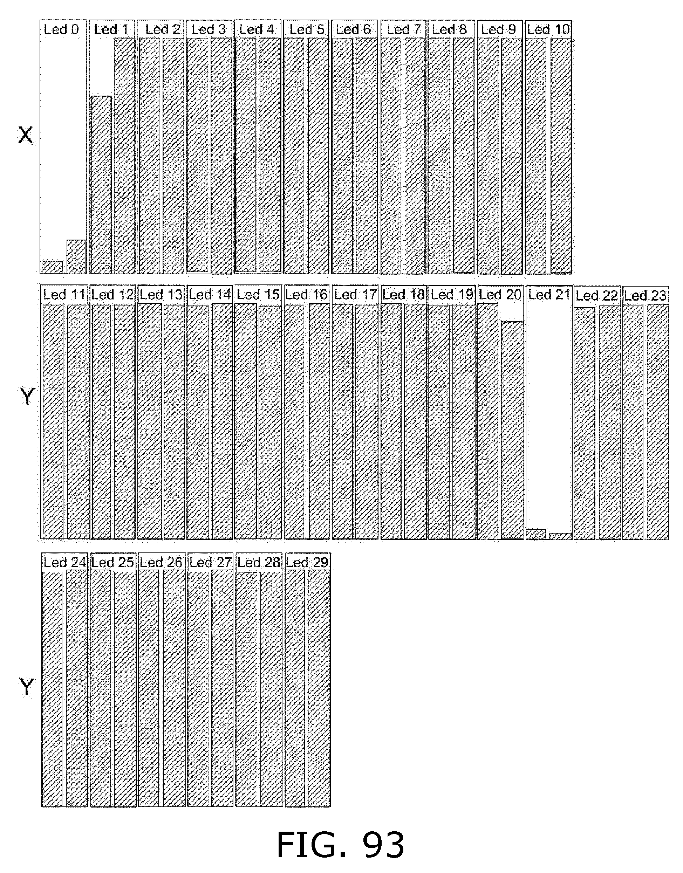

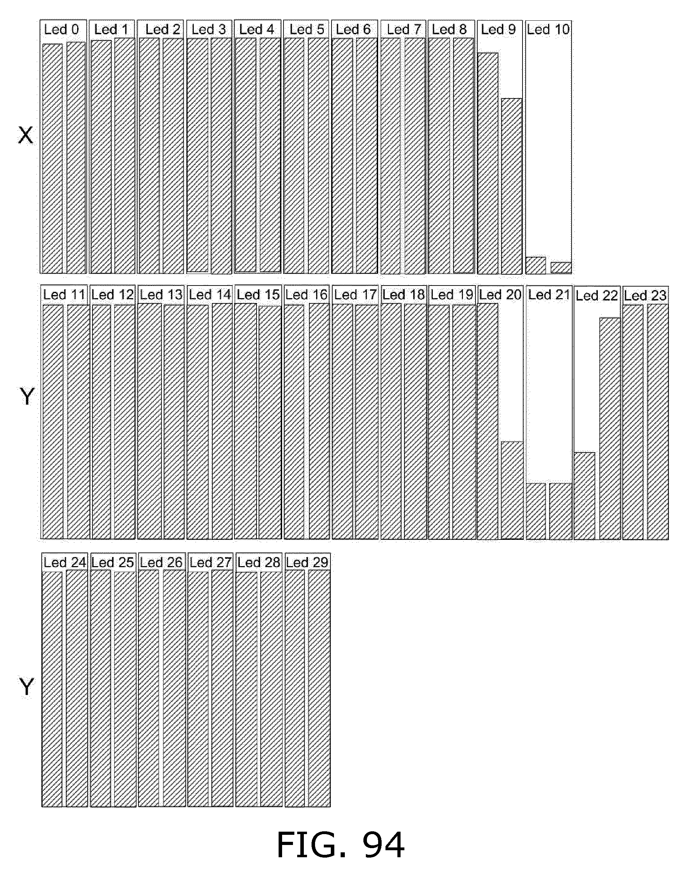

**FIGS. 91 - 94** exhibit four distinct detection patterns. **FIG. 91** shows an absence of light detected primarily by one receiver from its two respective emitters. The absence of light is moderate. **FIG. 92** shows an absence of light detected primarily by one receiver from its two respective emitters. The absence of light is large. **FIG. 93** shows two adjacent receivers detecting a large absence of expected light from the blocked emitter. Both receivers detect some light from neighboring elements. **FIG. 94** shows two adjacent receivers detecting a moderate absence of expected light from the blocked emitter. Both receivers detect some light from neighboring emitters. **TABLE I** summarizes these different patterns.

| TABLE I: Patterns of touch detection based on proximity to and alignment with emitters and receivers |
| --- |
|  |

(continued)

| Pattern No. FIGS. | Touch Location | No. of Receivers Detecting the Touch | Amount of Expected Light that is Blocked |
|---|---|---|---|
| 1 FIG. 87 FIG. 91 | Near a row of emitters, between two emitters | 1 | Moderate |
| 2 FIG. 88 FIG. 92 | Near a row of receivers, blocking a receiver | 1 | Large |
| 3 FIG. 89 FIG. 93 | Near a row of emitters, blocking an emitter | 2 | Large |
| 4 FIG. 90 FIG. 94 | Near a row of receivers, between two receivers | 2 | Moderate |

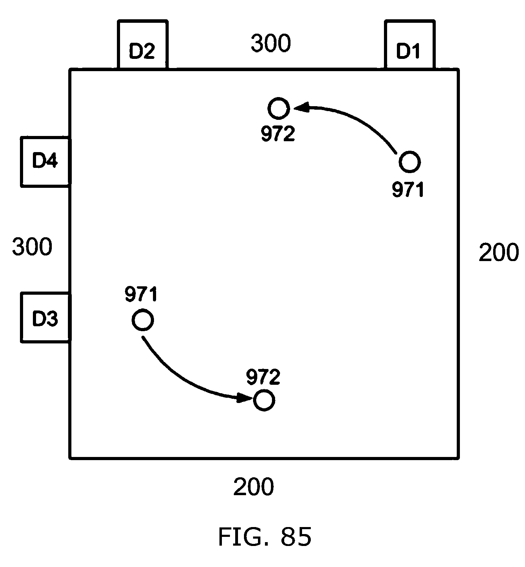

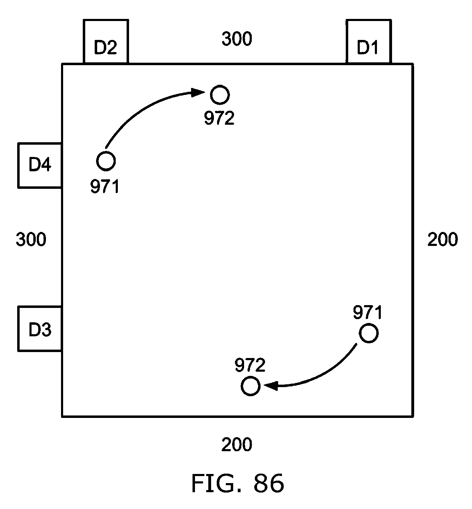

According to an embodiment of the present invention, determination of location of a multi-touch is based on the patterns indicated in **TABLE I.** Thus, referring back to **FIG. 85,** four detection points are shown along two rows of receivers. Detections **D1 - D4** detect touch points **971** in upper-right & lower-left corners of the screen. Based on whether the detection pattern of each point is of type 1 or 3, or of type 2 or 4, the detection patterns determine whether the corresponding touch is closer to the emitters, or closer to the receivers. Each touch has two independent indicators; namely, the X-axis detectors, and the Y-axis detectors. Thus, for detection points **971** in **FIG. 85,** detections **D1** and **D3** are of types 2 or 4, and detections **D2** and **D4** are of types 1 or 3. In distinction, for detection points **971** in **FIG. 86,** detections **D2** and **D4** are of types 2 or 4, and detections **D1** and **D3** are of types 1 or 3.

In addition to evaluation of detection points independently, the various detection patterns may be ranked, to determine which touch point is closer to the emitters or to the receivers.

Moreover, when a rotate gesture is performed, from touch points **971** to touch points **972,** movement of detections discriminates whether the gesture glides away from the emitters and toward the receivers, or vice versa. In particular, subsequent detections are compared, and discrimination is based on whether each detection pattern is becoming more like type 1 or 3, or more like type 2 or 4.

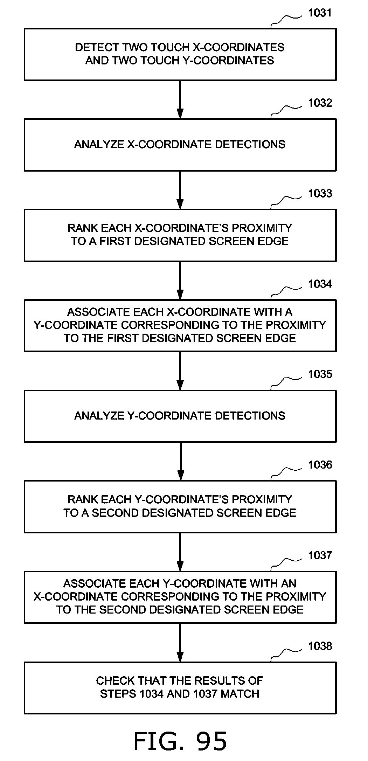

Reference is made to **FIG. 95,** which is a simplified flowchart of a method for determining the locations of simultaneous, diagonally opposed touches, in accordance with an embodiment of the present invention. At operation **1031,** two x-coordinates and two y-coordinates are detected, such as x-coordinates **D1** and **D2,** and y-coordinates **D3** and **D4,** shown in **FIGS. 85** and **86.** At operation **1032** the detected x-coordinates are analyzed to identify a pattern of detection from among those listed in **TABLE I.** At operation **1033** the detected x-coordinates are ranked according to touches that occurred closer to or farther from a designated screen edge, based on the pattern detected at operation **1032** and based on the "Touch Location" column of **TABLE I.** The y-coordinates represent distances from the designated edge. At operation **1034,** each ranked x-coordinate is paired with a corresponding y-coordinate. Operations **1035 -1037** are performed for the y-coordinates, similar to operations **1032 -1034** performed for the x-coordinates. At operation **1038,** the two sets of results are compared.

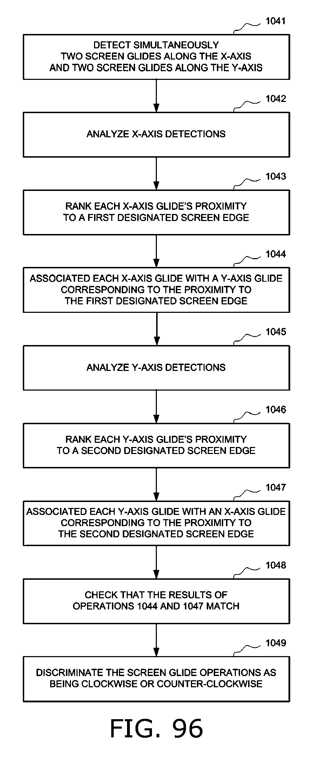

Reference is made to **FIG. 96,** which is a simplified flowchart of a method for discriminating between clockwise and counter-clockwise gestures, in accordance with an embodiment of the present invention. At operation **1041,** two glide gestures are detected along an x-axis. Each glide gesture is detected as a series of connected touch locations. Thus, with reference to **FIGS. 85** and **86,** a first glide gesture is detected as a connected series of touch locations beginning at x-coordinate **D1,** and a second concurrent glide gesture is detected as a connected series of touch locations beginning at x-coordinate **D2.** At operation **1042,** the x-glide detections are analyzed to determine the types of detections that occurred in each series, from among the patterns listed in **TABLE I.**

At operation **1043,** the x-glide detections are ranked according to touches that occurred closer to or farther from a designated screen edge, based on the patterns of detections determined at operation **1042,** and based on the "Touch Location" column of **TABLE I.** Operation **1043** relates to series of connected touch detections over a time interval. Each series generally includes touch detections of patterns 1 and 3, or of patterns 2 and 4, listed in **TABLE I,** depending on whether the glide was closer to or further away from the designated edge. In addition to analyzing the individual detections that comprise a glide, the series of touch detections is also analyzed to determine if the glide is moving closer to or farther from the designated edge, based on comparison of intensities of detections over time. E.g., in one series of detections having multiple pattern 1 detections, if the amount of blocked light increases over time, then it is inferred that the glide is moving toward the receivers, otherwise the glide is moving toward the emitters.

The y-coordinates represent distances from a designated edge, such as the edge of emitters. At operation **1044** each ranked x-axis glide is paired with a corresponding y-axis glide. Operations **1045-1047** are performed for the y-axis glide, similar to operations **1042 -1044** performed for the x-axis glide. At operation **1048** the two sets of results are compared. At step **1049** a discrimination is made as to whether the rotation gesture is clockwise or counter-clockwise.

**Calibration of Touch Screen Components**

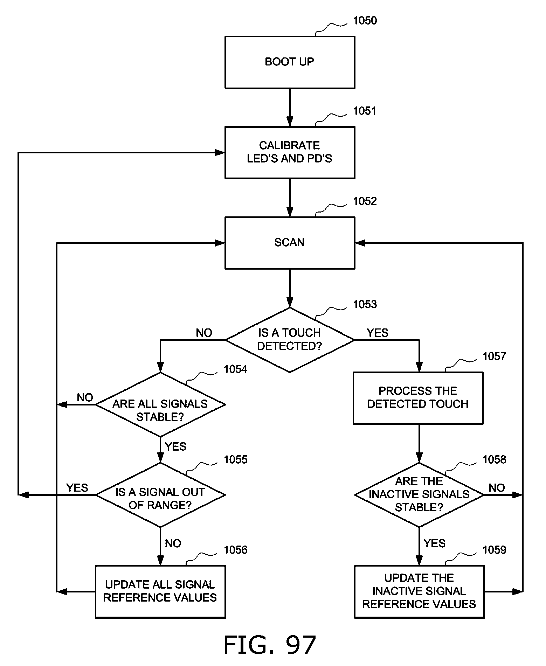

Reference is made to **FIG. 97,** which is a simplified flowchart of a method of calibration and touch detection for an optical touch screen, in accordance with an embodiment of the present invention. In general, each emitter/receiver pair signal differs significantly from signals of other pairs, due to mechanical and component tolerances. Calibration of individual emitters and receivers is performed to ensure that all signal levels are within a pre-designated range that has an acceptable signal-to-noise ratio.

In accordance with an embodiment of the present invention, calibration is performed by individually setting (i) pulse durations, and (ii) pulse strengths, namely, emitter currents. For reasons of power consumption, a large current and a short pulse duration is preferred. When a signal is below the pre-designated range, pulse duration and/or pulse strength is increased. When a signal is above the pre-designated range, pulse duration and/or pulse strength is decreased.

As shown in **FIG. 97,** calibration (operation **1051**) is performed at boot up (operation **1050),** and is performed when a signal is detected outside the pre-designated range (operation **1055**). Calibration is only performed when no touch is detected (operation **1053**), and when all signals on the same axis are stable (operation 1054); i.e., signal differences are within a noise level over a time duration.

Reference signal values for each emitter/receiver pair are used as a basis of comparison to recognize a touch, and to compute a weighted average of touch coordinates over a neighborhood. The reference signal value for an emitter/receiver pair is a normal signal level. Reference signal values are collected at boot up, and updated when a change, such as a change in ambient light or a mechanical change, is detected. In general, as shown in **FIG. 97,** reference signal values are updated (operation **1056**) when signals are stable (operation **1054**); i.e., when signals are within their expected range for some number, N, of samples over time.

A touch inside the touch area of a screen may slightly bend the screen surface, causing reflections that influence detected signal values at photo diodes outside of the touch area. Such bending is more pronounced when the touch object is fine or pointed, such as a stylus. In order to account for such bending, when a touch is detected (operation **1053**), all stable signals (operation **1058**) outside the touch area undergo a reference update (operation **1059**). When no touch is present and all signals are stable (operation **1054**), but a signal along an axis differs from the reference value by more than the expected noise level (operation **1055**), the emitters are calibrated (operation **1051**). Recalibration and updating of reference values require stable signals in order to avoid influence of temporary signal values, such as signal values due to mechanical stress by bending or twisting of the screen frame.

To further avoid error due to noise, if the result of an emitter/receiver pair differs from a previous result by more than an expected noise level, a new measurement is performed, and both results are compared to the previous result, to get a best match. If the final value is within the expected noise level, a counter is incremented. Otherwise, the counter is cleared. The counter is subsequently used to determine if a signal is stable or unstable, when updating reference values and when recalibrating.

After each complete scan, signals are normalized with their respective reference values. If the normalized signals are not below a touch threshold, then a check is made if a recalibration or an update of reference values is necessary. If a normalized signal is below the touch threshold, then a touch is detected (operation **1053**).

To reduce risk of a false touch detection, due to a sudden disturbance, the threshold for detecting an initial point of contact with the screen, such as when a finger first touches the screen, is stricter than the threshold for detecting movement of a point of contact, such as gliding of a finger along the screen while touching the screen. I.e., a higher signal difference is required to detect an initial touch, vis-à-vis the difference required to detect movement of an object along the screen surface. Furthermore, an initial contact is processed as pending until a rescan verifies that the touch is valid and that the location of the touch remains at approximately the same position.

To determine the size of a touch object (operation **1057**), the range of blocked signals and their amplitudes are measured. For large objects, there is a wait for detecting an initial point of contact with the screen, until the touch has settled, since the touch of a large object is generally detected when the object is near the screen before it has actually touched the screen. Additionally, when a large object approaches the screen in a direction not perpendicular to the touch area, the subsequent location moves slightly from a first contact location.

However, objects with small contact areas, such as a pen or a stylus, are typically placed directly at the intended screen location. As such, in some embodiments of the present invention, the wait for detecting an initial contact of a fine object is shortened or skipped entirely.

It has been found advantageous to limit the size of objects that generate a touch, in order to prevent detection of a constant touch when a device with a touch screen is stored in a pouch or in a pocket.

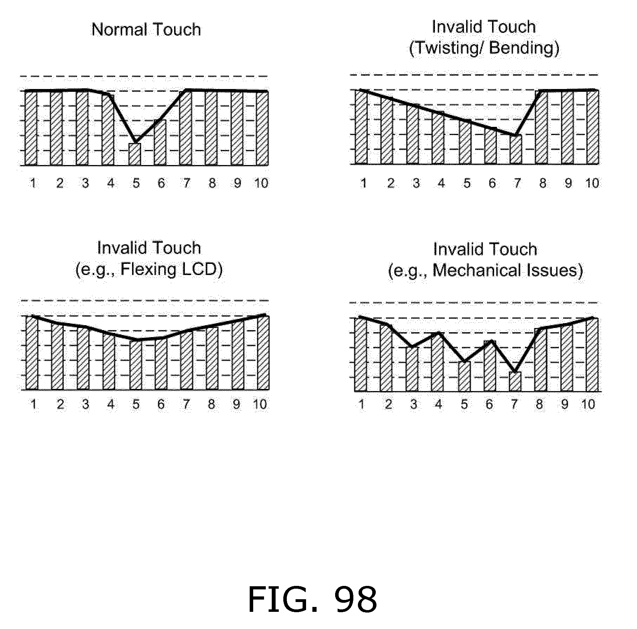

At operation **1053,** it is also necessary to distinguish between signals representing a valid touch, and signals arising from mechanical effects. In this regard, reference is made to **FIG. 98,** which is a picture showing the difference between signals generated by a touch, and signals generated by a mechanical effect, in accordance with an embodiment of the present invention. As seen in **FIG. 98,** signal gradients discriminate between a valid touch and a mechanical effect.

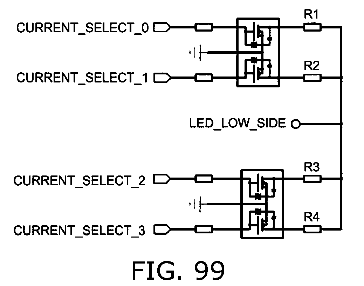

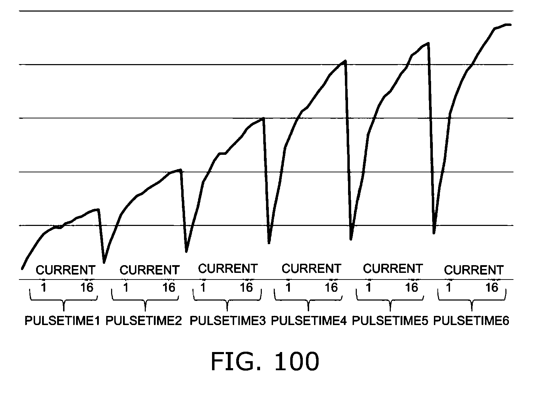

Reference is made to **FIG. 99,** which is a simplified diagram of a control circuit for setting pulse strength when calibrating an optical touch screen, in accordance with an embodiment of the present invention. Reference is also made to **FIG. 100,** which is a plot of calibration pulses for pulse strengths ranging from a minimum current to a maximum current, for calibrating an optical touch screen in accordance with an embodiment of the present invention. **FIG. 100** shows plots for six different pulse durations (PULSETIME1 - PULSETIME 6), and sixteen pulse strength levels (1 - 16) for each plot.

The control circuit of **FIG. 99** includes 4 transistors with respective variable resistors **R1, R2, R3** and **R4.** The values of the resistors control the signal levels and the ratio between their values controls gradients of the pulse curves shown in **FIG. 99.**

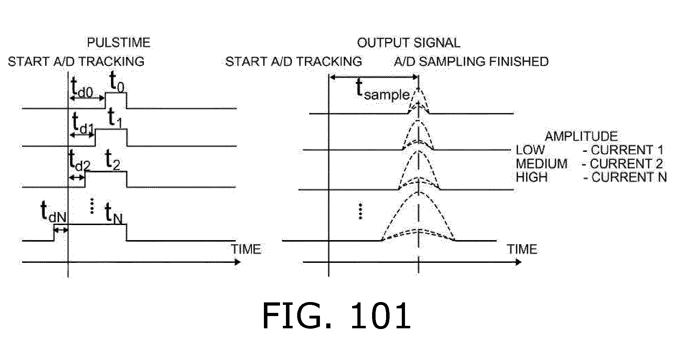

Reference is made to **FIG. 101,** which is a simplified pulse diagram and a corresponding output signal graph, for calibrating an optical touch screen, in accordance with an embodiment of the present invention. The simplified pulse diagram is at the left in FIG. 101, and shows different pulse duration, $t_0$, ..., tN, that are managed by a control circuit when calibrating the touch screen. As shown in **FIG. 101,** multiple gradations are used to control duration of a pulse, and multiple gradations are used to control the pulse current. The corresponding output signal graph is at the right in **FIG. 101.**

As shown in **FIG. 101,** different pulse durations result in different rise times and different amplitudes. Signal peaks occur close to the time when the analog-to-digital (A/D) sampler closes its sample and hold circuit. In order to obtain a maximum output signal, the emitter pulse duration is controlled so as to end at or near the end of the A/D sampling window. Since the A/D sampling time is fixed, the timing, $t_d$, between the start of A/D sampling and the pulse activation time is an important factor.

## Assembly of Touch Screen Components

As described hereinabove, a minimum of tolerances are required when aligning optical guides that alter the shape of a wide light beam with respective light emitters and light receivers, in order to achieve accurate precision on an optical touch screen. A small misalignment can severely degrade accuracy of touch detection by altering the light beam. It is difficult to accurately place a surface mounted receiver and transmitter such that they are properly aligned with respective light guides.

Because of this difficulty, in an embodiment of the present invention, a light guide and transmitter or receiver are combined into a single module or optical element, as described above with reference to **FIGS. 49 - 52.**

In some instances it may be of advantage not to combine an emitter or a receiver into an optical element, e.g., in order to use standard emitter and receiver components. In such instances precision placement of components is critical.

In some embodiments of the present invention, the optical lens that includes the feather pattern is part of a frame that fits over the screen. **FIG. 37** shows a cross-section of such a frame **455,** which is separate from LED **200.**

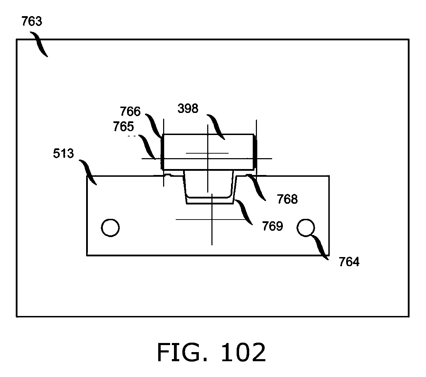

Reference is made to **FIG. 102,** which is an illustration showing how a capillary effect is used to increase accuracy of positioning a component, such as an emitter or a receiver, on a substrate, inter alia a printed circuit board or an optical component, in accordance with an example not according to the claims. Shown in **FIG. 102** is an emitter or a receiver **398** that is to be aligned with an optical component or temporary guide **513.** Optical component or temporary guide **513** is fixed to a printed circuit board **763** by guide pins **764.** Solder pads **765** are placed at an offset from component solder pads **766.** Printed circuit board **763** is then inserted into a heat oven for soldering.

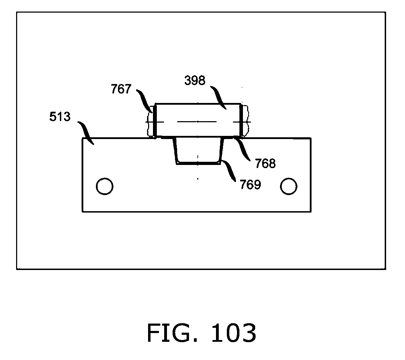

Reference is made to **FIG. 103,** which is an illustration showing the printed circuit board **763** of **FIG. 102,** after having passed through a heat oven, in accordance with an example not according to the claims. As shown in **FIG. 103,** component **398** has been sucked into place by the capillary effect of the solder, guided by a notch **768** and a cavity **769** in optical component or temporary guide **513.** When a temporary guide is used, it may be reused for subsequent soldering.

The process described with reference to **FIGS. 102** and **103** is suitable for use in mass production of electronic devices.

The present invention has broad application to electronic devices with touch sensitive screens, including small-size, mid-size and large-size screens. Such devices include inter alia computers, home entertainment systems, car entertainment systems, security systems, PDAs, cell phones, electronic games and toys, digital photo frames, digital musical instruments, e-book readers, TVs and GPS navigators.

In the foregoing specification, the invention has been described with reference to specific exemplary embodiments thereof. It will, however, be evident that various modifications and changes may be made to the specific exemplary embodiments without departing from the broader scope of the invention as set forth in the appended claims. Accordingly, the specification and drawings are to be regarded in an illustrative rather than a restrictive sense.

**Claims**

1. A touch screen comprising:

   a housing (826);
   a display (636) having four edges and mounted in said housing;
   a plurality of collimating lenses (439 - 443, 506 - 510) mounted in said housing along the four edges of said display and arranged so as to be shift-aligned relative to one another on opposing edges;
   a plurality of light pulse emitters (201, 202) mounted in said housing along two adjacent edges of said display, that are spaced apart from and transmit light pulses through collimating lenses (439, 440) that are mounted along the two adjacent edges, and over said display (636);
   a plurality of light pulse receivers (301 - 303) mounted in said housing (826) along the opposite adjacent edges, that are spaced apart from and receive the light pulses through [[said]] collimating lenses (441 - 443) that are mounted along the opposite adjacent edges, wherein wide light pulses transmitted by neighboring emitters (201, 202) through neighboring lenses (439, 440) are received by a common receiver (302); and
   a calculating unit (770), mounted in said housing and connected to said receivers (301 - 303), that calculates a location (980) of a pointer on said display that partially blocks the light pulses transmitted by said emitters (201, 202), based on outputs of the common receiver (302), by assigning coordinates (Xa, Xb, Xn) to receivers for which a value for emitter-receiver pairs deviating significantly from a baseline light value is detected, and by calculating a weighted average of the assigned coordinates, wherein each coordinate's weight in the average corresponds to a normalized signal difference between the baseline light value and an actual detected value.

2. The touch screen of claim **1,** wherein said emitters (201, 202) are shift-aligned relative to said receivers (301 - 303).

3. The touch screen of claim **1** further comprising a light guide (464) for guiding light pulses (100), the light guide comprising micro-lenses (466) for multi-directional collimation of light pulses, and wherein said collimating lenses comprise a portion of said light guide (464).

4. The touch screen of claim **1** further comprising:

   a first light guide (468) for guiding light pulses, comprising:

   a first substantially parabolic reflective surface (470) for reflecting light pulses transmitted by said emitters; and
   a first substantially elliptical refractive surface (471), positioned substantially above said first substantially parabolic reflective surface (470), for refracting the reflected light pulses over said display to a second light guide; and

   a second light guide for guiding light pulses, comprising:

   a second substantially elliptical refractive surface for further refracting the refracted light pulses; and
   a second substantially parabolic reflective surface, positioned substantially below said second substantially elliptical refractive surface, for reflecting the further refracted light pulses onto said receivers (301 - 303),

   wherein said emitters (201, 202) and said receivers (301 - 303) are positioned beneath said display (636), and wherein said collimating lenses (439 - 443) comprise a portion of said first and said second light guides.

5. The touch screen of claim **4,** wherein said first substantially parabolic reflective surface (470) and said first substantially elliptical refractive surface (471) have the same focal location (475), and wherein said second substantially parabolic reflective surface and said second substantially elliptical refractive surface have the same focal location.

6. The touch screen of claim **1,** wherein said collimating lenses are rigidly mounted in said housing, wherein said display is flexibly mounted (841, 842) in said housing, and wherein said calculating unit (770) further determines that the pointer (900) is performing a hard touch, based on increases in the outputs of said receivers (301 - 303).

7. The touch screen of claim **1,** further comprising a plurality of interfitting infra-red transmissible plastic receiver units (488, 489) mounted in said housing, each said unit comprising:

at least one of said collimating lenses; and
at least one of said receivers, which receive light pulses through said at least one of said collimating lenses.

8. The touch screen of claim **7,** wherein each of said units (488, 489) further comprises micro-lenses for multi-directional collimation of the light pulses.

9. A method of determining a touch coordinate on a touch screen, said touch screen comprising:

(i) a display having four edges, (ii) a plurality of collimating lenses (506 - 510) along the four edges of the display, the collimating lenses being arranged so as to be shift-aligned relative to one another on opposing edges, (iii) a plurality of light pulse emitters along two adjacent edges of the display, that transmit light pulses (178, 179) through collimating lenses (506) along the two adjacent edges, and over the display, and (iv) a plurality of light pulse receivers along the opposite adjacent edges, that receive the light pulses (178, 179) through collimating lenses (508, 509) along the opposite adjacent edges, and that output values representing the received light pulses, wherein light pulses emitted by each emitter are detected by at least two of the receivers, wherein each receiver detects light pulses emitted by at least two emitters, and wherein each receiver has expected values for emitter-receiver pairs when light pulses (178, 179) are not blocked;

said method comprising the steps of:

selecting receiver output values for emitter-receiver pairs that deviate significantly from corresponding receiver expected values, wherein the selected values indicate at least (i) that light pulses transmitted by two emitters are blocked from reaching one receiver, or (ii) that light pulses transmitted by one emitter are blocked from reaching two receivers;
associating a screen coordinate $(X_a, X_b)$ with each selected receiver output; and
calculating a touch coordinate by computing a weighted average of the associated screen coordinates $(X_a, X_b)$ according to the respective deviations between the selected receivers' output values and corresponding expected values, wherein each coordinate's weight in the average corresponds to a normalized signal difference between the expected light value and the actual detected light value.

10. The method of claim **9** wherein said selecting receiver output values comprises selecting three receiver output values for emitter-receiver pairs, which indicate that light pulses transmitted by two emitters are blocked from reaching two receivers.

11. The method of claim **10** wherein said selecting receiver output values comprises:

identifying and selecting a receiver output value for an emitter-receiver pair, which deviates from its corresponding expected value by more than receiver output values for other emitter-receiver pairs deviate from their corresponding expected values; and
further selecting a receiver output value for an emitter-receiver pair to the left of the emitter-receiver pair corresponding to the identified receiver output value, and a receiver output value for an emitter-receiver pair to the right of the emitter-receiver pair corresponding to the identified receiver output value.

12. The method of claim **9** wherein said calculating further comprises:

providing a reference touch coordinate; and
computing a temporally filtered (1025, 1027) touch coordinate, based on the computed weighted average and the reference touch coordinate.

13. The method of claim **12** further comprising updating the reference touch coordinate with either (i) the temporally filtered touch coordinate, or (ii) a combination of the temporally filtered touch coordinate and the reference touch coordinate.

**Patentansprüche**

1. Berührungsbildschirm, umfassend:

ein Gehäuse (826);
eine Anzeige (636), die vier Kanten aufweist und im Gehäuse montiert ist;
eine Mehrzahl von Kollimationslinsen (439 - 443, 506 - 510), die im Gehäuse entlang der vier Kanten der Anzeige montiert und so ausgelegt sind, dass sie in Bezug aufeinander auf gegenüberliegenden Kanten durch Verschiebung ausgerichtet werden;
eine Mehrzahl von Lichtimpulssendern (201, 202), die im Gehäuse entlang zweier benachbarter Kanten der Anzeige montiert und davon beabstandet sind und die Lichtimpulse durch die Kollimationslinsen (439, 440), die entlang der zwei benachbarte Kanten montiert sind, und über die Anzeige (636) senden;
eine Mehrzahl von Lichtimpulsempfängern (301 - 303), die im Gehäuse (826) entlang der gegenüberliegenden benachbarten Kanten montiert und davon beabstandet sind und die Lichtimpulse durch die Kollimationslinsen (441 - 443) empfangen, die entlang der gegenüberliegenden benachbarten Kanten montiert sind, wobei breite Lichtimpulse, die von benachbarten Sendern (201, 202) durch benachbarte Linsen (439, 440) gesendet werden, von einem gemeinsamen Empfänger (302) empfangen werden; und
eine Berechnungseinheit (770), die im Gehäuse montiert und mit den Empfängern (301 - 303) verbunden ist und die eine Lage (980) eines Zeigers auf der Anzeige, der die von den Sendern (201, 202) gesendeten Lichtimpulse teilweise blockiert, basierend auf Ausgaben des gemeinsamen Empfängers (302) durch Zuordnen von Koordinaten (Xa, Xb, Xn) zu Empfängern, für welche ein Wert für Sender-Empfänger-Paare erfasst wird, der von einem Basislinien-Lichtwert signifikant abweicht, und durch Berechnen eines gewichteten Mittels der zugeordneten Koordinaten berechnet, wobei das Gewicht jeder Koordinate im Mittel einer normalisierten Signaldifferenz zwischen dem Basislinien-Lichtwert und einem tatsächlich erfassten Wert entspricht.

2. Berührungsbildschirm nach Anspruch 1, wobei die Sender (201, 202) in Bezug auf die Empfänger (301 - 303) durch Verschiebung ausgerichtet werden.

3. Berührungsbildschirm nach Anspruch 1, ferner umfassend einen Lichtleiter (464) zum Leiten von Lichtimpulsen (100), wobei der Lichtleiter Mikrolinsen (466) für multidirektionale Kollimation von Lichtimpulsen umfasst, und wobei die Kollimationslinsen einen Teil des Lichtleiters (464) umfassen.

4. Berührungsbildschirm nach Anspruch 1, ferner umfassend:

einen ersten Lichtleiter (468) zum Leiten von Lichtimpulsen, umfassend:

eine erste im Wesentlichen parabolische Reflexionsfläche (470) zum Reflektieren von Lichtimpulsen, die von den Sendern gesendet werden; und
eine erste im Wesentlichen elliptische Brechungsfläche (471), die im Wesentlichen oberhalb der ersten im Wesentlichen parabolischen Reflexionsfläche (470) positioniert ist, zum Brechen der reflektierten Lichtimpulse über die Anzeige zu einem zweiten Lichtleiter; und
einen zweiten Lichtleiter zum Leiten von Lichtimpulsen, umfassend:

eine zweite im Wesentlichen elliptische Brechungsfläche zum Weiterbrechen der reflektierten Lichtimpulse; und
eine zweite im Wesentlichen parabolische Reflexionsfläche, die im Wesentlichen unter der zweiten im Wesentlichen elliptischen Brechungsfläche positioniert ist, zum Reflektieren der weitergebrochenen Lichtimpulse auf die Empfänger (301 - 303),

wobei die Sender (201, 202) und die Empfänger (301 - 303) unterhalb der Anzeige (636) positioniert sind, und wobei die Kollimationslinsen (439 - 443) einen Teil der ersten und zweiten Lichtleiter umfassen.

5. Berührungsbildschirm nach Anspruch 4, wobei die erste im Wesentlichen parabolische Reflexionsfläche (470) und die erste im Wesentlichen elliptische Brechungsfläche (471) die gleiche Brennpunktlage (475) aufweisen, und wobei die zweite im Wesentlichen parabolische Reflexionsfläche und die zweite im Wesentlichen elliptische Brechungsfläche die gleiche Brennpunktlage aufweisen.

6. Berührungsbildschirm nach Anspruch 1, wobei die Kollimationslinsen im Gehäuse starr montiert sind, wobei die Anzeige im Gehäuse flexibel montiert ist (841, 842), und wobei die Berechnungseinheit (770) ferner basierend auf Zunahmen der Ausgaben der Empfänger (301 - 303) bestimmt, dass der Zeiger (900) eine harte Berührung durchführt.

7. Berührungsbildschirm nach Anspruch 1, ferner umfassend eine Mehrzahl von dazwischen passenden infrarotdurchlässigen Kunststoff-Empfängereinheiten (488, 489), die im Gehäuse montiert sind, wobei jede Einheit umfasst:

mindestens eine der Kollimationslinsen; und
mindestens einen der Empfänger, welche Lichtimpulse durch die mindestens eine der Kollimationslinsen empfangen.

8. Berührungsbildschirm nach Anspruch 7, wobei jede der Einheiten (488, 489) ferner Mikrolinsen für multidirektionale Kollimation der Lichtimpulse umfasst.

9. Verfahren zur Bestimmung einer Berührungskoordinate auf einem Berührungsbildschirm, wobei der Bildschirm umfasst:

(i) eine Anzeige mit vier Kanten, (ii) eine Mehrzahl von Kollimationslinsen (506 - 510) entlang der vier Kanten der Anzeige, wobei die Kollimationslinsen so ausgelegt sind, dass sie in Bezug aufeinander auf gegenüberliegenden Kanten durch Verschiebung ausgerichtet werden, (iii) eine Mehrzahl von Lichtimpulssendern entlang zweier benachbarter Kanten der Anzeige, die Lichtimpulse (178, 179) durch die Kollimationslinsen (506) entlang der zwei benachbarten Kanten und über die Anzeige senden, und (iv) eine Mehrzahl von Lichtimpulsempfängern entlang der gegenüberliegenden benachbarten Kanten, welche die Lichtimpulse (178, 179) durch die Kollimationslinsen (508, 509) entlang der gegenüberliegenden benachbarten Kanten empfangen und welche Werte ausgeben, welche die empfangenen Lichtimpulse darstellen, wobei Lichtimpulse, die von jedem Sender emittiert werden, von mindestens zweien der Empfänger erfasst werden, wobei jeder Empfänger Lichtimpulse erfasst, die von mindestens zwei Sendern emittiert werden, und wobei jeder Empfänger erwartete Werte für Sender-Empfänger-Paare aufweist, wenn Lichtimpulse (178, 179) nicht blockiert werden;
wobei das Verfahren die folgenden Schritte umfasst:

Auswählen von Empfängerausgabewerten für Sender-Empfänger Paare, die von entsprechenden erwarteten Empfängerwerten signifikant abweichen, wobei die ausgewählten Werte wenigstens anzeigen, (i) dass Lichtimpulse, die von zwei Sendern gesendet werden, daran gehindert werden, einen Empfänger zu erreichen, oder (i), dass Lichtimpulse, die von einem Sender gesendet werden, daran gehindert werden, zwei Empfänger zu erreichen;
Assoziieren einer Bildschirmkoordinate (Xa, Xb) mit jeder ausgewählten Empfängerausgabe; und
Berechnen einer Berührungskoordinate durch Berechnen eines gewichteten Mittels der assoziierten Bildschirmkoordinaten (Xa, Xb) gemäß jeweiligen Abweichungen zwischen den ausgewählten Empfängerausgabewerten und entsprechenden erwarteten Werten, wobei das Gewicht jeder Koordinate im Mittel einer normalisierten Signaldifferenz zwischen dem erwarteten Lichtwert und dem tatsächlich erfassten Lichtwert entspricht.

10. Verfahren nach Anspruch 9, wobei das Auswählen von Empfängerausgabewerten ein Auswählen von drei Empfängerausgabewerten für Sender-Empfänger-Paare umfasst, welche anzeigen, dass Lichtimpulse, die von zwei Sendern gesendet werden, daran gehindert werden, zwei Empfänger zu erreichen.

11. Verfahren nach Anspruch 10, wobei das Auswählen von Empfängerausgabewerten ferner umfasst:

Identifizieren und Auswählen eines Empfängerausgabewerts für ein Sender-Empfänger-Paar, der von seinem entsprechenden erwarteten Wert um mehr abweicht, als Empfängerausgabewerte für andere Sender-Empfänger-Paare von ihren entsprechenden erwarteten Werten abweichen; und
ferner Auswählen eines Empfängerausgabewerts für ein Sender-Empfängerpaar links vom Sender-Empfänger-Paar, das dem identifizierten Empfängerausgabewert entspricht, und eines Empfängerausgabewerts für ein Sender-Empfänger-Paar rechts vom Sender-Empfänger-Paar, das dem identifizierten Empfängerausgabewert entspricht.

12. Verfahren nach Anspruch 9, wobei das Berechnen ferner umfasst:

Bereitstellen einer Referenzberührungskoordinate; und

Berechnen einer zeitlich gefilterten (1025, 1027) Berührungskoordinate basierend auf dem berechneten gewichteten Mittel und der Referenzberührungskoordinate.

13. Verfahren nach Anspruch 12, ferner umfassend ein Aktualisieren der Referenzberührungskoordinate entweder mit (i) der zeitlich gefilterten Berührungskoordinate oder (ii) einer Kombinationen der zeitlich gefilterten Berührungskoordinate und der Referenzberührungskoordinate.

## Revendications

1. Ecran tactile comprenant :

   un boîtier (826) ;
   un affichage (636) comportant quatre bords et monté dans ledit boîtier ;
   une pluralité de lentilles de collimation (439 à 443, 506 à 510) montées dans ledit boîtier le long des quatre bords dudit affichage et agencées de manière à être alignées avec un décalage les unes par rapport aux autres sur des bords opposés ;
   une pluralité d'émetteurs d'impulsions de lumière (201, 202) montés dans ledit boîtier le long de deux bords adjacents dudit affichage, qui sont espacés des et émettent des impulsions de lumière à travers les lentilles de collimation (439, 440) qui sont montées le long des deux bords adjacents, et sur ledit affichage (636) ;
   une pluralité de récepteurs d'impulsions de lumière (301 à 303) montés dans ledit boîtier (826) le long des bords adjacents opposés, qui sont espacés des et reçoivent les impulsions de lumière à travers lesdites lentilles de collimation (441 à 443) qui sont montées le long des bords adjacents opposés, dans lequel les larges impulsions de lumière émises par des émetteurs voisins (201, 202) à travers des lentilles voisines (439, 440) sont reçues par un récepteur commun (302) ; et
   une unité de calcul (770), montée dans ledit boîtier et connectée aux dits récepteurs (301 à 303), qui calcule un emplacement (980) d'un pointeur sur ledit affichage qui bloque partiellement les impulsions de lumière émises par lesdits émetteurs (201, 202), sur la base des sorties du récepteur commun (302), en attribuant des coordonnées ($X_a$, $X_b$, $X_n$) aux récepteurs pour lesquels une valeur pour des paires d'émetteur-récepteur s'écartant fortement d'une valeur de lumière de fond est détectée, et en calculant une moyenne pondérée des coordonnées attribuées, dans lequel chaque poids des coordonnées dans la moyenne correspond à une différence de signal normalisée entre la valeur de lumière de fond et une valeur réelle détectée.

2. Ecran tactile selon la revendication 1, dans lequel lesdits émetteurs (201, 202) sont alignés avec un décalage par rapport aux dits récepteurs (301 à 303).

3. Ecran tactile selon la revendication 1, comprenant en outre un guide de lumière (464) pour guider les impulsions de lumière (100), le guide de lumière comprenant des microlentilles (466) pour la collimation multidirectionnelle des impulsions de lumière, et dans lequel lesdites lentilles de collimation comprennent une partie dudit guide de lumière (464).

4. Ecran tactile selon la revendication 1 comprenant en outre :

   un premier guide de lumière (468) pour guider les impulsions de lumière, comprenant
   une première surface de réflexion sensiblement parabolique (470) pour réfléchir les impulsions de lumière émises par lesdits émetteurs ; et
   une première surface de réfraction sensiblement elliptique (471), positionnée sensiblement au-dessus de ladite première surface de réflexion sensiblement parabolique (470), pour réfracter les impulsions de lumière réfléchies sur ledit affichage vers un deuxième guide de lumière ; et
   un deuxième guide de lumière pour guider les impulsions de lumière, comprenant :

      une deuxième surface de réfraction sensiblement elliptique pour réfracter davantage les impulsions de lumière réfractées ; et
      une deuxième surface de réflexion sensiblement parabolique, positionnée sensiblement au-dessous de ladite deuxième surface de réfraction sensiblement elliptique, pour réfléchir les impulsions de lumière davantage réfractées sur lesdits récepteurs (301 à 303),
      dans lequel lesdits émetteurs (201, 202) et lesdits récepteurs (301 à 303) sont positionnés au-dessous dudit affichage (636), et dans lequel lesdites lentilles de collimation (439 à 443) comprennent une partie desdits premier et deuxième guides de lumière.

5. Ecran tactile selon la revendication 4, dans lequel ladite première surface de réflexion sensiblement parabolique (470) et ladite première surface de réfraction sensiblement elliptique (471) ont le même emplacement focal (475), et dans lequel ladite deuxième surface de réflexion sensiblement parabolique et ladite deuxième surface de réfraction sensiblement elliptique ont le même emplacement focal.

6. Ecran tactile selon la revendication 1, dans lequel lesdites lentilles de collimation sont montées rigidement dans ledit boîtier, dans lequel ledit affichage est monté de manière flexible (841, 842) dans ledit boîtier, et dans lequel ladite unité de calcul (770) détermine en outre que le pointeur (900) effectue un contact fort, sur la base des augmentations des sorties desdits récepteurs (301 à 303).

7. Ecran tactile selon la revendication 1, comprenant en outre une pluralité d'unités de récepteur en matière plastique transmettant les infrarouges assemblés (488, 489) montées dans ledit boîtier, chaque dite unité comprenant :

au moins l'une desdites lentilles de collimation ; et
au moins l'un desdits récepteurs, qui reçoivent les impulsions de lumière à travers ladite au moins une desdites lentilles de collimation.

8. Ecran tactile selon la revendication 7, dans lequel chacune desdites unités (488, 489) comprend en outre des microlentilles pour la collimation multidirectionnelle des impulsions de lumière.

9. Procédé de détermination d'une coordonnée de contact sur un écran tactile, ledit écran tactile comprenant :

(i) un affichage comportant quatre bords, (ii) une pluralité de lentilles de collimation (506 à 510) le long des quatre bords de l'affichage, les lentilles de collimation étant agencées de manière à être alignées avec un décalage les unes par rapport aux autres sur des bords opposés, (iii) une pluralité d'émetteurs d'impulsions de lumière le long de deux bords adjacents de l'affichage, qui émettent les impulsions de lumière (178, 179) à travers les lentilles de collimation (506) le long des deux bords adjacents, et sur l'affichage, et (iv) une pluralité de récepteurs d'impulsions de lumière le long des bords adjacents opposés, qui reçoivent les impulsions de lumière (178, 179) à travers les lentilles de collimation (508, 509) le long des bords adjacents opposés, et qui délivrent des valeurs représentant les impulsions de lumière reçues, dans lequel les impulsions de lumière émises par chaque émetteur sont détectées par au moins deux des récepteurs, dans lequel chaque récepteur détecte les impulsions de lumière émises par au moins deux émetteurs, et dans lequel chaque récepteur a des valeurs attendues pour les paires d'émetteur-récepteur lorsque les impulsions de lumière (178, 179) ne sont pas bloquées ;
ledit procédé comprenant les étapes :

la sélection de valeurs de sortie de récepteur pour les paires d'émetteur-récepteur qui s'écartent fortement des valeurs attendues de récepteur correspondantes, dans lequel les valeurs sélectionnées indiquent au moins (i) que les impulsions de lumière émises par deux émetteurs sont bloquées et n'atteignent pas un récepteur, ou (ii) que les impulsions de lumière émises par un émetteur sont bloquées et n'atteignent pas deux récepteurs ;
l'association d'une coordonnée d'écran ($X_a$, $X_b$) à chaque sortie de récepteur sélectionnée ; et
le calcul d'une coordonnée de contact en calculant une moyenne pondérée des coordonnées d'écran associées ($X_a$, $X_b$) conformément aux écarts respectifs entre les valeurs de sortie des récepteurs sélectionnés et les valeurs attendues correspondantes, dans lequel chaque poids des coordonnées dans la moyenne correspond à une différence de signal normalisée entre la valeur de lumière attendue et la valeur de lumière réelle détectée.

10. Procédé selon la revendication 9, dans lequel ladite sélection des valeurs de sortie de récepteur comprend la sélection de trois valeurs de sortie de récepteur pour des paires d'émetteur-récepteur, qui indiquent que les impulsions de lumière émises par deux émetteurs sont bloquées et n'atteignent pas deux récepteurs.

11. Procédé selon la revendication 10, dans lequel ladite sélection des valeurs de sortie de récepteur comprend :

l'identification et la sélection d'une valeur de sortie de récepteur pour une paire d'émetteur-récepteur, qui s'écarte de sa valeur attendue correspondante d'une valeur supérieure à celle dont les valeurs de sortie de récepteur pour les autres paires d'émetteur-récepteur s'écartent de leurs valeurs attendues correspondantes ; et la sélection en outre d'une valeur de sortie de récepteur pour une paire d'émetteur-récepteur à la gauche de la paire d'émetteur-récepteur correspondant à la valeur de sortie de récepteur identifiée, et d'une valeur de sortie de récepteur pour une paire d'émetteur-récepteur à la droite de la paire d'émetteur-récepteur correspondant à la valeur de sortie de récepteur identifiée.

12. Procédé selon la revendication 9, dans lequel ledit calcul comprend en outre :

la fourniture d'une coordonnée de contact de référence ; et
le calcul d'une coordonnée de contact filtrée temporellement (1025, 1027), sur la base de la moyenne pondérée calculée et de la coordonnée de contact de référence.

13. Procédé selon la revendication 12 comprenant en outre la mise à jour de la coordonnée de contact de référence avec soit (i) la coordonnée de contact filtrée temporellement, soit (ii) une combinaison de la coordonnée de contact filtrée temporellement et de la coordonnée de contact de référence.

801

606

701

# FIG. 1
# (PRIOR ART)

# FIG. 2
# (PRIOR ART)

FIG. 3
(PRIOR ART)

900

703

702

815

817

819

820

818

816

# FIG. 4
# (PRIOR ART)

401   201-203

301-305

C   ←   →

1   2
ABC   3
CDE

4   5   6

7   8   9

0   ↵

402

FIG. 5

FIG. 6

FIG. 7

FIG. 8

FIG. 9

FIG. 10

FIG. 11

FIG. 12

905

200

407

FIG. 13

FIG. 14

FIG. 15

FIG. 16

TOP VIEW

SIDE VIEW

FIG. 17

(A)

524

190 190 190 190 190 200

(B)

525

190 190 190 190 190 200

(C)

525

190 190 190 190 190 200

FIG. 18

FIG. 19

FIG. 20

FIG. 21

FIG. 22

FIG. 23

FIG. 24

826

301 302 303

636

441 442 443

439 440

201 202

FIG. 25

FIG. 26

FIG. 27

FIG. 28

FIG. 29

FIG. 30

FIG. 31

FIG. 32

FIG. 33

FIG. 34

FIG. 35

FIG. 36

FIG. 37

FIG. 38

FIG. 39

FIG. 40

FIG. 41

FIG. 42

FIG. 43

FIG. 44

FIG. 45

FIG. 46

FIG. 47

832　　　　　　　　　　　　　　485

487

637

486

200

## FIG. 48

FIG. 49

FIG. 50

FIG. 51

FIG. 52

FIG. 53

FIG. 54

FIG. 55

FIG. 56

FIG. 57

FIG. 58

FIG. 59

FIG. 60

FIG. 61

FIG. 62

FIG. 63

643

844

771

848

FIG. 64

FIG. 65

992

844

FIG. 66

FIG. 67

SCREEN
Y-AXIS

992

SCREEN
X-AXIS

844

FIG. 68

FIG. 69

FIG. 70

846 847

992

844 845

FIG. 71

FIG. 72

FIG. 73

FIG. 74

IMAGE Y-AXIS

903

992

998

645

TOUCH X-COORDINATE

TOUCH Y-COORDINATE

FIG. 75

FIG. 76

~ 1011

CAPTURE AN IMAGE INCLUDING A SCREEN SURFACE, A POINTER, AND A REFLECTION OF THE POINTER ON THE SCREEN SURFACE

~ 1012

DETERMINE AN X-COORDINATE BASED ON THE LOCATION OF THE POINTER IN THE CAPTURED IMAGE

~ 1013

DETERMINE A Y-COORDINATE BASED ON THE MID-POINT IN THE CAPTURED IMAGE BETWEEN THE POINTER AND THE REFLECTION OF THE POINTER

~ 1014

DETERMINE A HEIGHT OF THE POINTER ABOVE THE SCREEN SURFACE, BASED ON THE DISTANCE BETWEEN THE POINTER AND ITS REFLECTION IN THE CAPTURED IMAGE

FIG. 77

992

965 966 967

968 969 970

844

FIG. 78

300

(A) 173

200

300

(B) 174

200

300

(C) 175

200

300

(D) 176

200

300

(E) 177

200

FIG. 79

FIG. 80

FIG. 81

512

182

511

993

FIG. 82

1021

SPATIALLY FILTER CALCULATED TOUCH
COORDINATE

1022

CURRENT – PREVIOUS < THRESHOLD ?

1023　YES

CALCULATE LAG

1024

SELECT
TEMPORAL
FILTER

1025

APPLY
TEMPORAL
FILTER

NO　1026

SELECT WEAK
TEMPORAL
FILTER

1027

APPLY
TEMPORAL
FILTER

1028

LAG = OUTPUT
COORDINATE

FIG. 83

FIG. 84

FIG. 85

FIG. 86

FIG. 87

FIG. 88

FIG. 89

FIG. 90

FIG. 91

FIG. 92

FIG. 93

FIG. 94

1031

DETECT TWO TOUCH X-COORDINATES
AND TWO TOUCH Y-COORDINATES

1032

ANALYZE X-COORDINATE DETECTIONS

1033

RANK EACH X-COORDINATE'S PROXIMITY
TO A FIRST DESIGNATED SCREEN EDGE

1034

ASSOCIATE EACH X-COORDINATE WITH A
Y-COORDINATE CORRESPONDING TO THE PROXIMITY
TO THE FIRST DESIGNATED SCREEN EDGE

1035

ANALYZE Y-COORDINATE DETECTIONS

1036

RANK EACH Y-COORDINATE'S PROXIMITY
TO A SECOND DESIGNATED SCREEN EDGE

1037

ASSOCIATE EACH Y-COORDINATE WITH AN
X-COORDINATE CORRESPONDING TO THE PROXIMITY
TO THE SECOND DESIGNATED SCREEN EDGE

1038

CHECK THAT THE RESULTS OF
STEPS 1034 AND 1037 MATCH

FIG. 95

1041

```
DETECT SIMULTANEOUSLY
TWO SCREEN GLIDES ALONG THE X-AXIS
AND TWO SCREEN GLIDES ALONG THE Y-AXIS
```

1042

```
ANALYZE X-AXIS DETECTIONS
```

1043

```
RANK EACH X-AXIS GLIDE'S PROXIMITY
TO A FIRST DESIGNATED SCREEN EDGE
```

1044

```
ASSOCIATED EACH X-AXIS GLIDE WITH A Y-AXIS GLIDE
CORRESPONDING TO THE PROXIMITY TO
THE FIRST DESIGNATED SCREEN EDGE
```

1045

```
ANALYZE Y-AXIS DETECTIONS
```

1046

```
RANK EACH Y-AXIS GLIDE'S PROXIMITY
TO A SECOND DESIGNATED SCREEN EDGE
```

1047

```
ASSOCIATED EACH Y-AXIS GLIDE WITH AN X-AXIS GLIDE
CORRESPONDING TO THE PROXIMITY TO
THE SECOND DESIGNATED SCREEN EDGE
```

1048

```
CHECK THAT THE RESULTS OF
OPERATIONS 1044 AND 1047 MATCH
```

1049

```
DISCRIMINATE THE SCREEN GLIDE OPERATIONS AS
BEING CLOCKWISE OR COUNTER-CLOCKWISE
```

FIG. 96

FIG. 97

EP 2 550 584 B1

Normal Touch

Invalid Touch
(Twisting/ Bending)

Invalid Touch
(e.g., Flexing LCD)

Invalid Touch
(e.g., Mechanical Issues)

FIG. 98

135

FIG. 99

FIG. 100

FIG. 101

FIG. 102

FIG. 103

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080080811 A1
- US 37160909 A
- US 61317255 A
- US 7333095 B
- US 486033 A